# EUROPEAN PATENT APPLICATION

(11) **EP 4 701 268 A1**
(43) Date of publication of application: **25.02.2026**
(21) Application number: 23947126.1
(22) Date of filing: 02.08.2023
(51) Int. Cl.: H04W 36/08

(54) **HANDOVER METHOD, AND APPARATUS, DEVICE, MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN)
(74) Representative: Taor, Simon Edward William
(86) International application number: PCT/CN2023/110849
(87) International publication number: WO 2025/025178

(57) **Abstract**

The present application belongs to the field of Wi-Fi. Disclosed are a handover method, and an apparatus, a device, a medium and a program product. The method is executed by a non-AP MLD, and comprises: sending and/or receiving at least one first frame, which is used for implementing a handover between two AP MLDs at different positions on the basis of link reconfiguration. In the method, by means of sending and/or receiving at least one first frame, which is used for implementing a handover between two AP MLDs at different positions on the basis of link reconfiguration, a link reconfiguration protocol between the two AP MLDs at different positions is optimized, and the handover of the non-AP MLD between the two AP MLDs during a communication process is implemented.

## Description

### TECHNICAL FIELD

The present disclosure relates to the field of wireless-fidelity (Wi-Fi), and in particular to a transition method and apparatus, a device, a medium and a program product.

### BACKGROUND

When a non-access point device moves between different access point devices, it may perform a handover from a current access point (AP) to a target AP.

The related art provides a fast basic service set (BSS) transition (FT), which can reduce the duration of connectivity loss between a station (STA) and a distribution system (DS) or between a non-AP multi-link device (non-AP MLD) and a DS during the BSS transition. However, data continuity between the STA and the DS or between the non-AP MLD and the DS cannot be maintained because transition of the STA (or the non-AP MLD) to the target AP or the target AP MLD requires re-association as well as re-establishment of the protocols and contexts for data transmission and reception.

### SUMMARY

The present disclosure provides a transition method and apparatus, a device, a medium and a program product.

According to an aspect of embodiments of the present disclosure, there is provided a transition method performed by a non-AP MLD, the method including: transmitting and/or receiving at least one first frame, here, the at least one first frame is used for enabling a transition between two AP MLDs at different locations based on link reconfiguration.

According to another aspect of embodiments of the present disclosure, there is provided a transition method performed by a current AP MLD, the method including: transmitting and/or receiving at least one first frame, here, the at least one first frame is used for enabling a transition of a non-AP MLD between the current AP MLD and a target AP MLD at different locations based on link reconfiguration.

According to another aspect of embodiments of the present disclosure, there is provided a transition method performed by a target AP MLD, the method including: transmitting and/or receiving at least one first frame, here, the at least one first frame is used for enabling a transition of a non-AP MLD between a current AP MLD and the target AP MLD at different locations based on link reconfiguration.

According to another aspect of embodiments of the present disclosure, there is provided a non-access point multi-link device including: a transmission module configured to transmit and/or receive at least one first frame, here, the at least one first frame is used for enabling a transition between two access point multi-link devices at different locations based on link reconfiguration.

According to another aspect of embodiments of the present disclosure, there is provided a current access point multi-link device including: a transmission module configured to transmit and/or receive at least one first frame, here, the at least one first frame is used for enabling a transition of a non-access point multi-link device between the current access point multi-link device and a target access point multi-link device at different locations based on link reconfiguration.

According to another aspect of embodiments of the present disclosure, there is provided a target access point multi-link device including: a transmission module configured to transmit and/or receive at least one first frame, here, the at least one first frame is used for enabling a transition of a non-access point multi-link device between a current access point multi-link device and the target access point multi-link device at different locations based on link reconfiguration.

According to another aspect of embodiments of the present disclosure, there is provided a non-access point multi-link device including: a processor; a transceiver coupled to the processor; and a memory for storing instructions executable by the processor. Here, the processor is configured to load and execute the executable instructions to implement the transition method in various aspects described above.

According to another aspect of embodiments of the present disclosure, there is provided a current access point multi-link device including: a processor; a transceiver coupled to the processor; and a memory for storing instructions executable by the processor. Here, the processor is configured to load and execute the executable instructions to implement the transition method in various aspects described above.

According to another aspect of embodiments of the present disclosure, there is provided a target access point multi-link device including: a processor; a transceiver coupled to the processor; and a memory for storing instructions executable by the processor. Here, the processor is configured to load and execute the executable instructions to implement the transition method in various aspects described above.

According to another aspect of embodiments of the present disclosure, there is provided a computer-readable storage medium having stored thereon at least one program that, when loaded and executed by a processor, implements the transition method in the various aspects described above.

According to another aspect of embodiments of the present disclosure, there is provided a computer program product or a computer program including computer instructions stored in a computer-readable storage medium, here, the computer instructions, when obtained from the computer-readable storage medium and executed by a processor, implement the transition method in the various aspects described above.

The technical solutions provided by the embodiments of the present disclosure may include the following beneficial effects.

By transmitting and/or receiving at least one first frame, here, the at least one first frame is used for enabling a transition between two AP MLDs at different locations based on link reconfiguration, the methods optimize a link reconfiguration protocol between the two AP MLDs at different locations and realizes the transition of the non-AP MLD between the two AP MLDs during communication.

### BRIEF DESCRIPTION OF THE DRAWINGS

In order to more clearly explain the technical solutions in the embodiments of the present disclosure, the accompanying drawings that need to be used in the description of the embodiments will be briefly introduced below, and it is apparent that the accompanying drawings in the following description are only some embodiments of the present disclosure, and for those skilled in the art, other accompanying drawings can be obtained from these accompanying drawings without making creative labor.
FIG. 1 is a diagram of a communication system provided by an exemplary embodiment of the present disclosure.
FIG. 2 is a diagram of a method of multi-link setup provided by the related art.
FIG. 3 is a diagram of a connection between a logical AP MLD and a STA provided by the related art.
FIG. 4 is a flowchart of a transition method provided by an exemplary embodiment of the present disclosure.
FIG. 5 is a flowchart of a transition method provided by an exemplary embodiment of the present disclosure.
FIG. 6 is a diagram illustrating a high-level architecture of a mobility domain MLD and its affiliated AP MLDs according to an exemplary embodiment of the present disclosure.
FIG. 7 is a diagram of a reconfiguration status list subfield format provided by an exemplary embodiment of the present disclosure.
FIG. 8 is a diagram of a group key data subfield format provided by an exemplary embodiment of the present disclosure.
FIG. 9 is a diagram of a mobility domain element format provided by an exemplary embodiment of the present disclosure.
FIG. 10 is a diagram of an FT capability and policy field format provided by an exemplary embodiment of the present disclosure.
FIG. 11 is a diagram of a block acknowledgement agreement context element format provided by an exemplary embodiment of the present disclosure.
FIG. 12 is a diagram of a block acknowledgement agreement context parameter control field format provided by an exemplary embodiment of the present disclosure.
FIG. 13 is a diagram of a block acknowledgement agreement context parameter set list field format provided by an exemplary embodiment of the present disclosure.
FIG. 14 is a diagram of a single block acknowledgement agreement context parameter set field format provided by an exemplary embodiment of the present disclosure.
FIG. 15 is a diagram of a single block acknowledgement agreement context parameter set field format provided by an exemplary embodiment of the present disclosure.
FIG. 16 is a diagram of a block acknowledgement parameter set field format provided by an exemplary embodiment of the present disclosure.
FIG. 17 is a diagram of a security association context element format provided by an exemplary embodiment of the present disclosure.
FIG. 18 is a diagram of a security association context parameter control field format provided by an exemplary embodiment of the present disclosure.
FIG. 19 is a diagram of a security association context parameter set list field format provided by an exemplary embodiment of the present disclosure.
FIG. 20 is a diagram of a security association context parameter set field format provided by an exemplary embodiment of the present disclosure.
FIG. 21 is a diagram of a security association context parameter set field format provided by an exemplary embodiment of the present disclosure.
FIG. 22 is a diagram of a timeout interval element format provided by an exemplary embodiment of the present disclosure.
FIG. 23 is a flowchart of a transition method provided by an exemplary embodiment of the present disclosure.
FIG. 24 is a flowchart of a transition method provided by an exemplary embodiment of the present disclosure.
FIG. 25 is a flowchart of a transition method provided by an exemplary embodiment of the present disclosure.
FIG. 26 is a flowchart of a transition method provided by an exemplary embodiment of the present disclosure.
FIG. 27 is a flowchart of a transition method provided by an exemplary embodiment of the present disclosure.
FIG. 28 is a block diagram of a non-access point multi-link device provided by an exemplary embodiment of the present disclosure.
FIG. 29 is a block diagram of a current access point multi-link device provided by an exemplary embodiment of the present disclosure.
FIG. 30 is a block diagram of a target access point multi-link device provided by an exemplary embodiment of the present disclosure.
FIG. 31 is a structural diagram of a non-access point multi-link device or a current access point multi-link device or a target access point multi-link device provided by an exemplary embodiment of the present disclosure.

### DETAILED DESCRIPTION

In order to clarify the objects, technical solutions, and advantages of the present disclosure, embodiments of the present disclosure will be described in further detail below with reference to the accompanying drawings. Exemplary embodiments, examples of which are illustrated in the accompanying drawings, will be described in detail herein. Where the following description refers to the drawings, the same numerals in different drawings denote the same or similar elements unless otherwise indicated. The implementations described in the following exemplary embodiments do not represent all implementations consistent with the present disclosure. Rather, they are merely examples of devices and methods that are consistent with some aspects of the present disclosure and are detailed in the appended claims.

The terminology used in the present disclosure is for the purpose of describing particular embodiments only and is not intended to limit the present disclosure. As used in the present disclosure and the appended claims, the singular forms "a", "the", and "said" are also intended to include the multiple forms unless the context clearly indicates otherwise. It should also be understood that the term "and/or" as used herein refers to and includes any or all possible combinations of one or more associated listed items.

It should be understood that although the terms (first, second, third, etc.) may be employed in the present disclosure to describe various pieces of information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "upon" or "when" or "in response to determining."

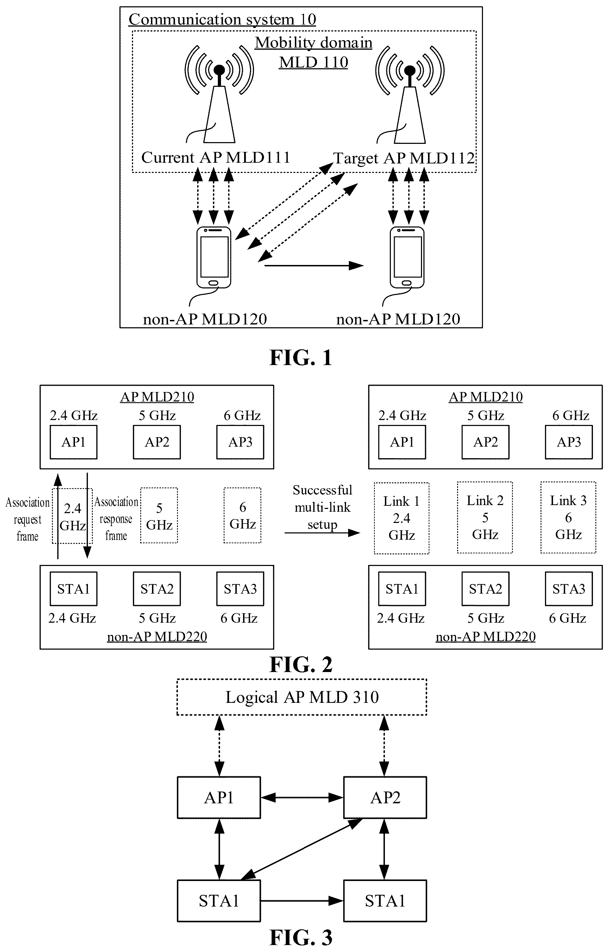

FIG. 1 illustrates a schematic diagram of a communication system 10 provided by an exemplary embodiment of the present disclosure. The communication system 10 includes a terminal and a terminal, or a terminal and a network device, or an access point (AP) and a station (STA). However, the embodiments of the present disclosure are not limited thereto. In the embodiments of the present disclosure, as an example, the communication system 10 includes a mobility domain multi-link device (MLD) 110 (AP) and a non-AP MLD 120 (STA), where the mobility domain MLD 110 includes a current AP MLD 111 and a target AP MLD 112.

In some scenarios, the AP may be referred to as an AP STA, i.e., the AP is also a STA in a sense. In some scenarios, the STA is referred to as a non-AP STA.

In some embodiments, the STA may include an AP STA and a non-AP STA.

Communication in the communication system may be communication between an AP and a non-AP STA, or communication between a non-AP STA and a non-AP STA, or communication between a STA and a peer STA, where the peer STA may refer to a device communicating with the STA on the opposite end, for example, the peer STA may be an AP or a non-AP STA.

The AP is equivalent to a bridge connecting a wired network and a wireless network, and its main function is to connect various wireless network clients together, and then connect the wireless network to Ethernet. The AP device may be a terminal device (such as a mobile phone) or a network device (such as a router) with a Wi-Fi chip.

It should be understood that the role of the STA in the communication system is not absolute, for example, in some scenarios, when the mobile phone is connected to a router, the mobile phone is a non-AP STA; and when the mobile phone is a hotspot for other mobile phones, the mobile phone acts as an AP role.

The AP and the non-AP STA may be devices applied in the internet of vehicles, an IOT node, a sensor or the like in the internet of things (IoT), a smart camera, a smart remote controller, a smart water meter, or the like in a smart home, a sensor or the like in a smart city.

In some embodiments, the non-AP STA may support, but is not limited to, the 802.11be standard. The non-AP STA may also support various current and future wireless local area network (WLAN) standards of the 802.11 family, such as 802.11ax, 802.11ac, 802.11n, 802.11g, 802.11b, and 802.11a.

In some embodiments, the AP may be a device that supports the 802.11be standard. The AP may also be a device that supports various current and future WLAN standards of 802.11 family, such as 802.11ax, 802.11ac, 802.11n, 802.11g, 802.11b, and 802.11a.

In some embodiments, the STA may be a mobile phone, a tablet, a computer, a virtual reality (VR) device, an augmented reality (AR) device, a wireless device in industrial control, a set-top box, a wireless device in self-driving, an in-vehicle communication device, a wireless device in telemedicine, a wireless device in a smart grid, a wireless device in transportation security, a wireless device in a smart city or a smart home, a wireless communication chip, and/or the like that support WLAN/Wi-Fi technology.

The WLAN technology may support frequency bands including, but not limited to, low frequency bands (2.4 GHz, 5 GHz, 6 GHz), and high frequency bands (60 GHz).

There are one or more links between the station and the access point. In some embodiments, the station and the access point support multi-band communication, e.g., simultaneously communicating on the 2.4 GHz, 5 GHz, 6 GHz and 60 GHz bands, or simultaneously communicating on different channels in the same frequency band (or different frequency bands), thereby improving communication throughput and/or reliability between devices. Such devices are commonly referred to as multi-band devices, or as multi-link devices (MLDs), or sometimes as multi-link entities or multi-band entities. The multi-link device may be an access point device or a station device. If the multi-link device is an access point device, the multi-link device includes one or more APs; if the multi-link device is a station device, the multi-link device includes one or more non-AP STAs.

A multi-link device including one or more APs may be referred to as the AP MLD, and a multi-link device including one or more non-AP STAs may be referred to as the non-AP MLD. In some embodiments, the non-AP may be referred to as the STA.

In some embodiments, an AP MLD may include multiple APs, a non-AP MLD may include multiple STAs, multiple links may be formed between the multiple APs in the AP MLD and the multiple STAs in the non-AP MLD, and data communication may be performed between the APs in the AP MLD and respective STAs in the non-AP MLD through the corresponding links. As illustrated in FIG. 1, the non-AP MLD 120 performs data communication with the current AP MLD 111 through multiple links, and performs data communication with the target AP MLD 112 through multiple links. After the non-AP MLD 120 moves, the non-AP MLD 120 disconnects the links with the current AP MLD 111 and switches to data communication only with the target AP MLD 112 through multiple links.

An AP is a device deployed in a wireless local area network for providing wireless communication functionality to a STA. The STA may include user equipment (UE), an access terminal, a subscriber unit, a subscriber station, a mobile station, a mobile site, a remote station, a remote terminal, a mobile device, a wireless communication device, a user agent, or a user device. Optionally, the STA may also be a cellular telephone, a cordless telephone, a session initiation protocol (SIP) telephone, a wireless local loop (WLL) station, a personal digital assistant (PDA), a handheld device having a wireless communication function, a computing device or other processing device connected to a wireless modem, a vehicle-mounted device, or a wearable device, which is not limited by the embodiments of the present disclosure.

In some embodiments, both the STA and AP support the institute of electrical and electronics engineers (IEEE) 802.11 standard, but are not limited to the IEEE 802.11 standard.

### Multi-link setup

FIG. 2 illustrates a schematic diagram of a method of multi-link setup provided by the related art. The method is performed by an AP MLD 210 and a non-AP MLD 220. Here, the AP MLD 210 includes: an AP1 supporting 2.4 GHz, an AP2 supporting 5 GHz, and an AP3 supporting 6 GHz. The non-AP MLD 220 includes: a STA1 supporting 2.4 GHz, a STA2 supporting 5GHz, and a STA3 supporting 6GHz.

Related standards define multi-link operation (MLO), and the AP MLD 210 and non-AP MLD 220 devices having multi-link operation capabilities. Multiple links can be established on multiple different frequency bands/channels between the AP MLD 210 and the non-AP MLD 220.

As illustrated in FIG. 2, three links are established between the AP MLD 210 and the non-AP MLD 220 at 2.4 GHz, 5 GHz, and 6 GHz, referred to as Link 1, Link 2, and Link 3 which can operate simultaneously. Among them, AP1 operating at link 1 (2.4 GHz), AP2 operating at link 2 (5 GHz), and AP3 operating at link 3 (6 GHz) are referred to as affiliated APs of the AP MLD 210.

Similarly, STA 1 operating at link 1 (2.4 GHz), STA 2 operating at link 2 (5 GHz), and non-AP STA 3 operating at link 3 (6 GHz) are referred to as affiliated non-AP STAs of the non-AP MLD.

### Logic AP MLD

FIG. 3 illustrates a schematic diagram of a connection between a logical AP MLD and a STA provided by the related art. Here, multiple non-collocated APs are regarded as one logical AP MLD 310. When a STA is connected to the logical AP MLD 310, the multiple non-collocated APs can be regarded as different affiliated APs of the logical AP MLD 310, so that the logical AP MLD 310 uses different affiliated APs to provide services to the STA via different links, thereby better realizing uninterrupted roaming of the STA. The logical AP MLD may also be referred to as a mobility domain MLD.

As illustrated in FIG. 3, the STA1 is connected to the AP 1 and the AP 2 using multiple links. When the STA1 moves, the link connection with the AP 1 is disconnected but the link connection with the AP 2 is not affected, so the mobility support for the STA1 becomes better. The STA1 may be one STA or multiple STAs, and the embodiments of the present disclosure are not limited thereto.

### Multi-link reconfiguration

In the case where multi-link setup has been performed between the non-AP MLD and the AP MLD and the non-AP MLD is associated with the AP MLD, if the non-AP MLD performs link update (such as link addition or deletion) by means of re-association, the existing association, security and other context information between the AP MLD and the non-AP MLD will be torn down, thereby disrupting the ongoing data communication over the established multi-link, and bringing additional network overhead for re-establishing all context information. Therefore, relevant standards propose multi-link reconfiguration operations.

The multi-link reconfiguration operations include the following (1) and (2).
(1) Operations from the perspective of the AP MLD, enabling the AP MLD to dynamically add or delete its affiliated APs.
(2) Operations from the perspective of the non-AP MLD, enabling the non-AP MLD to seamlessly add and/or delete links to/from the established multi-link without requiring re-association between the non-AP MLD and the AP MLD (i.e., multi-link (re)setup). For example, when the AP MLD associated with the non-AP MLD adds a new affiliate AP, the non-AP MLD may add a new link to the established multi-link through multi-link reconfiguration. Similarly, the non-AP MLD may delete a link that is no longer in use (for whatever reason) from the established multi-link through multi-link reconfiguration, thereby releasing resources and simplify link management.

Relevant standards define new protected extremely high throughput (EHT) action frames for link reconfiguration request/response messages, to support seamless addition and/or deletion of links to/from established multi-link of non-AP MLDs without association or re-association between non-AP MLDs and peer MLDs.

Here, adding and/or deleting a link to/from the established multi-link of the non-AP MLD is initiated by the non-AP MLD. Its main definitions include the following (1) to (4).
(1) Enhancements to a reconfiguration multi-link element, to support addition and/or deletion of links. The reconfiguration multi-link element carries one or more per-STA profile sub-elements. The per-STA profile sub-element includes an operation update type subfield. The operation update type subfield is set to indicate an MLO update type (including AP removal, operation parameter update, link addition, link deletion, etc.) for the link indicated by the link identifier (Link ID) subfield included in the sub-element. In the reconfiguration multi-link element transmitted by the AP MLD, the Link ID subfield specifies a value that uniquely identifies the link on which the reported AP is operating. In the reconfiguration multi-link element transmitted by the non-AP MLD, the Link ID subfield specifies the link on which the reconfiguration operation is to be performed.
(2) A single link reconfiguration request frame may indicate the addition and/or deletion of links. The AP MLD may partially or fully accept the multi-link reconfiguration request and indicate the result status of the link reconfiguration accordingly in the link reconfiguration response frame.
(3) The link reconfiguration response frame provides a group temporal key (GTK)/integrity group temporal key (IGTK)/beacon integrity group temporal key (BIGTK) for any link newly added to the established multi-link. MLO key data encapsulation (KDE) for GTK/IGTK/BIGTK is sent in the link reconfiguration response frame. No additional message exchange is required to establish a group key for the newly added link.
(4) A new link reconfiguration notification frame is defined for the AP MLD to recommend which links should be added and/or deleted to/from the MLD settings of the associated non-AP MLD.

Although the FT can reduce the duration of connectivity loss between the STA and the DS or between the non-AP MLD and the DS during the BSS transition, data continuity between the STA (or non-AP MLD) and the DS cannot be maintained because the transition of the STA (or non-AP MLD) to the target AP (or target AP MLD) requires re-association as well as re-establishment of the protocols for data transmission and reception.

The logical AP MLD scheme can theoretically support multiple non-collocated APs affiliated with one logical AP MLD to use different links to provide services for the same non-AP MLD, so as to realize uninterrupted roaming of the non-AP MLD. However, when multiple non-collocated APs perform data communication with the same non-AP MLD through different links, since the multiple APs are located at different positions, it is difficult to realize synchronization of the data communication status and acknowledgement of transmission and reception for the non-AP MLD across the multiple APs, and high communication quality of the backhaul link between the multiple APs is required.

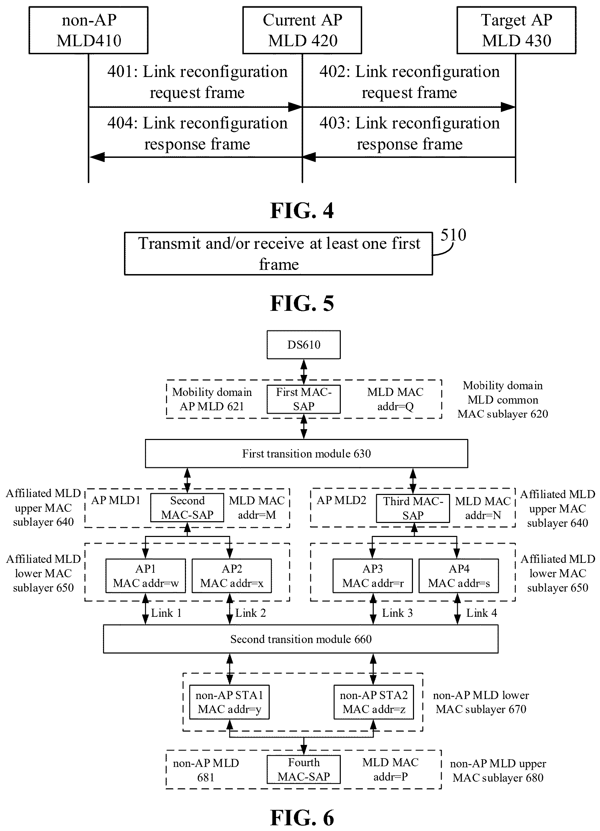

The present disclosure proposes a link reconfiguration method in which a non-AP MLD is switched from a current AP MLD to a target AP MLD. FIG. 4 illustrates a flowchart of a transition method provided by an exemplary embodiment of the present disclosure, where the method is performed by a non-AP MLD 410, a current AP MLD 420, and a target AP MLD 430. The method includes the following operations 401 to 404.

Operation 401: the non-AP MLD 410 transmits a link reconfiguration request frame to the current AP MLD 420.

Here, the link reconfiguration request frame is used to indicate that the non-AP MLD 410 requests link reconfiguration with the current AP MLD 420 and the target AP MLD 430 to perform transition.

In some embodiments, the link reconfiguration request frame includes: a first element corresponding to the current AP MLD 420, for deleting at least one link with the current AP MLD 420; and a second element corresponding to the target AP MLD 430, for establishing at least one link with the target AP MLD 430.

In some embodiments, the first element includes a first reconfiguration multi-link element for describing reconfiguration multi-link information between the non-AP MLD and the current AP MLD; and the second element includes a second reconfiguration multi-link element for describing reconfiguration multi-link information between the non-AP MLD and the target AP MLD.

In some embodiments, the link reconfiguration request frame further includes: a first traffic identifier (TID)-to-link mapping element for TID-to-link mapping on a link established with the target AP MLD.

In some embodiments, the format of the link reconfiguration request frame is illustrated in Table 1.

**Table 1**

| Order | Information | Remark |
|---|---|---|
| 1 | Category | |
| 2 | Protected EHT Action, or Protected UHR Action | |
| 3 | Dialog Token | |
| 4 | Mobility Domain Element, MDE | Indicate that link reconfiguration is performed in a mobility domain MLD scenario, and carry information such as mobility domain MLD information (e.g., mobility domain MLD ID or mobility domain MLD media access control (MAC) address), whether the FT is in the same mobility domain MLD, and the like |
| 5 | Reconfiguration Multi-Link Element, RME | Describe reconfiguration |
| | (RME for CurrentAPMLD) | multi-link information between non-AP MLD and current AP MLD |
| 6 | Reconfiguration Multi-Link Element, RME (RME for TargetAPMLD) | Describe reconfiguration multi-link information between non-AP MLD and target AP MLD |
| 7 | Operating Channel Information element, OCI element | Provide operating channel information for the current channel on which the link reconstruction request frame is being transmitted |
| 8 | TID-To-Link Mapping element | Carry one or two TID-to-link mapping elements that provide TID-to-link mapping information, for requesting corresponding TID-to-link mapping on the link requested to be established with the target AP MLD |

Exemplarily, the first reconfiguration multi-link element is the reconfiguration multi-link element (order: 5), the second reconfiguration multi-link element is the reconfiguration multi-link element (order: 6), and the first TID-to-link mapping element is the TID-to-link mapping element (order: 8).

The format of the link reconfiguration request frame described above is an exemplary possible case. Under different embodiments or different designs, it is not excluded that at least one of the following designs may vary: the arrangement order between the link reconfiguration request frame and other fields, the order of information, the information included, the number of bytes occupied, or the information name. The present embodiment is not limited thereto.

Operation 402: the current AP MLD 420 transmits a link reconfiguration request frame to the target AP MLD 430.

Specific details of the link reconfiguration request frame refer to the operation 401 and will not be repeated here.

Operation 403: the target AP MLD 430 transmits a link reconfiguration response frame to the current AP MLD 420.

Here, the link reconfiguration response frame is used to provide feedback to the non-AP MLD 410 regarding the link reconfiguration with the target AP MLD 430.

In some embodiments, the link reconfiguration response frame includes: a third element corresponding to the current AP MLD, for indicating a link reconfiguration status corresponding to the current AP MLD; and a fourth element corresponding to the target AP MLD, for indicating a link reconfiguration status corresponding to the target AP MLD.

The third element includes at least one of: a reconfiguration status list for the current AP MLD, including at least one reconfiguration status tuple; or the number of reconfiguration status tuples for the current AP MLD.

The fourth element includes at least one of: a reconfiguration status list for the target AP MLD, including at least one reconfiguration status element; or the number of reconfiguration status tuples for the target AP MLD.

Here, the reconfiguration status element is used to indicate a reconfiguration status of one link.

In some embodiments, the link reconfiguration response frame may be an action frame of a protected EHT or ultra-high reliability (UHR) or UHR+ type. The format of the link reconfiguration response frame is illustrated in Table 2.

**Table 2**

| Order | Information | Remark |
|---|---|---|
| 1 | Category | |
| 2 | Protected EHT Action, or Protected UHR Action | |
| 3 | Dialog Token | |
| 4 | MDE | Indicate that link reconfiguration is performed in mobility domain MLD scenario, and carry information such as mobility domain MLD information (such as mobility domain MLD ID or mobility domain MLD MAC |
| | | address), whether the FT is in the same mobility domain MLD, and the like |
| 5 | Status Code | Indicate a status code of link reconfiguration in mobility domain MLD scenario |
| 6 | Count for link reconfiguration of current AP MLD | Represent the number of reconfiguration status tuples in reconfiguration status list for link reconfiguration of the current AP MLD |
| 7 | Reconfiguration Status List for current AP MLD | Represent reconfiguration status list for link reconfiguration of the current AP MLD |
| 8 | Count for link reconfiguration of target AP MLD | Represent the number of reconfiguration status tuples in reconfiguration status list for link reconfiguration of the target AP MLD |
| 9 | Reconfiguration Status List for target AP MLD | Represent reconfiguration status list for link reconfiguration of the target AP MLD link |
| 10 | Group Key Data | Contain group key for the corresponding link successfully added to the target AP MLD |
| 11 | OCI element | Provide operational channel information for a current channel on which the link reconfiguration response frame is being transmitted |
| 12 | Basic Multi-Link Element | Contain a basic multi-link element for the target AP MLD, for providing Per-STA profile |
| | | information for one or more affiliated APs of the target AP MLD |
| 13 | TID-To-Link Mapping element | Contain one or two TID-to-link mapping elements, for responding to the received link reconfiguration request frame that initiated link reconfiguration and TID-To-Link mapping negotiation requests |

Exemplarily, the third element includes the count for link reconfiguration of current AP MLD (order: 6), and the reconfiguration status list for current AP MLD (order: 7). The fourth element includes the count for link reconfiguration of target AP MLD (order: 8), and the reconfiguration status list for target AP MLD (order: 9).

The format of the link reconfiguration response frame described above is an exemplary possible case. Under different embodiments or different designs, it is not excluded that at least one of the following designs may vary: the arrangement order between the link reconfiguration response frame and other fields, the order of information, the information included, the number of bytes occupied, or the information name. The present embodiment is not limited thereto.

Operation 404: the current AP MLD 420 transmits a link reconfiguration response frame to the non-AP MLD 410.

Here, the link reconfiguration response frame is used to provide feedback to the non-AP MLD 410 regarding the link reconfiguration with the current AP MLD 420 and the target AP MLD 430.

Compared with the operation 403, in the operation 404, the current AP MLD 420 adds information about the link reconfiguration with the current AP MLD 420 into the link reconfiguration response frame, and the specific details of the link reconfiguration response frame are illustrated in Table 2, and will not be repeated here.

In summary, by transmitting and/or receiving a link reconfiguration request frame and a link reconfiguration response frame, where the link reconfiguration request frame and the link reconfiguration response frame are used to enable transition between the current AP MLD and the target AP MLD at different positions based on link reconfiguration, the method provided by the present embodiment optimizes the link reconfiguration protocol between the current AP MLD and the target AP MLD at different positions, and realizes the transition of the non-AP MLD between the current AP MLD and the target AP MLD during communication.

FIG. 5 illustrates a flowchart of a transition method provided by an exemplary embodiment of the present disclosure. The method is performed by a non-AP MLD, and includes operation 510.

Operation 510: at least one first frame is transmitted and/or received.

Here, the at least one first frame is used to enable a transition between two AP MLDs at different locations based on link reconfiguration.

In some embodiments, the two AP MLDs belong to the same mobility domain MLD, or the two AP MLDs belong to the same mobility domain.

The mobility domain MLD (or referred to as logical AP MLD) regards multiple non-collocated AP MLDs as one MLD, and the specific name of the mobility domain MLD is not limited in this embodiment.

In some embodiments, the transition of the non-AP MLD between the two AP MLDs includes at least one of transition scenario 1 or transition scenario 2.

The transition scenario 1: when the non-AP MLD is associated with the mobility domain MLD and the two AP MLDs belong to the same mobility domain MLD, the non-AP MLD performs transition of association at the AP MLD level affiliated with the mobility domain MLD between the two AP MLDs.

The transition scenario 2: when the non-AP MLD is associated with only one of the two AP MLDs, and the two AP MLDs are not affiliated with the same mobility domain MLD, the non-AP MLD performs transition of association between the two AP MLDs.

The transition in the embodiments of the present disclosure may also be described as switching alternatively.

For transition scenario 1, the transition of association at the AP MLD level affiliated with the mobility domain MLD means that: before transition, the non-AP MLD is associated with the mobility domain MLD, and the non-AP MLD establishes multi-link with an AP MLD affiliated with the mobility domain MLD (i.e., the links established between the non-AP MLD and the mobility domain MLD wholly or partially belong to links between the non-AP MLD and the AP MLD affiliated with the mobility domain MLD); after transition, the non-AP MLD is also associated with the mobility domain MLD, and the non-AP MLD establishes multi-link with another AP MLD affiliated with the mobility domain MLD (i.e., the links established between the non-AP MLD and the mobility domain MLD wholly or partially belong to links between the non-AP MLD and the another AP MLD affiliated with the mobility domain MLD).

For transition scenario 2, the non-AP MLD is associated with access point multi-link devices affiliated with different mobility domain MLDs before and after transition, thereby performing transition of association.

For a mobility domain MLD with which a current AP MLD of the two AP MLDs is affiliated, the mobility domain MLD has multiple affiliated AP MLDs including the current AP MLD.

For a mobility domain MLD with which a target AP MLD of the two AP MLDs is affiliated, the mobility domain MLD has multiple affiliated AP MLDs including the target AP MLD.

The transition provided by the embodiments of the present disclosure may include BSS transition, FT, seamless BSS transition, or seamless fast transition.

It should be noted that the method provided by the embodiments of the present disclosure involves transition of the non-AP MLD from the current AP MLD to the target AP MLD in the scenario of the mobility domain AP MLD, and the method is also applicable to transition of the non-MLD STA from the current AP to the target AP in the scenario of the mobility domain AP MLD.

In some embodiments, the two AP MLDs belong to the same mobility domain MLD, and the mobility domain MLD is used for at least one of: providing connection services between the non-AP MLD or the two AP MLDs and a distribution system (DS); maintaining data continuity for the non-AP MLD during the transition between the two AP MLDs in a roaming process; authentication and/or association or re-association of the non-AP MLD; security association of the non-AP MLD; distribution of all or part of security association information of the non-AP MLD; synchronization of all or part of state and/or buffer information of upper layers of upper MAC sublayers (Upper-UMAC) of the two AP MLDs; managing distribution of authentication information of a link of the non-AP MLD; managing AP MLD-level association or re-association between the non-AP MLD and the two AP MLDs; for a target AP MLD of the two AP MLDs that establishes a multi-link with the non-AP MLD, selecting a MAC corresponding to the target AP MLD for data transmission; synchronization of first data between the two AP MLDs, the first data being used to maintain data communication between the non-AP MLD and the two AP MLDs or the DS; or exchanging or indicating MLD-level information through MAC sublayers of the two AP MLDs.

In some embodiments, the at least one first frame are transmitted and/or received, which includes: a link reconfiguration request frame is transmitted, where the link reconfiguration request frame is used for indicating that the non-AP MLD requests link reconfiguration with the two AP MLDs to perform the transition; and a link reconfiguration response frame is received, where the link reconfiguration response frame is used for providing feedback on the link reconfiguration with the two AP MLDs to the non-AP MLD.

In some embodiments, the two AP MLDs include a current AP MLD and a target AP MLD, and the link reconfiguration request frame is transmitted by the non-AP MLD to the current AP MLD and transmitted by the current AP MLD to the target AP MLD.

In some embodiments, the two AP MLDs include a current AP MLD and a target AP MLD, and the link reconfiguration response frame is transmitted by the target AP MLD to the current AP MLD and then fed back by the current AP MLD.

In a case where the non-AP MLD needs to transition from communication with the current AP MLD to communication with the target AP MLD, the non-AP MLD transmits a link reconfiguration request frame to the current AP MLD, where the link reconfiguration request frame is used for requesting deletion of at least one link with the current AP MLD; and the current AP MLD transmits a link reconfiguration request frame to the target AP MLD, where the link reconfiguration request frame is used to request establishment of at least one link between the non-AP MLD and the target AP MLD.

The target AP MLD transmits a link reconfiguration response frame to the current AP MLD, where the link reconfiguration response frame is used to indicate a link reconfiguration status corresponding to the target AP MLD, for example, whether to establish a link with the non-AP MLD. The current AP MLD transmits a link reconfiguration response frame to the non-AP MLD, where the link reconfiguration response frame is used to indicate link reconfiguration statuses corresponding to the current AP MLD and the target AP MLD, for example, whether the current AP MLD deletes a link and whether the target AP MLD establishes a link with the non-AP MLD.

In some embodiments, the two AP MLDs include a current AP MLD and a target AP MLD.

The link reconfiguration request frame includes: a first element corresponding to the current AP MLD, for deleting at least one link with the current AP MLD; and a second element corresponding to the target AP MLD, for establishing at least one link with the target AP MLD.

In some embodiments, the first element includes a first reconfiguration multi-link element for describing reconfiguration multi-link information between the non-AP MLD and the current AP MLD; and the second element includes a second reconfiguration multi-link element for describing reconfiguration multi-link information between the non-AP MLD and the target AP MLD.

In some embodiments, the link reconfiguration request frame further includes: a first TID-to-link mapping element for TID-to-link mapping on the link established with the target AP MLD.

In some embodiments, the format of the link reconfiguration request frame is as illustrated in Table 1 in the embodiment of FIG. 4. Exemplarily, the third element includes the count for link reconfiguration of current AP MLD (order: 6), and the reconfiguration status list for current AP MLD (order: 7). The fourth element includes the count for link reconfiguration of target AP MLD (order: 8), and the reconfiguration status list for target AP MLD (order: 9).

In some embodiments, the two AP MLDs include a current AP MLD and a target AP MLD, and the link reconfiguration response frame includes: a third element corresponding to the current AP MLD, for indicating a link reconfiguration status corresponding to the current AP MLD; and a fourth element corresponding to the target AP MLD, for indicating a link reconfiguration status corresponding to the target AP MLD.

In some embodiments, the third element includes at least one of: a reconfiguration status list for the current AP MLD, including at least one reconfiguration status tuple; or the number of reconfiguration status tuples for the current AP MLD. The fourth element includes at least one of: a reconfiguration status list for the target AP MLD, including at least one reconfiguration status element; or the number of reconfiguration status tuples for the target AP MLD.

Here, the reconfiguration status element is used to indicate a reconfiguration status of one link.

In some embodiments, the link reconfiguration response frame may be an action frame of a protected EHT or UHR, or UHR+ type. The format of the link reconfiguration response frame is as illustrated in Table 2 in the embodiment of FIG. 4. Exemplarily, the third element includes the count for link reconfiguration of current AP MLD (order: 6), and the reconfiguration status list for current AP MLD (order: 7). The fourth element includes the count for link reconfiguration of target AP MLD (order: 8), and the reconfiguration status list for target AP MLD (order: 9).

In some embodiments, the two AP MLDs belong to the same mobility domain MLD, or the two AP MLDs belong to the same mobility domain, the method further includes that: first indication information is transmitted and/or received, where the first indication information is used for indicating the mobility domain MLD.

In some embodiments, the first indication information is carried in at least one of: a link reconfiguration request frame; a link reconfiguration response frame; a request frame; a response frame; an FT request frame; an FT response frame; an FT confirm frame; an FT acknowledgement (Ack) frame; an association request frame; an association response frame; a re-association request frame; or a re-association response frame.

Here, the request frame is used to indicate that the non-AP MLD requests replication or migration of context information between the two AP MLDs to maintain data connectivity during the transition, and the response frame is used to indicate a result of the replication or migration of the context information between the two AP MLDs to the non-AP MLD.

In some embodiments, the first indication information includes at least one of: a mobility domain MLD identifier (ID); or a mobility domain MLD MAC address.

Exemplarily, the first indication information is referred to as a mobility domain element (MDE), which is used to indicate that link reconfiguration is performed in a mobility domain MLD scenario, and carries information such as mobility domain MLD information (e.g., mobility domain MLD ID or mobility domain MLD MAC address), whether or not the FT is in the same mobility domain MLD, and the like. The AP MLD may use the MDE to advertise that the AP MLD is included in or affiliated with the mobility domain MLD, and advertise the AP MLD's support for FT functions and FT policy information, including whether FT between the two AP MLDs affiliated with the same mobility domain MLD is supported or allowed.

In some embodiments, the transition is based on FT, the method further includes that: second indication information is transmitted and/or received, where the second indication information is used for indicating whether FT between the two AP MLDs affiliated with the same mobility domain MLD is supported or allowed.

Compared to FT between the two AP MLDs, the FT between the two AP MLDs affiliated with the same mobility domain MLD is used for maintaining data connectivity during the transition.

In some embodiments, the second indication information is carried in at least one of: a link reconfiguration request frame; a link reconfiguration response frame; a request frame; a response frame; an FT request frame; an FT response frame; an FT confirm frame; an FT Ack frame; an association request frame; an association response frame; a re-association request frame; or a re-association response frame.

Here, the request frame is used to indicate that the non-AP MLD requests replication or migration of context information between the two AP MLDs to maintain data connectivity during the transition, and the response frame is used to indicate a result of the replication or migration of the context information between the two AP MLDs to the non-AP MLD.

In some embodiments, based on the mobility domain MLD architecture, a high-level architecture of the mobility domain MLD and its affiliated AP MLDs and the non-AP MLDs for the data connectivity-oriented transition of a non-AP MLD (or STA) from the current AP MLD (or AP) to the target AP MLD (or AP) is illustrated in FIG. 6.

The high-level architecture includes at least one of: a DS 610, a mobility domain MLD common sublayer 620, a first transition module 630, an affiliated MLD upper MAC sublayer 640, an affiliated MLD lower MAC sublayer 650, a second transition module 660, a non-AP MLD lower MAC sublayer 670, or a non-AP MLD upper MAC sublayer 680.

The DS 610 is an architecture for distributing computing and communication functions among multiple nodes or devices. The primary function of the DS is to coordinate and manage computing and communication tasks in distributed environments for efficient data transmission and collaboration.

The mobility domain MLD common sublayer 620 includes a mobility domain AP MLD 621 with an MLD MAC address of Q, for performing data communication with the DS 610 through a first MAC-service access point (SAP).

AP MLD1 with an MLD MAC address of M and AP MLD2 with an MLD MAC address of N have the same functions, and AP MLD1 is taken as an example for illustration. The mobility domain AP MLD 621 performs data communication with the AP MLD1 through the first transition module 630. The first transition module 630 is a module in the mobility domain AP MLD 621, or a module in the AP MLD1, or a module in another AP MLD.

The AP MLD1 performs data communication with AP1 with an MAC address of w and AP2 with an MAC address of x via a second MAC-SAP. The functions of AP1 and AP2 are the same, and AP1 is taken as an example for illustration. The AP1 performs data communication with the second transition module 660 through link 1. The second transition module 660 is a module in a non-AP MLD 681, or a module in the AP MLD1, or a module in another AP MLD.

The non-AP STA1 with an MAC address of y and the non-AP STA2 with an MAC address of z have the same functions, the non-AP STA1 is associated with the AP1 and the AP3 with an MAC address of r, and the non-AP STA2 is associated with the AP2 and the AP4 with an MAC address of s, and the non-AP STA1 is taken as an example for illustration. The non-AP MLD with an MLD MAC address of P performs data communication with the non-AP STA1 through a fourth MAC-SAP.

The functions of the mobility domain MLD common sublayer 620 include at least one of: (1) providing a distribution system access function (DSAF) to the affiliated AP MLD (e.g., AP MLD1, AP MLD2) of the mobility domain MLD; (2) authentication, association, and re-association between the non-AP MLD 681 and the mobility domain AP MLD 621; (3) security association (such as pairwise master key security association (PMKSA), pairwise transient key security association (PTKSA)) and managing distribution of GTK/IGTK/BIGTK; (4) managing partial association and re-association between the non-AP MLD 681 and the affiliated AP MLD of the mobility domain AP MLD; (5) for the affiliated AP MLD associated with the non-AP MLD 681, selecting an MAC corresponding to the affiliated AP MLD for data transmission; (6) synchronization (replication or migration) of all or part of state and buffer information of upper layers of upper MAC sublayers (Upper-UMAC) of affiliated MLDs of the mobility domain MLD; or (7) exchanging or indicating MLD-level management information through MAC sublayers of the affiliated MLD.

Here, the synchronization of all or part of state and buffer information of upper layers of upper MAC sublayers (Upper-UMAC) of affiliated MLDs of the mobility domain MLD includes: for a designated non-AP MLD associated with the mobility domain MLD, transition of the non-AP MLD from the current AP MLD associated to the target AP MLD to be associated involves synchronization of all or part of state and buffer information of upper layers of upper MAC sublayers (Upper-UMAC) of the affiliated MLDs, to maintain the continuity of the data communication session and the persistence of data transmission in the process where the non-AP MLD is associated with different affiliated AP MLDs due to roaming.

All or part of the state and buffer information of the upper layers of upper MAC sublayers (Upper-UMAC) of the affiliated MLDs of the mobility domain MLD (i.e., the session or protocol state and buffer information (for the designated non-AP MLD) maintained for data exchange with the designated non-AP MLD) include at least one of: (1) sequence number (SN)/packet number (PN) allocation state and related buffer data for unicast frames; (2) SN allocation state and related buffer data for group addressed MAC service data units (MSDUs); (3) power-saving buffer data for individually addressed frames; (4) block Ack session state, and duplicate detection and reordering buffer data for received frames; or (5) PN counter state at the transmitting end and replay detection state at the receiving end, and related buffer data.

In some embodiments, the link reconfiguration response frame includes a status code for indicating a status code of the link reconfiguration in a mobility domain MLD scenario. When a value of the status code is a first value, the status code is used to indicate that mobility domain link reconfiguration is denied.

The format of the link reconfiguration response frame is illustrated in Table 2 of the embodiment of FIG. 4. Here, the value, name and meaning of the status code newly added to the status code subfield (order: 5) are illustrated in Table 3. When the value of the status code is 142 or other values, the status code is used to indicate that the mobility domain link reconfiguration is denied, i.e., the mobility domain link reconfiguration request failed, and the target AP MLD did not add a link successfully.

**Table 3**

| Status Code | Name | Meaning |
|---|---|---|
| 0 | SUCCESS | successful |
| ...... | | |
| 142 (or other values) | DENIED_MD_LINK_CONFIGURATION | Mobility domain link reconfiguration request failed, target AP MLD did not successfully add a link |

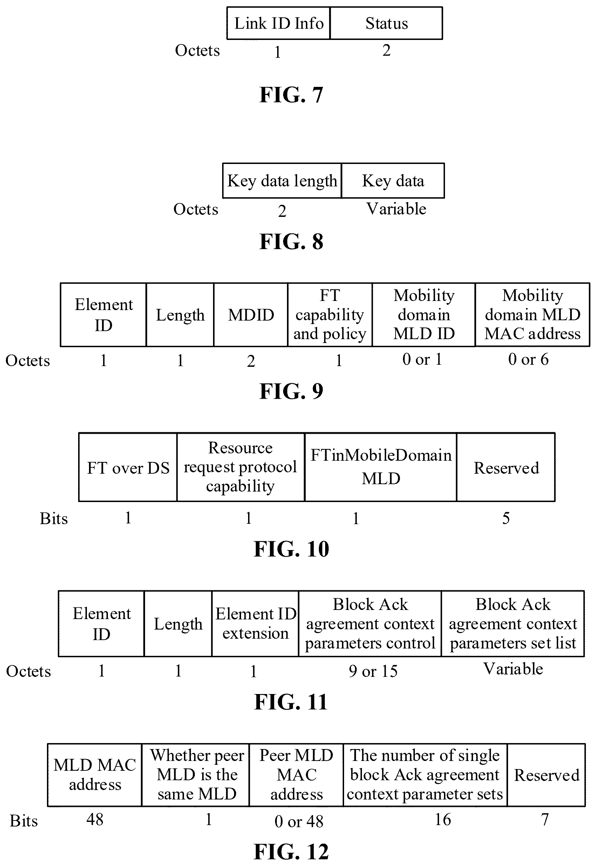

In some embodiments, the reconfiguration status list subfield of the current AP MLD and the reconfiguration status list subfield of the target AP MLD both adopt the reconfiguration status list format. The reconfiguration status list contains one or more reconfiguration status tuples, as illustrated in Figure 7. FIG. 7 is a schematic diagram illustrating a reconfiguration status list subfield format according to an exemplary embodiment of the present disclosure. The reconfiguration status list subfield format includes at least one of: a link ID Info field, or a status field. In the embodiments of the present disclosure, the field may be referred to as the domain, and the subfield may be referred to as subdomain.

Here, the link ID Info field occupies 1 byte and the status field occupies 2 bytes. The format of the link ID Info field is as defined in IEEE 802.11be. The link ID field in the link ID Info field indicates a link ID corresponding to the AP MLD, and is used in the corresponding link reconfiguration request frame for deleting an existing link or add a new link. The status field indicates the status of the link reconfiguration operation of the link corresponding to the link ID field.

The above-described reconfiguration status list subfield format is an exemplary possible case. Under different embodiments or different designs, it is not excluded that at least one of the following designs may vary: the position of the reconfiguration status list subfield in the frame, the arrangement order between the reconfiguration status list subfield and other fields, the number of bytes occupied, or the field name. The present embodiment is not limited thereto.

In some embodiments, the link reconfiguration response frame includes group key data for indicating a group key for a corresponding link successfully added to the target AP MLD. The group key data subfield is optionally present and contains the group key for the corresponding link successfully added to the target AP MLD (the value of the status code is SUCCESS). FIG. 8 illustrates a schematic diagram of a group key data subfield format provided by an exemplary embodiment of the present disclosure. The group key data subfield format includes at least one of: a key data length field, or a key data field.

The key data length field occupies 2 bytes, and the number of bytes occupied by the key data field is variable.

The group key data subfield contains an MLO GTK KDE, an MLO IGTK KDE, and an MLO BIGTK KDE, which provide the group key, identified by the link ID subfield, for the link added to the target AP MLD.

In the case where the link reconfiguration response frame includes the group key data subfield and also includes an OCI element, an OCI element subfield is optionally present.

The above-described group key data subfield format is an exemplary possible case. Under different embodiments or different designs, it is not excluded that at least one of the following designs may vary: the position of the group key data subfield in the frame, the arrangement order between the group key data subfield and other fields, the number of bytes occupied, or the field name. The present embodiment is not limited thereto.

In some embodiments, the link reconfiguration response frame includes a basic multi-link element for providing Per-STA profiles for one or more affiliated APs of the target AP MLD.

In the case where the target AP MLD adds at least one link, the link reconfiguration response frame includes a basic multi-link element for providing Per-STA profiles for one or more affiliated APs of the target AP MLD. These APs respectively correspond to the links successfully added to the multi-link reconfiguration of the non-AP MLD. In the case where the target AP MLD does not add a link, the link reconfiguration response frame excludes the basic multi-link element.

In some embodiments, the link reconfiguration response frame includes a second TID-to-link mapping element for responding to TID-to-link mapping on a link established with the target AP MLD.

In some embodiments, the link reconfiguration response frame is used for the AP MLD (including the current AP MLD and the target AP MLD) in the mobility domain MLD scenario to respond to the link reconfiguration request frame transmitted from the non-AP MLD, thereby accepting or rejecting the request of the non-AP MLD to delete and/or add link(s) on established multi-link setup.

For FT, the link reconfiguration response frame is used by the AP MLD (including the current AP MLD and the target AP MLD) to respond to the link reconfiguration request frame transmitted from the non-AP MLD in the mobility domain MLD scenario, to accept or reject the request of the non-AP MLD to delete link(s) from the established multi-link of the current AP MLD and to add new link(s) to the target AP MLD.

In some embodiments, the transition is based on FT, at least one of the link reconfiguration request frame or the link reconfiguration response frame further includes second indication information, for indicating whether FT between two the AP MLDs affiliated with the same mobility domain MLD is supported or allowed.

Exemplarily, the second indication information is referred to as a "FTinMobileDomainMLD" field, where when the value of this field is 1, it indicates that FT is supported or allowed between the two AP MLDs affiliated with the same mobility domain MLD, and when the value of this field is 0, it indicates that FT is not supported or allowed between the two AP MLDs affiliated with the same mobility domain MLD.

FIG. 9 illustrates a schematic diagram of a mobility domain element format provided by an exemplary embodiment of the present disclosure. The mobility domain element format includes at least one of: an element ID field, a length field, a mobility domain identifier (MDID) field, an FT capability and policy field, a mobility domain MLD ID field, or a mobility domain MLD MAC address field.

Here, the element ID field occupies 1 byte, the length field occupies 1 byte, the MDID field occupies 2 bytes, the FT capability and policy field occupies 1 byte, the mobility domain MLD ID field occupies 0 or 1 byte, and the mobility domain MLD MAC address field occupies 0 or 6 bytes.

For the FT capability and policy field, FIG. 10 illustrates a schematic diagram of an FT capability and policy field format provided by an exemplary embodiment of the present disclosure. The FT capability and policy field includes at least one of: an FT over DS field, a resource request protocol capability field, an FTinMobileDomainMLD field, or a reserved field.

Here, the FT over DS field occupies 1 bit, the resource request protocol capability field occupies 1 bit, the FTinMobileDomainMLD field occupies 1 bit, and the reserved field occupies 5 bits.

The "FTinMobileDomainMLD" field indicates whether FT between the two AP MLDs affiliated with the same mobility domain MLD is supported or allowed. For example, when the value of the "FTinMobileDomainMLD" field is 1, it indicates that FT is supported or allowed between the two AP MLDs affiliated with the same mobility domain MLD, and when the value of the "FTinMobileDomainMLD" field is 0, it indicates that FT is not supported or allowed between the two AP MLDs affiliated with the same mobility domain MLD. Alternatively, when the value of the "FTinMobileDomainMLD" field is 0, it may indicate that FT is supported or allowed between the two AP MLDs affiliated with the same mobility domain MLD, and when the value of the "FTinMobileDomainMLD" field is 1, it may indicate that FT is not supported or allowed between the two AP MLDs affiliated with the same mobility domain MLD, which are not limited in this embodiment.

The "FTinMobileDomainMLD" field may control the behavior of the STA or the non-AP MLD to perform the FT. The non-AP MLD may determine the transition method recommended by the AP MLD and the protocol supported by the AP MLD, using the information from the MDE.

The above-described mobility domain element format and the FT capability and policy field format are exemplary possible cases. Under different embodiments or different designs, it is not excluded that at least one of the following designs may vary: the positions of the mobility domain element and the FT capability and policy field in a frame, the arrangement order between the mobility domain element as well as the FT capability and policy field and other fields, the number of occupied bytes, the number of occupied bits, the element name, or the field name. The present embodiment is not limited thereto.

In some embodiments, the method further includes that: at least one second frame is transmitted and/or received, where the second frame is used for synchronizing context information related to the non-AP MLD between the two AP MLDs, and the context information includes at least one of state information or buffer information.

In some embodiments, the at least one second frame is transmitted and/or received, which includes that: a request frame is transmitted, where the request frame is used for indicating that the non-AP MLD requests synchronization of the context information related to the non-AP MLD between the two AP MLDs; and a response frame is received, where the response frame is used for providing feedback to the non-AP MLD regarding the synchronization of the context information related to the non-AP MLD between the two AP MLDs.

In some embodiments, the context information includes at least one of: first context information, related to a block acknowledgement (Ack) agreement context; or second context information, related to a security association context.

In some embodiments, the first context information is carried in a block acknowledgement agreement context element.

In some embodiments, the second context information is carried in a security association context element.

### Block acknowledgement agreement context element

In some embodiments, the block acknowledgement agreement context may also be described as a block Ack agreement scenario, block Ack context, or block Ack scenario, which is information maintained for the block acknowledgement process.

In some embodiments, the block acknowledgement agreement context element includes block acknowledgement agreement context or status information that the specified MLD has established and maintained with one or more peer MLDs (i.e., non-AP MLDs). The block acknowledgement agreement context element includes a block acknowledgement agreement context parameter control field for indicating at least one of: a device in which the block acknowledgement agreement context element is located; whether the device in which the block acknowledgement agreement context element is located and the non-AP MLD for which the block acknowledgement agreement context is used are the same device; the non-AP MLD for which the block acknowledgement agreement context is used, when the device in which the block acknowledgement agreement context element is located and the non-AP MLD for which the block acknowledgement agreement context is used are the same device; or the number of block acknowledgement agreement context parameter sets included in the block acknowledgement agreement context element.

In some embodiments, the device in which the block acknowledgement agreement context element is located is the current AP MLD.

FIG. 11 illustrates a schematic diagram of a block acknowledgement agreement context element format provided by an exemplary embodiment of the present disclosure. The block acknowledgement agreement context element format includes at least one of: an element ID field, a length field, an element ID extension field, a block acknowledgement agreement context parameter control field, or a block acknowledgement agreement context parameter set list field. In the embodiments of the present disclosure, the field may be referred to as the domain, and the subfield may be referred to as the subdomain.

Here, the element ID field occupies 1 byte, the length field occupies 1 byte, the element ID extension field occupies 1 byte, the block acknowledgement agreement context parameter control field occupies 9 or 15 bytes, and the block acknowledgement agreement context parameter set list field occupies the variable number of bytes.

For the block acknowledgement agreement context parameter control field, FIG. 12 illustrates a schematic diagram of a block acknowledgement agreement context parameter control field format provided by an exemplary embodiment of the present disclosure. The block acknowledgement agreement context parameter control field includes at least one of: an MLD MAC address field, a "whether peer MLD is the same MLD" field, a peer MLD MAC address field, a "the number of single block acknowledgement agreement context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of single block acknowledgement agreement context parameter sets" field occupies 16 bits, and the reserved field occupies 7 bits.

The MLD MAC address field indicates the MAC address of the MLD where the block acknowledgement agreement context described by the block acknowledgement agreement context element is located. Here, the MLD MAC address may be an MLD address of a roaming MLD.

The "whether peer MLD is the same MLD" field indicates whether the peer MLD for which the block acknowledgement agreement context of the MLD described by the block acknowledgement agreement context element is used is the same MLD. When the value of this field is 0, it indicates that the peer MLD for which the block acknowledgement agreement context of the MLD described by the block acknowledgement context element is used is the same MLD, and when the value of this field is 1, it indicates that the peer MLD for which the block acknowledgement agreement context of the MLD described by the block acknowledgement agreement context element is used is multiple MLDs. Alternatively, when the value of this field is 1, it indicates that the peer MLD for which the block acknowledgement agreement context of the MLD described by the block acknowledgement agreement context element is used is the same MLD, and when the value of this field is 0, it indicates that the peer MLD for which the block acknowledgement agreement context of the MLD described by the block acknowledgement agreement context element is used is multiple MLDs. This is not limited in the embodiments of the present disclosure.

The peer MLD MAC address field indicates the MAC address of the peer MLD for which the block acknowledgement agreement context of the MLD described by the block acknowledgement agreement context element is used. When the value of the field is 0, the peer MLD MAC address field is present in the block acknowledgement agreement context parameter control field; and when the value of the field is 1, the peer MLD MAC address field is absent in the block acknowledgement agreement context parameter control field. Alternatively, when the value of the field is 1, the peer MLD MAC address field is present in the block acknowledgement agreement context parameter control field; and when the value of the field is 0, the peer MLD MAC address field is absent in the block acknowledgement agreement context parameter control field. This is not limited in the embodiments of the present disclosure.

The "the number of single block acknowledgement agreement context parameter sets" field is a 16-bit unsigned integer indicating the number of single block acknowledgement agreement context parameter set fields in the block acknowledgement agreement context parameter set list field.

In some embodiments, the block acknowledgement agreement context element includes a block acknowledgement agreement context parameter set list field, including at least one block acknowledgement agreement context parameter set subfield, where one block acknowledgement agreement context parameter set subfield is used for indicating one block acknowledgement agreement context parameter set.

In some embodiments, the block acknowledgement agreement context parameter set subfield is used to indicate at least one of: a role of a device where the block acknowledgement agreement context is located within the block acknowledgement agreement context; the non-AP MLD for which the block acknowledgment agreement context is used; a block acknowledgement parameter set; or a block acknowledgement timeout.

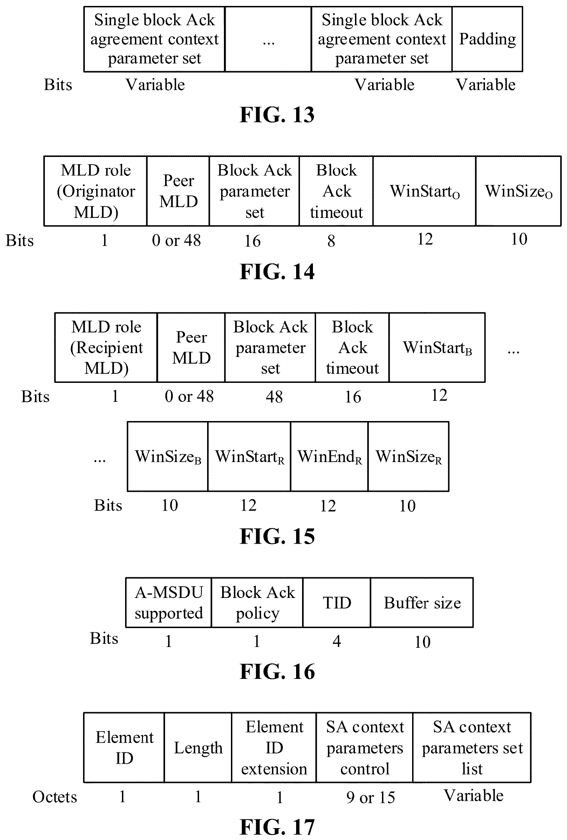

For the block acknowledgement agreement context parameter set list field, FIG. 13 illustrates a schematic diagram of a block acknowledgement agreement context parameter set list field format provided by an exemplary embodiment of the present disclosure. The block acknowledgement agreement context parameter set list field includes at least one of: one or more single block acknowledgement agreement context parameter set fields, or a padding field.

Here, the number of bits occupied by the single block acknowledgement agreement context parameter set field is variable, and the number of bits occupied by the padding field is variable.

In some embodiments, if the block acknowledgement agreement context parameter set subfield is used to indicate that the role of the device where the corresponding block acknowledgement agreement context is located within the block acknowledgement agreement context is an originator, the block acknowledgement agreement context parameter set subfield is further used to indicate at least one of: a starting sequence number of a transmit window; or a size of the transmit window.

In some embodiments, if the block acknowledgement agreement context parameter set subfield is used to indicate that the role of the device where the block acknowledgement agreement context is located within the block acknowledgement agreement context is a recipient, the block acknowledgement agreement context parameter set subfield is further used to indicate at least one of: a starting sequence number of a receive buffer; a size of a receive window; a starting sequence number of a record bitmap; an ending sequence number of the record bitmap; or a size of the record bitmap.

For the single block acknowledgement agreement context parameter set field, in the case where the MLD where the block acknowledgement agreement context is located is an originator MLD role, FIG. 14 illustrates a diagram of a single block acknowledgement agreement context parameter set field format provided by an exemplary embodiment of the present disclosure. The single block acknowledgement agreement context parameter set field includes at least one of: an MLD role field (originator MLD), a peer MLD field, a block acknowledgement parameter set field, a block acknowledgement timeout field, a "starting sequence number of transmit window (WinStartO)" field, and a "size of transmit window (WinStartO)" field.

Here, the MLD role field (originator MLD) occupies 1 bit, the peer MLD field occupies 0 or 48 bits, the block acknowledgement parameter set field occupies 16 bits, the block acknowledgement timeout field occupies 8 bits, the WinStartO field occupies 12 bits, and the WinStartO field occupies 10 bits.

In the case where the MLD where the block acknowledgement agreement context is located is a recipient MLD role, FIG. 15 illustrates a schematic diagram of a single block acknowledgement agreement context parameter set field format provided by an exemplary embodiment of the present disclosure. The single block acknowledgement agreement context parameter set field includes at least one of: an MLD role field (recipient MLD), a peer MLD field, a block acknowledgement parameter set field, a block acknowledgement timeout field, a "the starting sequence number of the receive buffer (WinStartB)" field, a "the size of the receive window (WinSizeB)" field, a "the starting sequence number of the record bitmap (WinStartR)" field, an "the ending sequence number of the record bitmap (WinEndR)" field, or a "the size of the record bitmap (WinSizeR)" field.

Here, the MLD role field (recipient MLD) occupies 1 bit, the peer MLD field occupies 0 or 48 bits, the block acknowledgement parameter set field occupies 48 bits, the block acknowledgement timeout field occupies 16 bits, the WinStartB field occupies 12 bits, the WinSizeB field occupies 10 bits, the WinStartR field occupies 12 bits, the WinEndR field occupies 12 bits, and the WinSizeR field occupies 10 bits.

The MLD role field indicates the role of the MLD (in which the block acknowledgement agreement context described by the single block acknowledgement agreement context parameter set is located) within the block acknowledgement agreement. Exemplarily, when the value of the MLD role field is 0, it indicates that the MLD in which the block acknowledgement agreement context described by the single block acknowledgement agreement context parameter set is located plays the role of the originator MLD within the block acknowledgement agreement; and when the value of the MLD role field is 1, it indicates that the MLD in which the block acknowledgement agreement context described by the single block acknowledgement agreement context parameter set is located plays the role of the recipient MLD within the block acknowledgement agreement. Alternatively, when the value of the MLD role field is 1, it indicates that the MLD in which the block acknowledgement agreement context described by the single block acknowledgement agreement context parameter set is located plays the role of the originator MLD within the block acknowledgement agreement; and when the value of the MLD role field is 0, it indicates that the MLD in which the block acknowledgement agreement context described by the single block acknowledgement agreement context parameter set is located plays the role of the recipient MLD within the block acknowledgement agreement.

When the MLD in which the block acknowledgement agreement context is located is an originator role, the single block acknowledgement agreement context parameter set format is illustrated in FIG. 14, and when the MLD in which the block acknowledgement agreement context is located is a recipient role, the single block acknowledgement agreement context parameter set format is illustrated in FIG. 15.

The peer MLD field indicates the MAC address of the peer MLD for which the block acknowledgement agreement context described by the single block acknowledgement agreement context parameter set field is used.

The block acknowledgement parameter set field indicates the parameter set related to the established block acknowledgement agreement corresponding to the block acknowledgement agreement context described by the single block acknowledgement agreement context parameter set field.

The block acknowledgement timeout field contains a duration in units of time units (TUs) (1024 microseconds). If no frame exchange sequence occurs using the block acknowledgement agreement within the duration, the block acknowledgement agreement shall be terminated after the duration. This field is set to 0, indicating that the timeout is disabled.

The WinStartO field is a transmit buffer control parameter for indicating the starting sequence number of the transmit window.

In some embodiments, the block acknowledgement parameter set includes at least one of: indication information indicating whether an aggregated MSDU is supported; a block acknowledgement policy; a TID; or a buffer size.

For the block acknowledgement parameter set field, FIG. 16 illustrates a schematic diagram of a block acknowledgement parameter set field format provided by an exemplary embodiment of the present disclosure. The block acknowledgement parameter set field includes at least one of: an aggregated MSDU (A-MSDU) supported field, a block acknowledgement policy field, a TID field, or a buffer size field.

Here, the A-MSDU supported field occupies 1 bit, the block acknowledgement policy field occupies 1 bit, the TID field occupies 4 bits, and the buffer size field occupies 10 bits.

The WinSizeO field is a transmit buffer control parameter, for indicating the buffer size of the transmit window negotiated in the block acknowledgement agreement. Here, the WinSizeO field indicates the number of buffers available for the specified TID. When the A-MSDU supported field is equal to 0, the number of bytes that each buffer can accommodate is equal to the maximum size of an MSDU. When the STA's supported A-MSDU field is equal to 1, the number of bytes that each buffer can accommodate is equal to the maximum size of an A-MSDU supported by the STA.

The WinStartB field is a receive reordering buffer control parameter, for indicating the sequence number field value of the first MSDU or A-MSDU (in ascending sequence number order) that has not yet been received.

The WinSizeB field is a receive reordering buffer control parameter, for indicating the size of the receive window.

The WinStartR field is a scoreboard context control parameter, which is a 12-bit unsigned integer that represents the starting sequence number, for indicating the lowest sequence number position in the block acknowledgement record bitmap (indexed by sequence number).

The WinEndR field indicates the highest sequence number of the current transmission window.

The WinSizeR field is a scoreboard context control parameter, for indicating the maximum transmission window size, which is set to the smaller value between the length of the bitmap and the value of the buffer size field in the relevant response frame that established the block acknowledgement agreement.

The block acknowledgment agreement context element format, the block acknowledgment agreement context parameter control field format, the block acknowledgment agreement context parameter set list field format, the single block acknowledgment agreement context parameter set field format, and the block acknowledgment parameter set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

### Security association context element

In some embodiments, the security association context may also be described as a security association scenario, which is information maintained for the security association process.

In some embodiment, the security association context element contains the PN configuration and PN counter state information at the transmitting end and/or the replay detection context and replay counter state information at the receiving end that the specified MLD has established and maintained with one or more peer MLDs for security association-related data encryption/decryption and/or integrity protection and verification. FIG. 17 is a schematic diagram of a security association context element format provided by an exemplary embodiment of the present disclosure. The security association context element format includes at least one of: an element ID field, a length field, an element ID extension field, a security association (SA) context parameters control field, or a security association context parameters set list field.

Here, the element ID field occupies 1 byte, the length field occupies 1 byte, the element ID extension field occupies 1 byte, the security association context parameters control field occupies 9 or 15 bytes, and the security association context parameters set list field occupies the variable number of bytes.

In some embodiments, the security association context element includes a security association context parameters control field for indicating at least one of: a device in which the security association context element is located; whether the device in which the security association context element is located and the non-AP MLD for which the security association context is used are the same device; the non-AP MLD for which the security association context is used, when the device in which the security association context element is located and the non-AP MLD for which the security association context is used are the same device; or the number of security association context parameter sets included in the security association context element.

In some embodiments, the device in which the security association context element is located is the current AP MLD.

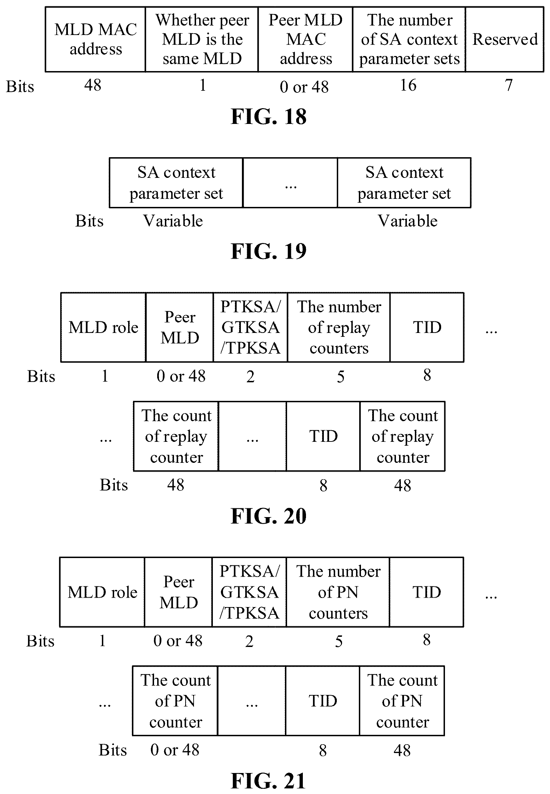

For the security association context parameters control field, FIG. 18 illustrates a schematic diagram of a security association context parameters control field format provided by an exemplary embodiment of the present disclosure. The security association context parameters control field includes at least one of: an MLD MAC address field, a "whether peer MLD is the same MLD" field, a peer MLD MAC address field, a "the number of security association context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of security association context parameter sets" field occupies 16 bits, and the reserved field occupies 7 bits.

In some embodiments, the security association context element includes a security association context parameters set list field, including at least one security association context parameters set subfield, where one security association context parameters set subfield is used for indicating one security association context parameters set.

In some embodiments, the security association context parameters set subfield is used to indicate at least one of: a role of a device where the security association context is located within the security association context; the non-AP MLD for which the security association context is used; or a security association type of the security association context.

For the security association context parameter set list field, FIG. 19 illustrates a schematic diagram of a security association context parameters set list field format provided by an exemplary embodiment of the present disclosure. The security association context parameters set list field includes at least one of: one or more security association context parameters set fields.

Here, the number of bits occupied by the security association context parameters set field is variable.

In some embodiments, if the security association context parameters set subfield is used to indicate that the role of the device where the security association context is located within the security association context is an originator, the security association context parameters set subfield is further used to indicate at least one of: the number of replay counters; a TID; or the count of the replay counter for the TID.

In some embodiments, if the security association context parameters set subfield is used to indicate that the role of the device where the security association context is located within the security association context is a recipient, the security association context parameters set subfield is further used to indicate at least one of: the number of packet number (PN) counters; a TID; or the count of the packet number counter for the TID.

For the security association context parameters set field, in the case where the MLD in which the security association context described by the security association context parameters set field is located is a recipient MLD role, FIG. 20 illustrates a diagram of a security association context parameters set field format provided by an exemplary embodiment of the present disclosure. The security association context parameters set field includes at least one of: an MLD role field, a peer MLD field, a "PTKSA/group temporal key security association (GTKSA)/tunneled direct link setup peer Key security association (TPKSA)" field, a "the number of replay counters" field, one or more TID fields, or one or more "the count of replay counter" fields.

Here, the MLD role field occupies 1 bit, the peer MLD field occupies 0 or 48 bits, the "PTKSA/GTKSA/TPKSA" field occupies 2 bits, the "the number of replay counters" field occupies 5 bits, the TID field occupies 8 bits, and the "the count of replay counter" field occupies 48 bits.

In the case where the MLD in which the security association context described by the security association context parameters set field is located is an originator MLD role, FIG. 21 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of PN counters" field, one or more TID fields, or one or more "the count of the PN counter" fields.

Here, the MLD role field occupies 1 bit, the peer MLD field occupies 0 or 48 bits, the "PTKSA/GTKSA/TPKSA" field occupies 2 bits, the "the number of PN counters" field occupies 5 bits, the TID field occupies 8 bits, the middle "the count of the PN counter" field occupies 0 or 48 bits, and the last "the count of the PN counter" field occupies 48 bits.

The MLD role field indicates the role of the MLD (in which the security association context described by the security association context parameters set field is located) within the security association context. For example, when the value of the MLD role field is 0, it indicates that the MLD in which the security association context described by the security association context parameters set field is located plays the role of a recipient MLD, that is, what is described is the replay context parameter set at the receiving end; and when the value of the MLD role field is 1, it indicates that the MLD in which the security association context described by the security association context parameters set field is located plays the role of an originator MLD, that is, what is described is the PN counter context parameter set at the transmitting end. Alternatively, when the value of the MLD role field is 1, it indicates that the MLD in which the security association context described by the security association context parameters set field is located plays the role of a recipient MLD; and when the value of the MLD role field is 0, it indicates that the MLD in which the security association context described by the security association context parameters set field is located plays the role of an originator MLD.

The "PTKSA/GTKSA/TPKSA" field indicates the type of security association corresponding to the replay context described by the replay context parameter set field, as illustrated in Table 4. For example, when the value of the "PTKSA/GTKSA/TPKSA" field is 0, meaning PTKSA, in this case, the replay count value field in the replay context parameter set field is the PTKSA replay count value correspondingly.

**Table 4**

| Field values | Meaning |
|---|---|
| 0 | PTKSA |
| 1 | GTKSA |
| 2 | TPKSA |
| 3 | Reserve |

The block acknowledgement agreement context element format, the security association context parameters control field format, the security association context parameters set list field format, and the security association context parameters set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

In some embodiments, the second frame further includes third indication information for indicating that the context information includes information of a block acknowledgement agreement context and/or a security association context.

In some embodiments, the two AP MLDs belong to the same mobility domain MLD, at least one of the request frame or the response frame further includes: first indication information for indicating the mobility domain MLD.

In some embodiments, the transition is based on FT, at least one of the request frame or the response frame further includes: second indication information for indicating whether FT between the two AP MLDs affiliated with the same mobility domain MLD is supported or allowed. Exemplarily, the second indication information is referred to as the "FTinMobileDomainMLD" field, where when the value of this field is 1, it indicates that FT is supported or allowed between the two AP MLDs affiliated with the same mobility domain MLD; and when the value of this field is 0, it indicates that FT is not supported or allowed between the two AP MLDs affiliated with the same mobility domain MLD.

In some embodiments, the two AP MLDs include a current AP MLD and a target AP MLD.

The request frame is transmitted to the current AP MLD, and then transmitted by the current AP MLD to the target AP MLD.

The response frame is transmitted by the target AP MLD to the current AP MLD, and then fed back by the current AP MLD.

In some embodiments, the transition is based on FT, the request frame is an FT confirm frame and the response frame is an FT Ack frame.

The non-AP MLD transmits the FT confirm frame to the target AP MLD through the current AP MLD, and then the target AP MLD transmits the FT Ack frame to the non-AP MLD through the current AP MLD. The FT confirm frame includes at least one of: non-AP MLD information, target AP MLD information, MDE, block acknowledgement agreement context element, security association context element, or basic multi-link element. The FT Ack frame includes at least one of: non-AP MLD information, target AP MLD information, MDE, timeout interval element, block acknowledgement agreement context element, security association context element, or basic multi-link element.

Here, the FT confirm frame and the FT Ack frame carry the block acknowledgement agreement context element and the security association context element, indicating relevant block acknowledgement agreement context (or state) information and security association context (or state) information.

In some embodiments, the two AP MLDs belong to the same mobility domain MLD, the method further includes that: an FT request frame is transmitted; and an FT response frame is received.

When the non-AP MLD determines that it needs to transition from the current AP MLD to the target AP MLD in the mobility domain MLD scenario, the non-AP MLD transmits the FT request frame to the target AP MLD through the current AP MLD, and then the target AP MLD transmits the FT response frame to the non-AP MLD through the current AP MLD. The FT request frame includes at least one of: non-AP MLD information, target AP MLD information, MDE, or basic multi-link element. The FT response frame includes at least one of: non-AP MLD information, target AP MLD information, MDE, or basic multi-link element.

Here, the FT request frame and the FT response frame carry the MDE (the "FTinMobileDomainMLD" field, the mobility domain MLD information field), indicating that FT between the two AP MLDs affiliated with the same mobility domain MLD is supported or allowed.

In some embodiments, the method further includes: an association request frame is transmitted; and an association response frame is received.

The non-AP MLD transmits the association request frame or the re-association request frame to the current AP MLD, and then the current AP MLD feeds back the association response frame or the re-association response frame to the non-AP MLD.

The association request frame or the re-association request frame transmitted by the non-AP MLD to the current AP MLD includes: mobility domain element (MDE), basic multi-link element.

The association response frame or the re-association response frame transmitted by the current AP MLD to the non-AP MLD includes: mobility domain element (MDE), basic multi-link element.

Here, the association request frame or the re-association request frame carries the MDE (the "FTinMobileDomainMLD" field, the mobility domain MLD information field), indicating that the non-AP MLD is to perform association with an AP MLD in the mobility domain MLD scenario (or the non-AP MLD is to be associated with the AP MLD affiliated with the mobility domain MLD), and indicating that FT between the two AP MLDs affiliated with the same mobility domain MLD is supported or allowed.

In some embodiments, the transition is based on FT, and the link reconfiguration is performed in a case where a first duration is less than or equal to a deadline time of the link reconfiguration.

Here, the first duration represents a duration between a transmission time of the FT request frame and a transmission time of the link reconfiguration request frame, and the first frame includes the link reconfiguration request frame.

In some embodiments, the method further includes that fourth indication information is transmitted, where the fourth indication information is used for indicating a deadline time or a timeout time of the link reconfiguration.

By way of example, the fourth indication information is referred to as a timeout interval element (TIE) for specifying a time interval and the timeout time.

In some embodiments, the fourth indication information performs indication using a start time and a timeout interval, or, the fourth instruction information performs indication using the deadline time.

In some embodiments, the start time is implicitly represented by a transmission time or a reception time of the fourth indication information. The timeout interval is explicitly indicated by the fourth indication information.

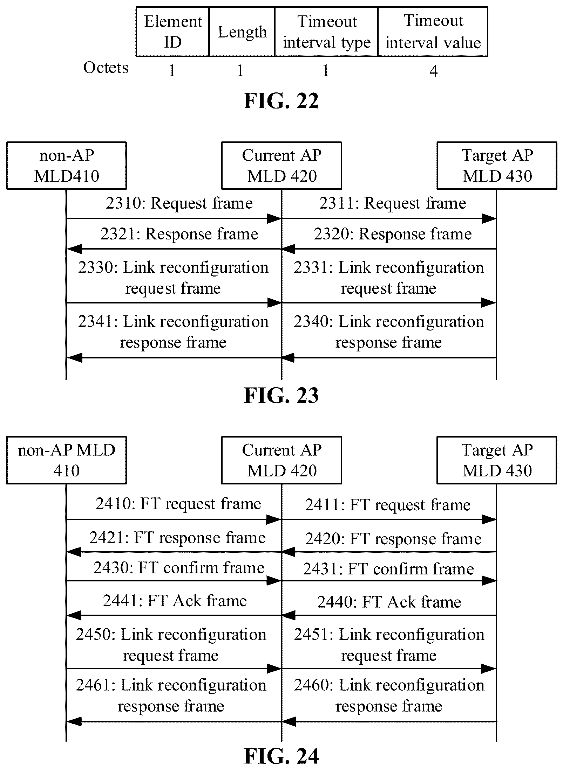

In the embodiments of the present disclosure, a timeout interval type value corresponding to the link reconfiguration deadline interval is added to the timeout interval type field of the timeout interval element, and is used to indicate that the timeout interval value field represents the link reconfiguration deadline interval. FIG. 22 is a schematic diagram of a timeout interval element format provided by an exemplary embodiment of the present disclosure. The timeout interval element format includes at least one of: an element ID field, a length field, a timeout interval type field, and a timeout interval value field.

Here, the element ID field occupies 1 byte, the length field occupies 1 byte, the timeout interval type field occupies 1 byte, and the timeout interval value field occupies 4 bytes.

The above-described timeout interval element format is an exemplary possible case. Under different embodiments or different designs, it is not excluded that at least one of the following designs may vary: the position of the timeout interval element in the frame, the arrangement order between the timeout interval element and other fields, the number of bytes occupied, or the element name. This embodiment is not limited thereto.

The timeout interval value field contains a 32-bit unsigned integer, where the link reconfiguration deadline interval may be set to 0, to indicate the absence of the deadline time. The definition of the timeout interval type field is illustrated in Table 5.

**Table 5**

| Timeout Interval Type | Meaning | Units |
|---|---|---|
| 0 | Reserved | |
| 1 | Reassociation deadline interval | Time units |
| 2 | Key lifetime interval | seconds |
| 3 | Association comeback time | Time units |
| 4 | Time-to-Start | Time units |
| 5 | Peer-to-peer target wake time (TWT) agreement lifetime | Time units |
| 6 | Link reconfiguration deadline interval | Time units |
| 7-255 | Reserved | |

In summary, by transmitting and/or receiving at least one first frame, where the at least one first frame is used to enable transition between two AP MLDs at different positions based on link reconfiguration, the method provided by the present embodiment optimizes a link reconfiguration protocol between the two AP MLDs at different positions, and realizes the transition of the non-AP MLD between the two AP MLDs during communication.

By replication or migration of the block acknowledgement agreement context and the security association context, the method provided by the present embodiment also eliminates the duration of data connectivity loss between the non-AP MLD and the two AP MLDs and maintains data continuity between the non-AP MLD and the two AP MLDs. Here, the block acknowledgement agreement context ensures the connectivity of data transmission, and the security association context obviates the need for key re-agreement after transition by bypassing the key agreement process.

FIG. 23 illustrates a flowchart of a transition method according to an exemplary embodiment of the present disclosure. The method is performed by a non-AP MLD 410, a current AP MLD 420, and a target AP MLD 430, and the method includes operation 2310 to 2341.

Operation 2310: the non-AP MLD 410 transmits a request frame to the current AP MLD 420.

Here, the request frame is used to indicate that the non-AP MLD 410 requests synchronization of context information related to the non-AP MLD 410 between the current AP MLD 420 and the target AP MLD 430.

In some embodiments, the context information includes at least one of: first context information related to a block acknowledgement agreement context; or second context information related to the security association context.

In some embodiments, the first context information is carried in a block acknowledgement agreement context element.

In some embodiments, the second context information is carried in a security association context element.

For details, the reference may be made to the descriptions of the block acknowledgement agreement context element and the security association context element in the embodiment of FIG. 5, which will not be described herein.

In some embodiments, the current AP MLD 420 and the target AP MLD 430 belong to the same mobility domain MLD, and at least one of the request frame or the response frame further includes first indication information for indicating the mobility domain MLD.

In some embodiments, the first indication information includes at least one of: a mobility domain MLD ID; or a mobility domain MLD MAC address.

Exemplarily, the first indication information is called a mobility domain element (MDE), which is used to indicate that link reconfiguration is performed in a mobility domain MLD scenario, and carries information such as mobility domain MLD information (e.g., mobility domain MLD ID or MAC address of the mobility domain MLD), whether the FT is in the same mobility domain MLD (i.e., FTinMobileDomainMLD), and/or the like. The AP MLD may use the MDE to advertise that the AP MLD is included in or affiliated with the mobility domain MLD, and advertise the AP MLD's support for FT functions and FT policy information, including whether FT between the two AP MLDs affiliated with the same mobility domain MLD is supported or allowed.

Operation 2311: the current AP MLD 420 transmits a request frame to the target AP MLD 430.

For detail, the reference may be made to the request frame in operation 2310, which will not be repeated here.

Operation 2320: the target AP MLD 430 transmits a response frame to the current AP MLD 420.

Here, the response frame is used to provide feedback to the non-AP MLD 410 regarding the synchronization of the context information related to the non-AP MLD 410 between the current AP MLD 420 and the target AP MLD 430.

Operation 2321: the current AP MLD 420 transmits a response frame to the non-AP MLD 410.

For details, the reference may be made to the response frame in the operation 2320, which will not be repeated here.

Operation 2330: the non-AP MLD 410 transmits a link reconfiguration request frame to the current AP MLD 420.

Operation 2331: the current AP MLD 420 transmits a link reconfiguration request frame to the target AP MLD 430.

Operation 2340: the target AP MLD 430 transmits a link reconfiguration response frame to the current AP MLD 420.

Operation 2341: the current AP MLD 420 transmits a link reconfiguration response frame to the non-AP MLD 410.

For the operations 2330 to 2341, the reference may be made to the operations 401 to 404 of the embodiment of FIG. 4, which will not be repeated here.

In this embodiment, the operations 2310 to 2321 are optional. In different embodiments, these operations may be omitted or replaced, for example, the operations 2310 to 2321 are omitted and the method is performed starting from the operation 2330.

The operations 2310 to 2321 may be implemented as an independent embodiment, the operations 2330 to 2341 may be implemented as an independent embodiment, the operations 2310 and 2311 may be implemented as an independent embodiment, the operations 2320 and 2321 may be implemented as an independent embodiment, the operations 2330 and 2331 may be implemented as an independent embodiment, and the operations 2340 and 2341 may be implemented as an independent embodiment, but the embodiments of the present disclosure are not limited thereto.

The operation 2310 may be implemented as an independent embodiment, for example, separately implemented as a method of transmitting a request frame.

The operation 2311 may be implemented as an independent embodiment, for example, separately implemented as a method of transmitting a request frame.

The operation 2320 may be implemented as an independent embodiment, for example, separately implemented as a method of transmitting a response frame.

The operation 2321 may be implemented as an independent embodiment, for example, separately implemented as a method of transmitting a response frame.

The operation 2330 may be implemented as an independent embodiment, for example, separately implemented as a method of transmitting a link reconfiguration request frame.

The operation 2331 may be implemented as an independent embodiment, for example, separately implemented as a method of transmitting a link reconfiguration request frame.

The operation 2340 may be implemented as an independent embodiment, for example, separately implemented as a method of transmitting a link reconfiguration response frame.

The operation 2341 may be implemented as an independent embodiment, for example, separately implemented as a method of transmitting a link reconfiguration response frame.

In summary, by transmitting and/or receiving the link reconfiguration request frame and the link reconfiguration response frame, where the link reconfiguration request frame and the link reconfiguration response frame are used to enable transition between the current AP MLD and the target AP MLD at different positions based on link reconfiguration, the method provided by the present embodiment optimizes a link reconfiguration protocol between the current AP MLD and the target AP MLD at different positions, and realizes the transition of the non-AP MLD between the current AP MLD and the target AP MLD during communication.

By transmitting the request frame to indicate replication or migration of the block acknowledgement agreement context and the security association context, the method provided by the present embodiment also eliminates the duration of data connectivity loss between the non-AP MLD and the current and target AP MLDs and maintains data continuity between the non-AP MLD and the current and target AP MLDs. Here, the block acknowledgement agreement context ensures the connectivity of data transmission, and the security association context eliminates the need for key re-agreement after transition by bypassing the key agreement process.

FIG. 24 illustrates a flowchart of a transition method provided by an exemplary embodiment of the present disclosure. The method is performed by a non-AP MLD 410, a current AP MLD 420, and a target AP MLD 430, and the method includes operations 2410 to 2461.

Operation 2410: the non-AP MLD 410 transmits an FT request frame to the current AP MLD 420.

In some embodiments, the FT request frame includes at least one of: non-AP MLD information, target AP MLD information, an MDE, or a basic multi-link element.

In some embodiments, the current AP MLD 420 and the target AP MLD 430 belong to the same mobility domain MLD, and the FT request frame further includes first indication information for indicating the mobility domain MLD.

In some embodiments, the FT request frame further includes second indication information for indicating whether FT between the current AP MLD 420 and the target AP MLD 430 affiliated with the same mobility domain MLD is supported or allowed.

Here, the FT request frame carries an MDE (the FTinMobileDomainMLD field, the mobility domain MLD information field), indicating that FT between the current AP MLD 420 and the target AP MLD 430 affiliated with the same mobility domain MLD is supported or allowed.

Operation 2411: the current AP MLD 420 transmits an FT request frame to the target AP MLD 430.

For details, the reference may be made to the FT request frame in the operation 2410, which will not be described herein.

Operation 2420: the target AP MLD 430 transmits an FT response frame to the current AP MLD 420.

In some embodiments, the FT response frame includes at least one of: non-AP MLD information, target AP MLD information, an MDE, or a basic multi-link element.

In some embodiments, the current AP MLD 420 and the target AP MLD 430 belong to the same mobility domain MLD, and the FT response frame further includes first indication information for indicating the mobility domain MLD.

In some embodiments, the FT response frame further includes second indication information for indicating whether FT between the current AP MLD 420 and the target AP MLD 430 affiliated with the same mobility domain MLD is supported or allowed.

Here, the FT response frame carries an MDE (the FTinMobileDomainMLD field, the mobility domain MLD information field), indicating that FT between the current AP MLD 420 and the target AP MLD 430 affiliated with the same mobility domain MLD is supported or allowed.

Operation 2421: the current AP MLD 420 transmits an FT response frame to the non-AP MLD 410.

For details, the reference may be made to the FT response frame in the operation 2420, which will not be described herein.

Operation 2430: the non-AP MLD 410 transmits an FT confirm frame to the current AP MLD 420.

In some embodiments, the transition is based on FT, and the FT confirm frame includes at least one of: non-AP MLD information, target AP MLD information, an MDE, a block acknowledgement agreement context element, a security association context element, or a basic multi-link element.

Here, the FT confirm frame carries the block acknowledgement agreement context element and the security association context element, indicating relevant block acknowledgement agreement context (or state) information and the security association context (or state) information.

Operation 2431: the current AP MLD 420 transmits an FT confirm frame to the target AP MLD 430.

For details, the reference may be made to the FT confirm frame in the operation 2430, which will not be described herein.

Operation 2440: the target AP MLD 430 transmits an FT Ack frame to the current AP MLD 420.

In some embodiments, the transition is based on FT, and the FT Ack frame includes at least one of: non-AP MLD information, target AP MLD information, an MDE, a timeout interval element, a block acknowledgement agreement context element, a security association context element, or a basic multi-link element.

Here, the FT Ack frame carries the block acknowledgement agreement context element and the security association context element, indicating relevant block acknowledgement agreement context (or state) information and security association context (or state) information.

Operation 2441: the current AP MLD 420 transmits an FT Ack frame to the non-AP MLD 410.

For details, the reference may be made to the FT Ack frame in the operation 2440, which will not be described herein.

For the operations 2430 to 2441, the reference may be made to the operations 2310 to 2321 of the embodiment of FIG. 23, which are not repeated here.

Operation 2450: the non-AP MLD 410 transmits a link reconfiguration request frame to the current AP MLD 420.

Operation 2451: the current AP MLD 420 transmits a link reconfiguration request frame to the target AP MLD 430.

Operation 2460: the target AP MLD 430 transmits a link reconfiguration response frame to the current AP MLD 420.

Operation 2461: the current AP MLD 420 transmits a link reconfiguration response frame to the non-AP MLD 410.

For the operations 2450 to 2461, the reference may be made to the operations 401 to 404 of the embodiment of FIG. 4, which will not be repeated herein.

In this embodiment, the operations 2410 to 2421 are optional, and the operations 2430 to 2441 are optional. In different embodiments, these operations may be omitted or replaced, for example, the operations 2410 to 2441 are omitted and the method is performed starting from the operation 2450.

The operations 2410 to 2421 may be implemented as an independent embodiment, the operations 2430 to 2441 may be implemented as an independent embodiment, and the operations 2450 to 2461 may be implemented as an independent embodiment, but the embodiments of the present disclosure are not limited thereto.

The operation 2410 may be implemented as an independent embodiment, for example, separately implemented as a method of transmitting an FT request frame.

The operation 2411 may be implemented as an independent embodiment, for example, separately implemented as a method of transmitting an FT request frame.

The operation 2420 may be implemented as an independent embodiment, for example, separately implemented as a method of transmitting an FT response frame.

The operation 2421 may be implemented as an independent embodiment, for example, separately implemented as a method of transmitting an FT response frame.

The operation 2430 may be implemented as an independent embodiment, for example, separately implemented as a method of transmitting an FT confirm frame.

The operation 2431 may be implemented as an independent embodiment, for example, separately implemented as a method of transmitting an FT confirm frame.

The operation 2440 may be implemented as an independent embodiment, for example, separately implemented as a method of transmitting an FT Ack frame.

The operation 2441 may be implemented as an independent embodiment, for example, separately implemented as a method of transmitting an FT Ack frame.

The operation 2450 may be implemented as an independent embodiment, for example, separately implemented as a method of transmitting a link reconfiguration request frame.

The operation 2451 may be implemented as an independent embodiment, for example, separately implemented as a method of transmitting a link reconfiguration request frame.

The operation 2460 may be implemented as an independent embodiment, for example, separately implemented as a method of transmitting a link reconfiguration response frame.

The operation 2461 may be implemented as an independent embodiment, for example, separately implemented as a method of transmitting a link reconfiguration response frame.

In summary, by transmitting and/or receiving the link reconfiguration request frame and the link reconfiguration response frame, where the link reconfiguration request frame and the link reconfiguration response frame are used to enable transition between the current AP MLD and the target AP MLD at different positions based on link reconfiguration, the method provided by the present embodiment optimizes a link reconfiguration protocol between the current AP MLD and the target AP MLD at different positions, and realizes the transition of the non-AP MLD between the current AP MLD and the target AP MLD during communication.

By transmitting the FT confirm frame to indicate replication or migration of the block acknowledgement agreement context and the security association context, the method provided by the present embodiment also eliminates the duration of data connectivity loss between the non-AP MLD and the current and target AP MLDs and maintains data continuity between the non-AP MLD and the current and target AP MLDs. Here, the block acknowledgement agreement context ensures the connectivity of data transmission, and the security association context eliminates the need for key re-agreement after transition by bypassing the key agreement process.

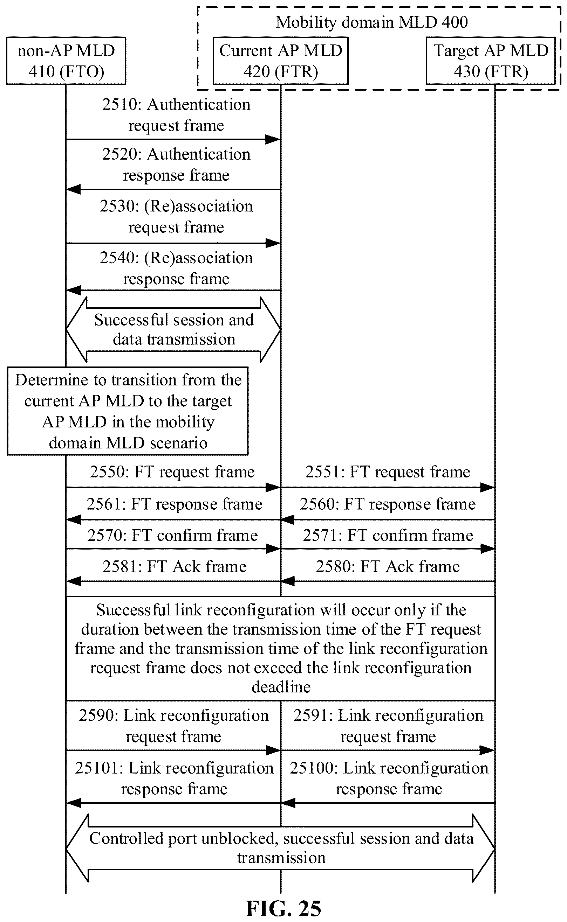

FIG. 25 illustrates a flowchart of a transition method provided by an exemplary embodiment of the present disclosure. The method is performed by a non-AP MLD 410, a current AP MLD 420, and a target AP MLD 430, where the non-AP MLD 410 is an FT originator (FTO), the current AP MLD 420 and the target AP MLD 430 are FT responders (FTR), and the current AP MLD 420 and the target AP MLD 430 belong to the same mobility domain MLD 400. The method includes operations 2510 to 25101.

Operation 2510: the non-AP MLD 410 transmits an authentication request frame to the current AP MLD 420.

In the case where the non-AP MLD 410 determines that data information needs to be transmitted to the current AP MLD 420, the operation 2510 is performed.

The authentication request frame is an authentication frame with the value of the authentication transaction sequence number field being 1.

Operation 2520: the current AP MLD 420 transmits an authentication response frame to the non-AP MLD 410.

When the authentication request frame transmitted by the non-AP MLD 410 is received, the current AP MLD 420 feeds back an authentication response frame. The authentication response frame is an authentication frame with the value of the authentication transaction sequence number field being 2.

Operation 2530: the non-AP MLD 410 transmits a (re)association request frame to the current AP MLD 420.

In some embodiments, the non-AP MLD 410 is associated with the current AP MLD 420 and performs a mobility domain MLD scenario association or an FT initial mobility domain MLD scenario association.

When the association request frame is transmitted for the first time, or when the duration between the authentication request frame and the re-association request frame exceeds the re-association deadline, the association is successfully performed.

When the duration between the authentication request frame and the re-association request frame does not exceed the re-association deadline, the re-association is successfully performed.

The (re)association request frame includes at least one of: an MDE (the FTinMobileDomainMLD field, the mobility domain MLD information field), or a basic multi-link element. The (re)association request frame carries the MDE, indicating that the non-AP MLD 410 is to perform association with an AP MLD in a mobility domain MLD 400 scenario (or the non-AP MLD 410 is to be associated with the AP MLD affiliated with the mobility domain MLD 400), and indicating that FT between the current AP MLD 420 and the target AP MLD 430 affiliated with the same mobility domain MLD is supported or allowed.

Operation 2540: the current AP MLD 420 transmits a (re)association response frame to the non-AP MLD 410.

In the case of receiving the (re)association request frame transmitted by the non-AP MLD 410, the current AP MLD 420 feeds back the (re)association response frame.

The (re)association response frame includes at least one of: an MDE (the FTinMobileDomainMLD field, the mobility domain MLD information field), or a basic multi-link element.

Operation 2550: the non-AP MLD 410 transmits an FT request frame to the current AP MLD 420.

Operation 2551: the current AP MLD 420 transmits an FT request frame to the target AP MLD 430.

Operation 2560: the target AP MLD 430 transmits an FT response frame to the current AP MLD 420.

Operation 2561: the current AP MLD 420 transmits an FT response frame to the non-AP MLD 410.

In some embodiments, the non-AP MLD 410 initiates an FT procedure from the current AP MLD 420 to the target AP MLD 430 in the mobility domain MLD scenario.

For the operations 2550 to 2561, the reference may be made to the operations 2410 to 2421 of the embodiment of FIG. 24, which are not repeated here.

Operation 2570: the non-AP MLD 410 transmits an FT confirm frame to the current AP MLD 420.

In some embodiments, for the non-AP MLD 410, replication or migration of the mobility domain MLD contexts, states, and/or all or part of the contexts, states, buffers of the corresponding affiliated MLDs of the mobility domain MLD is performed from the current AP MLD 420 to the target AP MLD 430.

In some embodiments, the FT confirm frame includes at least one of: non-AP MLD information, target AP MLD information, an MDE, a block acknowledgement agreement context element, a security association context element, or a basic multi-link element.

Here, the FT confirm frame carries the block acknowledgement agreement context element and the security association context element, indicating relevant block acknowledgement agreement context (or state) information and security association context (or state) information.

In some embodiments, the FT confirm frame is used in requesting synchronization of a block acknowledgement agreement context and a security association context. The block acknowledgement agreement context is used in ensuring connectivity of data transmission, and the security association context is used in eliminating the need for the key re-agreement after transition by bypassing the key agreement process.

Operation 2571: the current AP MLD 420 transmits an FT confirm frame to the target AP MLD 430.

In some embodiments, after receiving the FT confirm frame transmitted by the non-AP MLD 410, the current AP MLD 420 adds information related to the block acknowledgement agreement context and information related to the security association context into the block acknowledgement agreement context element and the security association context element based on the request of the FT confirm frame, for transmitting to the target AP MLD 430, thereby replicating or migrating the block acknowledgement agreement context and the security association context to the target AP MLD 430.

Operation 2580: the target AP MLD 430 transmits an FT Ack frame to the current AP MLD 420.

In some embodiments, after receiving the FT confirm frame, the target AP MLD 430 replicates or migrates the block acknowledgement agreement context and the security association context.

In some embodiments, the target AP MLD 430 generates an FT Ack frame, where the block acknowledgement agreement context element in the FT Ack frame provides feedback on whether the replication result or migration result of the block acknowledgement agreement context is successful, and the security association context element in the FT Ack frame provides feedback on whether the replication result or migration result of the security association context is successful.

Operation 2581: the current AP MLD 420 transmits an FT Ack frame to the non-AP MLD 410.

In some embodiments, the FT Ack frame indicates that the replication results or migration results of the block acknowledgement agreement context and the security association context are completely successful, and the current AP MLD 420 transmits the FT Ack frame to the non-AP MLD 410.

In some embodiments, the FT Ack frame indicates that the replication results or migration results of the block acknowledgement agreement context and the security association context are partially unsuccessful or completely unsuccessful, the target AP MLD 430 re-transmits an FT Ack frame to the current AP MLD 420 until the replication results or migration results are completely successful.

Operation 2590: the non-AP MLD 410 transmits a link reconfiguration request frame to the current AP MLD 420.

Successful link reconfiguration will occur only if the duration between the transmission time of the FT Request frame and the transmission time of the link reconfiguration request frame does not exceed the link reconfiguration deadline.

In some embodiments, the non-AP MLD 410 performs the link reconfiguration with the current AP MLD 420 and the target AP MLD 430 affiliated with the mobility domain MLD in the mobility domain MLD scenario.

In some embodiments, the link reconfiguration request frame includes at least one of: an MDE (the FTinMobileDomainMLD field, the mobility domain MLD information field), a reconfiguration multi-link element for the current AP MLD (RME for CurrentAPMLD), a reconfiguration multi-link element for the target AP MLD (RME for TargetAPMLD), an operating channel information (OCI) element, or a TID-to-link mapping element.

Here, the link reconfiguration request frame carries the MDE, indicating that the non-AP MLD requests link reconfiguration, based on the established multi-link, with the current AP MLD and the target AP MLD affiliated with the mobility domain MLD under the mobility domain MLD scenario, i.e., adding new links or deleting links from the established multi-link. Here, for the FT-oriented link reconfiguration, the request entails deleting all established links from the established multi-link of the current AP MLD affiliated with the mobility domain MLD, and establishing one or more new links with the target AP MLD affiliated with the mobility domain MLD.

The link reconfiguration request frame carries the reconfiguration multi-link element (RME for CurrentAPMLD) for the current AP MLD and the reconfiguration multi-link element (RME for TargetAPMLD) for the target AP MLD, respectively for describing reconfiguration multi-link information requested by the non-AP MLD and pertaining to the current AP MLD and reconfiguration multi-link information requested by the non-AP MLD and pertaining to the target AP MLD.

Optionally, the link reconfiguration request frame carries one or two TID-to-link mapping elements providing TID-to-link mapping information, for indicating a request to perform TID-to-link mapping on the link required to be established with the target AP MLD.

Operation 2591: the current AP MLD 420 transmits a link reconfiguration request frame to the target AP MLD 430.

In some embodiments, after receiving the link reconfiguration request frame transmitted by the non-AP MLD 410, the current AP MLD 420 performs link reconfiguration based on the reconfiguration multi-link element (RME for CurrentAPMLD) for the current AP MLD in the link reconfiguration request frame, for example, deleting all links with the non-AP MLD 410.

In some embodiments, after receiving the link reconfiguration request frame transmitted by the current AP MLD 420, the target AP MLD 430 performs link reconfiguration based on the reconfiguration multi-link element (RME for TargetAPMLD) for the target AP MLD in the link reconfiguration request frame, for example, establishing one or more new links.

Operation 25100: the target AP MLD 430 transmits a link reconfiguration response frame to the current AP MLD 420.

In some embodiments, the link reconfiguration response frame includes at least one of: an MDE (the FTinMobileDomainMLD field, the mobility domain MLD information field), a reconfiguration status list for the current AP MLD, a reconfiguration status list for the target AP MLD, group key data, an operating channel information (OCI) element, a basic multi-link element, or a TID-to-link mapping element.

Here, the link reconfiguration response frame carries the MDE, indicating that the link reconfiguration response frame is a response to the link reconfiguration request frame containing the MDE, that is, a response to the request for the link reconfiguration, based on the established multi-link, with the current AP MLD and the target AP MLD affiliated with the mobility domain MLD under the mobility domain MLD scenario.

The link reconfiguration response frame carries link reconfiguration status code information (i.e., the status code field), indicating a status code for the link reconfiguration in the mobility domain MLD scenario.

If the status code indicates "mobility domain link reconfiguration is denied", the link reconfiguration response frame excludes reconfiguration status list information (i.e., the number of reconfiguration status tuples and the reconfiguration status list) for link reconfiguration of the current AP MLD and the target AP MLD.

If the link reconfiguration status code information carried by the link reconfiguration response frame indicates "SUCCESS", the link reconfiguration response frame also carries the reconfiguration status list information for the link reconfiguration of the current AP MLD and the target AP MLD, indicating the number of reconfiguration status tuples in the reconfiguration status list and the reconfiguration status list for the link reconfiguration of the current AP MLD and the target AP MLD. Here, the current AP MLD and the target AP MLD includes, in the link reconfiguration response frame, a reconfiguration status tuple field for each link ID indicated in the Per-STA Profile field of the corresponding link reconfiguration request frame.

Here, for the reconfiguration status information of the current AP MLD, if the current AP MLD accepts the request to delete the link for the link ID, it should set the corresponding status field in the reconfiguration status tuple field to "SUCCESS". For the reconfiguration status information of the target AP MLD, if the target AP MLD accepts the request to add the link for the corresponding link ID, it should the corresponding status field in the reconfiguration status tuple field to "SUCCESS", and the status code field included in the Pre-STA profile field for the link ID in the carried basic multi-link element should indicate "SUCCESS".

The link reconfiguration response frame carries a basic multi-link element for the target AP MLD, for providing Per-STA profiles for one or more affiliated APs of the target AP MLD. If the target AP MLD accepts a link addition request for one or more links, it shall include, in the link reconfiguration response frame, a basic multi-link element containing a Per-STA profile for each of affiliated APs corresponding to the links accepted by the target AP MLD for adding to the non-AP MLD.

If the link reconfiguration status code information carried by the link reconfiguration response frame indicates "SUCCESS", i.e., the target AP MLD accepts the addition request for one or more links, then the current AP MLD and the target AP MLD should include a group key data field in the link reconfiguration response frame. For each link added by the target AP MLD, the current AP MLD and the target AP MLD should contain one MLO GTK KDE, one MLO IGTK KDE, and one MLO BIGTK KDE in the group key data field, for providing the group key, identified by the link ID field, for the link added by the target AP MLD.

Optionally, the link reconfiguration response frame further includes one or two TID-to-link mapping elements or excludes TID-to-link mapping element(s), in response to the received link reconfiguration request frame carrying or not carrying TID-to-link mapping element(s), to indicate a result of TID-to-link mapping on the established link between the non-AP MLD and the target AP MLD. Here, the rule for TID-to-link mapping on the established link between the target AP MLD and the non-AP MLD, and the manner in which the link reconfiguration response frame indicates the mapping result in response to the link reconfiguration request frame carrying or not carrying the TID-to-the link mapping element(s) are consistent with the manner and rule in which the association response frame transmitted by the target AP MLD indicates the mapping result in response to the received association request frame carrying or not carrying the TID-to-the link mapping element(s).

In some embodiments, the target AP MLD 430 generates the link reconfiguration response frame that includes the reconfiguration status list for the target AP MLD, for indicating the link reconfiguration status of the target AP MLD 430, for example, indicating that the target AP MLD 430 successfully added one or more links.

Operation 25101: the current AP MLD 420 transmits a link reconfiguration response frame to the non-AP MLD 410.

In some embodiments, after receiving the link reconfiguration response frame transmitted by the target AP MLD 430, the current AP MLD 420 modifies the reconfiguration status list field for the current AP MLD in the link reconfiguration response frame, where the reconfiguration status list field for the current AP MLD is used to indicate the reconfiguration status of the current AP MLD, for example, modified to indicate successful deletion of all links with the non-AP MLD 410.

In some embodiments, after receiving the link reconfiguration response frame transmitted by the target AP MLD 430, the current AP MLD 420 adds the reconfiguration status list field for the current AP MLD into the link reconfiguration response frame, where the reconfiguration status list field for the current AP MLD is used to indicate the reconfiguration status of the current AP MLD, for example, adding this field and indicating successful deletion of all links with the non-AP MLD 410.

In this embodiment, the operations 2510 to 2540 are optional, the operations 2550 to 2561 are optional, and the operations 2570 to 2581 are optional. In different embodiments, these operations may be omitted or replaced, for example, the operations 2510 to 2581 are omitted and the method is performed starting from the operation 2590.

The operations 2510 to 2540 may be implemented as an independent embodiment, the operations 2550 to 2561 may be implemented as an independent embodiment, the operations 2570 to 2581 may be implemented as an independent embodiment, and the operations 2590 to 25101 may be implemented as an independent embodiment, but the embodiments of the present disclosure are not limited thereto.

The operation 2510 may be implemented as an independent embodiment, for example, separately implemented as a method of transmitting an authentication request frame.

The operation 2520 may be implemented as an independent embodiment, for example, separately implemented as a method of transmitting an authentication response frame.

The operation 2530 may be implemented as an independent embodiment, for example, separately implemented as a method of transmitting a (re)association request frame.

The operation 2540 may be implemented as an independent embodiment, for example, separately implemented as a method of transmitting a (re)association response frame.

The operation 2550 may be implemented as an independent embodiment, for example, separately implemented as a method of transmitting an FT request frame.

The operation 2551 may be implemented as an independent embodiment, for example, separately implemented as a method of transmitting an FT request frame.

The operation 2560 may be implemented as an independent embodiment, for example, separately implemented as a method of transmitting an FT response frame.

The operation 2561 may be implemented as an independent embodiment, for example, separately implemented as a method of transmitting an FT response frame.

The operation 2570 may be implemented as an independent embodiment, for example, separately implemented as a method of transmitting an FT confirm frame.

The operation 2571 may be implemented as an independent embodiment, for example, separately implemented as a method of transmitting an FT confirm frame.

The operation 2580 may be implemented as an independent embodiment, for example, separately implemented as a method of transmitting an FT Ack frame.

The operation 2581 may be implemented as an independent embodiment, for example, separately implemented as a method of transmitting an FT Ack frame.

The operation 2590 may be implemented as an independent embodiment, for example, separately implemented as a method of transmitting a link reconfiguration request frame.

The operation 2591 may be implemented as an independent embodiment, for example, separately implemented as a method of transmitting a link reconfiguration request frame.

The operation 25100 may be implemented as an independent embodiment, for example, separately implemented as a method of transmitting a link reconfiguration response frame.

The operation 25101 may be implemented as an independent embodiment, for example, separately implemented as a method of transmitting a link reconfiguration response frame.

In summary, by transmitting and/or receiving the link reconfiguration request frame and the link reconfiguration response frame, where the link reconfiguration request frame and the link reconfiguration response frame are used to enable transition between the current AP MLD and the target AP MLD at different positions based on link reconfiguration, the method provided by the present embodiment optimizes a link reconfiguration protocol between the current AP MLD and the target AP MLD at different positions, and realizes the transition of the non-AP MLD between the current AP MLD and the target AP MLD during communication.

By transmitting the FT confirm frame to indicate replication or migration of the block acknowledgement agreement context and the security association context, the method provided by the present embodiment also eliminates the duration of data connectivity loss between the non-AP MLD and the current and target AP MLDs and maintains data continuity between the non-AP MLD and the current and target AP MLDs. Here, the block acknowledgement agreement context ensures the connectivity of data transmission, and the security association context eliminates the need for key re-agreement after transition by bypassing the key agreement process.

By repeatedly transmitting the FT confirm frame before the replication result or migration result indicates success, the method provided by the embodiment further ensures successful replication or migration of the context information.

In the above embodiments, the descriptions in the operations 401 to 404 of the embodiment of FIG. 4, the operation 510 of the embodiment of FIG. 5, the operations 2330 to 2341 of the embodiment of FIG. 23, the operations 2450 to 2460 of the embodiment of FIG. 24, and the operations 2590 to 25101 of the embodiment of FIG. 25 may be cross-referenced on a one-to-one correspondence basis.

The descriptions in the operation 510 of the embodiment of FIG. 5, the operations 2310 to 2321 of the embodiment of FIG. 23, the operations 2410 to 2441 of the embodiment of FIG. 24, and the operations 2550 to 2581 of the embodiment of FIG. 25 may be cross-referenced on a one-to-one correspondence basis.

The embodiments of the present disclosure propose link reconfiguration methods for transition of the non-AP MLD from the current AP MLD to the target AP MLD under the mobility domain MLD architecture. By optimizing the link reconfiguration protocol for the collocated AP MLDs (i.e., APs affiliated with the AP MLDs are all at the same location) and utilizing replication, migration or updating of relevant communication contexts and states, the embodiments of the present disclosure maintain data continuity between the STA and the DS or between the non-AP MLD and the DS.
1. Link reconfiguration methods for transition of the non-AP MLD from the current AP MLD to the target AP MLD under the mobility domain MLD architecture are proposed, that is, methods and mechanisms for simultaneous link reconfiguration of the non-AP MLD with both the current and target AP MLDs at different locations under the mobility domain MLD architecture.
2. Definitions and functional updates for FT-oriented link reconfiguration protocol as well as frame types and formats for protocol interaction under the mobility domain MLD architecture are proposed, including updated definitions for reconfiguration request frame and reconfiguration response frame, updated definitions for FT request and response protocol as well as FT resource request and response protocol, and updated definitions for the FT ACK frame.
3. FT-oriented link reconfiguration rules (i.e., FT-oriented rules for maintaining consistency during simultaneous link reconfiguration with both the current AP MLD and the target AP MLD), and related TID-to-link mapping methods and rules are proposed.

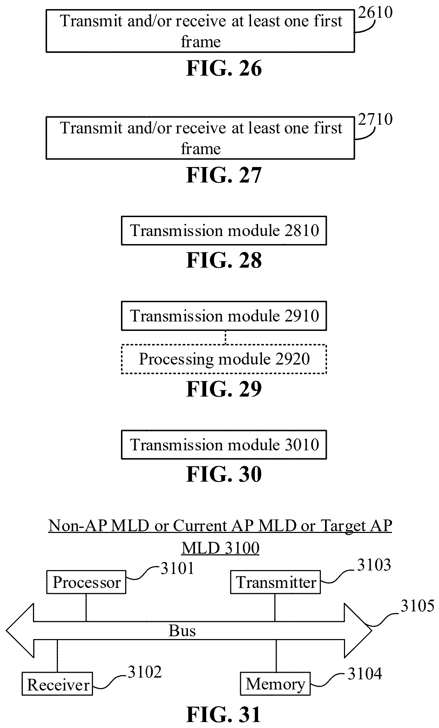

FIG. 26 illustrates a flowchart of a transition method according to an exemplary embodiment of the present disclosure. The method is performed by a current AP MLD, and the method includes operation 2610.

Operation 2610: at least one first frame is transmitted and/or received.

Here, the at least one first frame is used to enable transition of a non-AP MLD between the current AP MLD and a target AP MLD at different locations based on the link reconfiguration.

In some embodiments, the current AP MLD and the target AP MLD belong to the same mobility domain MLD, or the current AP MLD and the target AP MLD belong to the same mobility domain.

In some embodiments, the current AP MLD and the target AP MLD belong to the same mobility domain MLD, and the mobility domain MLD is used for at least one of: providing connection services between any one of the following and a distribution system (DS): the non-AP MLD, or, the current AP MLD and the target AP MLD; maintaining data continuity for the non-AP MLD during the transition between the current AP MLD and the target AP MLD in a roaming process; authentication and/or association or reassociation of the non-AP MLD; security association of the non-AP MLD; distribution of all or part of security association information of the non-AP MLD; synchronization of all or part of state and/or buffer information of upper layers of upper medium access control (MAC) sublayers (Upper-UMAC) of the current AP MLD and the target AP MLD; managing distribution of authentication information of links of the non-AP MLD; managing AP MLD-level association or reassociation between the non-AP MLD and both the current AP MLD and the target AP MLD; for the target AP MLD, selecting a MAC corresponding to the target AP MLD for data transmission; synchronization of first data between the current AP MLD and the target AP MLD, where the first data is used for maintaining data communication between the non-AP MLD and any one of the following: the current AP MLD and the target AP MLD, or, the DS; or exchanging or indicating MLD-level information through MAC sublayers of the current AP MLD and the target AP MLD.

In some embodiments, the at least one first frame are transmitted and/or received, which includes: a link reconfiguration request frame transmitted by the non-AP MLD is received, and the link reconfiguration request frame is transmitted to the target AP MLD, where the link reconfiguration request frame is used to indicate that the non-AP MLD requests link reconfiguration with the current AP MLD and the target AP MLD to perform the transition; and a link reconfiguration response frame transmitted by the target AP MLD is received, and the link reconfiguration response frame is transmitted to the non-AP MLD, where the link reconfiguration response frame is used to provide feedback on the link reconfiguration with the current AP MLD and the target AP MLD to the non-AP MLD.

In some embodiments, the link reconfiguration request frame includes: a first element corresponding to the current AP MLD, for deleting at least one link between the non-AP MLD and the current AP MLD; and a second element corresponding to the target AP MLD, for establishing at least one link between the non-AP MLD and the target AP MLD.

In some embodiments, the first element includes a first reconfiguration multi-link element for describing reconfiguration multi-link information between the non-AP MLD and the current AP MLD; and the second element includes a second reconfiguration multi-link element for describing reconfiguration multi-link information between the non-AP MLD and the target AP MLD.

In some embodiments, the link reconfiguration request frame further includes a first TID-to-link mapping element, for TID-to-link mapping on the link established between the non-AP MLD and the target AP MLD.

In some embodiments, the link reconfiguration response frame includes: a third element corresponding to the current AP MLD, for indicating a link reconfiguration status corresponding to the current AP MLD; and a fourth element corresponding to the target AP MLD, for indicating a link reconfiguration status corresponding to the target AP MLD.

In some embodiments, the third element includes at least one of: a reconfiguration status list for the current AP MLD, including at least one reconfiguration status tuple; or the number of reconfiguration status tuples for the current AP MLD; and the fourth element includes at least one of: a reconfiguration status list for the target AP MLD, including at least one reconfiguration status element; or the number of reconfiguration status tuples of the target AP MLD.

Here, the reconfiguration status element is used to indicate a reconfiguration status of one link.

In some embodiments, the current AP MLD and the target AP MLD belong to the same mobility domain MLD, or the current AP MLD and the target AP MLD belong to the same mobility domain, and the method further includes that: first indication information is transmitted and/or received, where the first indication information is used for indicating the mobility domain MLD.

In some embodiments, the first indication information is carried in at least one of: a link reconfiguration request frame; a link reconfiguration response frame; a request frame; a response frame; a fast basic service set (BSS) transition (FT) request frame; an FT response frame; an FT confirm frame; an FT acknowledgement (Ack) frame; an association request frame; an association response frame; a reassociation request frame; or a reassociation response frame.

Here, the request frame is used to indicate that the non-AP MLD requests replication or migration of context information between the current AP MLD and the target AP MLD, to maintain data connectivity during the transition, and the response frame is used to indicate to the non-AP MLD a result of the replication or migration of the context information between the current AP MLD and the target AP MLD.

In some embodiments, the first indication information includes at least one of: a mobility domain MLD ID; or a mobility domain MLD MAC address.

In some embodiments, the transition is based on FT, the method further includes that: second indication information is transmitted and/or received, where the second indication information is used for indicating whether FT between the current AP MLD and the target AP MLD affiliated with the same mobility domain MLD is supported or allowed.

In some embodiments, the FT between the current AP MLD and the target AP MLD affiliated with the same mobility domain MLD is used for maintaining data connectivity during the transition.

In some embodiments, the second indication information is carried in at least one of: a link reconfiguration request frame; a link reconfiguration response frame; a request frame; a response frame; an FT request frame; an FT response frame; an FT confirm frame; an FT acknowledgement (Ack) frame; an association request frame; an association response frame; a reassociation request frame; or a reassociation response frame.

Here, the request frame is used to indicate that the non-AP MLD requests replication or migration of context information between the current AP MLD and the target AP MLD, to maintain data connectivity during the transition, and the response frame is used to indicate to the non-AP MLD a result of the replication or migration of the context information between the current AP MLD and the target AP MLD.

In some embodiments, the link reconfiguration response frame includes a status code indicating a status code for the link reconfiguration under a mobility domain MLD scenario.

In some embodiments, when a value of the status code is a first value, the status code is used to indicate that the mobility domain link reconfiguration is denied.

In some embodiments, the link reconfiguration response frame includes group key data indicating a group key for a corresponding link successfully added to the target AP MLD.

In some embodiments, the link reconfiguration response frame includes a basic multi-link element, for providing Pre-STA profiles for one or more affiliated APs of the target AP MLD.

In some embodiments, the link reconfiguration response frame includes a second TID-to-link mapping element, for responding to TID-to-link mapping on a link established between the non-AP MLD and the target AP MLD.

In some embodiments, the link reconfiguration request frame is transmitted by the non-AP MLD to the current AP MLD, and then transmitted by the current AP MLD to the target AP MLD.

In some embodiments, the link reconfiguration response frame is transmitted by the target AP MLD to the current AP MLD, and then transmitted by the current AP MLD to the non-AP MLD.

In some embodiments, the method further includes that at least one second frame is transmitted and/or received, where the second frame is used for synchronizing context information related to the non-AP MLD between the current AP MLD and the target AP MLD, and the context information includes at least one of state information or buffer information.

In some embodiments, the at least one second frame is transmitted and/or received, which includes that: a request frame transmitted by the non-AP MLD is received, and the request frame is transmitted to the target AP MLD, where the request frame is used for indicating that the non-AP MLD requests synchronization of the context information related to the non-AP MLD between the current AP MLD and the target AP MLD; and a response frame transmitted by the target AP MLD is received, and the response frame is transmitted to the non-AP MLD, where the response frame is used for providing feedback to the non-AP MLD regarding the synchronization of the context information related to the non-AP MLD between the current AP MLD and the target AP MLD.

In some embodiments, the context information includes at least one of: first context information related to a block acknowledgement agreement context; or second context information related to a security association context.

In some embodiments, the first context information is carried in a block acknowledgement agreement context element.

In some embodiments, the block acknowledgement agreement context element includes a block acknowledgement agreement context parameter control field for indicating at least one of: a device in which the block acknowledgment agreement context element is located; whether the device in which the block acknowledgment agreement context element is located and the non-AP MLD for which the block acknowledgment agreement context is used are the same device; the non-AP MLD for which the block acknowledgment agreement context is used, when the device in which the block acknowledgment agreement context element is located and the non-AP MLD for which the block acknowledgment agreement context is used are the same device; or the number of block acknowledgment agreement context parameter sets included in the block acknowledgment agreement context element.

In some embodiments, the block acknowledgement agreement context element includes a block acknowledgement agreement context parameter set list field, including at least one block acknowledgement agreement context parameter set subfield, where one block acknowledgment agreement context parameter set subfield is used for indicating one block acknowledgement agreement context parameter set.

In some embodiments, the block acknowledgement agreement context parameter set subfield is used to indicate at least one of: a role of a device where the block acknowledgment agreement context is located within the block acknowledgment agreement context; the non-AP MLD for which the block acknowledgment agreement context is used; a block acknowledgment parameter set; or a block acknowledgment timeout.

In some embodiments, if the block acknowledgment agreement context parameter set subfield is used for indicating that the role of the device where the block acknowledgment agreement context is located within the block acknowledgment agreement context is an originator, the block acknowledgment agreement context parameter set subfield is further used for indicating at least one of: a starting sequence number of a transmit window; or a size of the transmit window.

In some embodiments, if the block acknowledgment agreement context parameter set subfield is used for indicating that the role of the device where the block acknowledgment agreement context is located within the block acknowledgment agreement context is a recipient, the block acknowledgment agreement context parameter set subfield is further used for indicating at least one of: a starting sequence number of a receive buffer; a size of a receive window; a starting sequence number of a record bitmap; an ending sequence number of the record bitmap; or a size of the record bitmap.

In some embodiments, the block acknowledgement parameter set includes at least one of: indication information indicating whether an aggregated MAC service data unit is supported; a block acknowledgement policy; a TID; or a buffer size.

In some embodiments, the second context information is carried in a security association context element.

In some embodiments, the security association context element includes a security association context parameter control field for indicating at least one of: a device in which the security association context element is located; whether the device in which the security association context element is located and the non-AP MLD for which the security association context is used are the same device; the non-AP MLD for which the security association context is used, when the device in which the security association context element is located and the non-AP MLD for which the security association context is used are the same device; or the number of security association context parameter sets included in the security association context element.

In some embodiments, the security association context element includes a security association context parameter set list field, including at least one security association context parameter set subfield, where one security association context parameter set subfield is used for indicating one security association context parameter set.

In some embodiments, the security association context parameter set subfield is used to indicate at least one of: a role of a device where the security association context is located within the security association context; the non-AP MLD for which the security association context is used; or a security association type of the security association context.

In some embodiments, if the security association context parameter set subfield is used for indicating that the role of the device where the security association context is located within the security association context is an originator, the security association context parameter set subfield is further used for indicating at least one of: the number of replay counters; a TID; or a count of the replay counter for the TID.

In some embodiments, if the security association context parameter set subfield is used for indicating that the role of the device where the security association context is located within the security association context is a recipient, the security association context parameter set subfield is further used for indicating at least one of: the number of packet number counters; a TID; or a count of the packet number counter for the TID.

In some embodiments the second frame further includes third indication information for indicating that the context information includes information of a block acknowledgement agreement context and/or a security association context.

In some embodiments, the request frame is transmitted by the non-AP MLD to the current AP MLD, and then transmitted by the current AP MLD to the target AP MLD. The response frame is transmitted by the target AP MLD to the current AP MLD, and then transmitted by the current AP MLD to the non-AP MLD.

In some embodiments, the transition is based on FT, the request frame is an FT confirm frame and the response frame is an FT Ack frame.

In some embodiments, the current AP MLD and the target AP MLD belong to the same mobility domain MLD, the method further includes that: an FT request frame transmitted by the non-AP MLD is received, and the FT request frame is transmitted to the target AP MLD; and an FT response frame transmitted by the target AP MLD is received, and the FT response frame is transmitted to the non-AP MLD.

In some embodiments, the method further includes that: an association request frame transmitted by the non-AP MLD is received and the association request frame is transmitted to the target AP MLD; and an association response frame transmitted by the target AP MLD is received, and the association response frame is transmitted to the non-AP MLD.

In some embodiments, the transition is based on FT, and the link reconfiguration is performed by the non-AP MLD when a first duration is less than or equal to a deadline time of the link reconfiguration.

Here, the first duration represents a duration between a transmission time of an FT request frame and a transmission time of a link reconfiguration request frame, and the first frame includes the link reconfiguration request frame.

In some embodiments, the method further includes that fourth indication information is received, where the fourth indication information is used for indicating a deadline time or a timeout time of the link reconfiguration.

In some embodiments, the fourth indication information performs indication using a start time and a timeout interval, or the fourth indication information performs indication using the deadline time.

In some embodiments, the start time is implicitly represented by a transmission time or a reception time of the fourth indication information; and the timeout interval is explicitly indicated by the fourth indication information.

In some embodiments, the method further includes: the current AP MLD accepts deletion of all links when the target AP MLD accepts establishment of at least one link; the current AP MLD rejects deletion of at least one link when the target AP MLD rejects establishment of all links.

When the target AP MLD rejects the request to add all proposed links (i.e., the target AP MLD refuses to establish any link), the current AP MLD should not accept the request to delete all links, i.e., the current AP MLD shall retain at least one established link to maintain association of the non-AP MLD with the current AP MLD.

In some embodiments, the current AP MLD accepts deletion of all links other than links required to be retained, when the target AP MLD accepts the establishment of the at least one link.

For the FT-oriented link reconfiguration based on the current AP MLD and the target AP MLD, when the target AP MLD accepts the request to add at least one link (i.e. the target AP MLD accepts establishment of at least one link), the current AP MLD shall accept the request to delete all links except the link required to be retained, i.e. refuse to delete the link required to be retained, such as the link reserved as a backup link during roaming.

For specific implementation details of the operation 2610, the reference may be made to the operation 510 of the embodiment of FIG. 5, which will not be repeated herein.

In summary, by transmitting and/or receiving at least one first frame, where the at least one first frame is used to enable transition between the current and target AP MLDs at different positions based on link reconfiguration, the method provided by the present embodiment optimizes a link reconfiguration protocol between the current and target AP MLDs at different positions, and realizes the transition of the non-AP MLD between the current and target AP MLDs during communication.

By replication or migration of the block acknowledgement agreement context and the security association context, the method provided by the present embodiment also eliminates the duration of data connectivity loss between the non-AP MLD and the current and target AP MLDs and maintains data continuity between the non-AP MLD and the current and target AP MLDs. Here, the block acknowledgement agreement context ensures the connectivity of data transmission, and the security association context obviates the need for key re-agreement after transition by bypassing the key agreement process.

FIG. 27 illustrates a flowchart of a transition method according to an exemplary embodiment of the present disclosure. The method is performed by a target AP MLD, and the method includes operation 2710.

Operation 2710: at least one first frame is transmitted and/or received.

Here, the at least one first frame is used to enable a transition of a non-AP MLD between a current AP MLD and the target AP MLD at different locations based on link reconfiguration.

In some embodiments, the current AP MLD and the target AP MLD belong to the same mobility domain MLD, or the current AP MLD and the target AP MLD belong to the same mobility domain.

In some embodiments, the current AP MLD and the target AP MLD belong to the same mobility domain MLD, and the mobility domain MLD is used for at least one of: providing connection services between any one of the following and a distribution system (DS): the non-AP MLD, or, the current AP MLD and the target AP MLD; maintaining data continuity for the non-AP MLD during the transition between the current AP MLD and the target AP MLD in a roaming process; authentication and/or association or reassociation of the non-AP MLD; security association of the non-AP MLD; distribution of all or part of security association information of the non-AP MLD; synchronization of all or part of state and/or buffer information of upper layers of upper medium access control (MAC) sublayers (Upper-UMAC) of the current AP MLD and the target AP MLD; managing distribution of authentication information of a link of the non-AP MLD; managing AP MLD-level association or reassociation between the non-AP MLD and both the current AP MLD and the target AP MLD; for the target AP MLD, selecting a MAC corresponding to the target AP MLD for data transmission; synchronization of first data between the current AP MLD and the target AP MLD, where the first data is used for maintaining data communication between the non-AP MLD and any one of the following: the current AP MLD and the target AP MLD, or, the DS; or exchanging or indicating MLD-level information through MAC sublayers of the current AP MLD and the target AP MLD.

In some embodiments, the at least one first frame is transmitted and/or received, which includes that: a link reconfiguration request frame transmitted by the current AP MLD is received, where the link reconfiguration request frame is used to indicate that the non-AP MLD requests link reconfiguration with the current AP MLD and the target AP MLD to perform the transition; and a link reconfiguration response frame is transmitted to the current AP MLD, where the link reconfiguration response frame is used to provide feedback on the link reconfiguration with the current AP MLD and the target AP MLD to the non-AP MLD.

In some embodiments, the link reconfiguration request frame includes: a first element corresponding to the current AP MLD, for deleting at least one link between the non-AP MLD and the current AP MLD; and a second element corresponding to the target AP MLD, for establishing at least one link between the non-AP MLD and the target AP MLD.

In some embodiments, the first element includes a first reconfiguration multi-link element for describing reconfiguration multi-link information between the non-AP MLD and the current AP MLD; and the second element includes a second reconfiguration multi-link element for describing reconfiguration multi-link information between the non-AP MLD and the target AP MLD.

In some embodiments, the link reconfiguration request frame further includes: a first TID-to-link mapping element for TID-to-link mapping on the link established between the non-AP MLD and the target AP MLD.

In some embodiments, the link reconfiguration response frame includes: a third element corresponding to the current AP MLD, for indicating a link reconfiguration status corresponding to the current AP MLD; and a fourth element corresponding to the target AP MLD, for indicating a link reconfiguration status corresponding to the target AP MLD.

In some embodiments, the third element includes at least one of: a reconfiguration status list for the current AP MLD, including at least one reconfiguration status tuple; or the number of reconfiguration status tuples for the current AP MLD. The fourth element includes at least one of: a reconfiguration status list for the target AP MLD, including at least one reconfiguration status element; or the number of reconfiguration status tuples for the target AP MLD.

Here, the reconfiguration status element is used to indicate a reconfiguration status of one link.

In some embodiments, the current AP MLD and the target AP MLD belong to the same mobility domain MLD, or the current AP MLD and the target AP MLD belong to the same mobility domain, and the method further includes that: first indication information is transmitted and/or received, where the first indication information is used for indicating the mobility domain MLD.

In some embodiments, the first indication information is carried in at least one of: a link reconfiguration request frame; a link reconfiguration response frame; a request frame; a response frame; a fast basic service set (BSS) transition (FT) request frame; an FT response frame; an FT confirm frame; an FT acknowledgement (Ack) frame; an association request frame; an association response frame; a reassociation request frame; or a reassociation response frame.

Here, the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

In some embodiments, the first indication information includes at least one of: a mobility domain MLD ID; or a mobility domain MLD MAC address.

In some embodiments, the transition is based on FT, and the method further includes that: second indication information is transmitted and/or received, where the second indication information is used for indicating whether FT between a current AP MLD and the target AP MLD affiliated with the same mobility domain MLD is supported or allowed.

In some embodiments, the FT between the current AP MLD and the target AP MLD affiliated with the same mobility domain MLD is used for maintaining data connectivity during the transition.

In some embodiments, the second indication information is carried in at least one of: a link reconfiguration request frame; a link reconfiguration response frame; a request frame; a response frame; a fast basic service set (BSS) transition (FT) request frame; an FT response frame; an FT confirm frame; an FT acknowledgement (Ack) frame; an association request frame; an association response frame; a reassociation request frame; or a reassociation response frame.

Here, the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

In some embodiments, the link reconfiguration response frame includes a status code for indicating a status code of the link reconfiguration under a mobility domain MLD scenario.

In some embodiments, when a value of the status code is a first value, the status code is used to indicate that the mobility domain link reconfiguration is denied.

In some embodiments, the link reconfiguration response frame includes group key data for indicating a group key for a corresponding link successfully added to the target AP MLD.

In some embodiments, the link reconfiguration response frame includes a basic multi-link element for providing Per-STA profiles for one or more affiliated APs of the target AP MLD.

In some embodiments, the link reconfiguration response frame includes a second TID-to-link mapping element for responding to TID-to-link mapping on a link established between the non-AP MLD and the target AP MLD.

In some embodiments, the link reconfiguration request frame is transmitted by the non-AP MLD to the current AP MLD, and then transmitted by the current AP MLD to the target AP MLD.

In some embodiments, the link reconfiguration response frame is transmitted by the target AP MLD to the current AP MLD, and then transmitted by the current AP MLD to the non-AP MLD.

In some embodiments, the method further includes that: at least one second frame is transmitted and/or received, where the second frame is used for synchronizing context information related to the non-AP MLD between the current AP MLD and the target AP MLD, and the context information includes at least one of state information or buffer information.

In some embodiments, the at least one second frame is transmitted and/or received includes that: a request frame transmitted by the current AP MLD is received, where the request frame is used to indicate that the non-AP MLD requests synchronization of the context information related to the non-AP MLD between the current AP MLD and the target AP MLD; and a response frame is transmitted to the current AP MLD, where the response frame is used to provide feedback to the non-AP MLD regarding the synchronization of the context information related to the non-AP MLD between the current AP MLD and the target AP MLD.

In some embodiments, the context information includes at least one of: first context information, related to a block acknowledgement agreement context; or second context information, related to a security association context.

In some embodiments, the first context information is carried in a block acknowledgement agreement context element.

In some embodiments, the block acknowledgement agreement context element includes a block acknowledgement agreement context parameter control field for indicating at least one of: a device in which the block acknowledgment agreement context element is located; whether the device in which the block acknowledgment agreement context element is located and the non-AP MLD for which the block acknowledgment agreement context is used are the same device; the non-AP MLD for which the block acknowledgment agreement context is used, when the device in which the block acknowledgment agreement context element is located and the non-AP MLD for which the block acknowledgment agreement context is used are the same device; or the number of block acknowledgment agreement context parameter sets included in the block acknowledgment agreement context element.

In some embodiments, the block acknowledgement agreement context element includes a block acknowledgement agreement context parameter set list field, including at least one block acknowledgement agreement context parameter set subfield, where one block acknowledgement agreement context parameter set subfield is used for indicating one block acknowledgement agreement context parameter set.

In some embodiments, the block acknowledgement agreement context parameter set subfield is used to indicate at least one of: a role of a device where the block acknowledgment agreement context is located within the block acknowledgment agreement context; the non-AP MLD for which the block acknowledgment agreement context is used; a block acknowledgment parameter set; or a block acknowledgment timeout.

In some embodiments, if the block acknowledgment agreement context parameter set subfield is used for indicating that the role of the device where the block acknowledgment agreement context is located within the block acknowledgment agreement context is an originator, the block acknowledgment agreement context parameter set subfield is further used for indicating at least one of: a starting sequence number of a transmit window; or a size of the transmit window.

In some embodiments, if the block acknowledgment agreement context parameter set subfield is used for indicating that the role of the device where the block acknowledgment agreement context is located within the block acknowledgment agreement context is a recipient, the block acknowledgment agreement context parameter set subfield is further used for indicating at least one of: a starting sequence number of a receive buffer; a size of a receive window; a starting sequence number of a record bitmap; an ending sequence number of the record bitmap; or a size of the record bitmap.

In some embodiments, the block acknowledgement parameter set includes at least one of: indication information indicating whether an aggregated media access control (MAC) service data unit (A-MSDU) is supported; a block acknowledgment policy; a TID; or a buffer size.

In some embodiments, the second context information is carried in a security association context element.

In some embodiments, the security association context element includes a security association context parameter control field for indicating at least one of: a device in which the security association context element is located; whether the device in which the security association context element is located and the non-AP MLD for which the security association context is used are the same device; the non-AP MLD for which the security association context is used, when the device in which the security association context element is located and the non-AP MLD for which the security association context is used are the same device; or the number of security association context parameter sets included in the security association context element.

In some embodiments, the security association context element includes a security association context parameter set list field, including at least one security association context parameter set subfield, where one security association context parameter set subfield is used for indicating one security association context parameter set.

In some embodiments, the security association context parameter set subfield is used to indicate at least one of: a role of a device where the security association context is located within the security association context; the non-AP MLD for which the security association context is used; or a security association type of the security association context.

In some embodiments, if the security association context parameter set subfield is used for indicating that the role of the device where the security association context is located within the security association context is an originator, the security association context parameter set subfield is further used for indicating at least one of: the number of replay counters; a TID; or a count of the replay counter for the TID.

In some embodiments, if the security association context parameter set subfield is used for indicating that the role of the device where the security association context is located within the security association context is a recipient, the security association context parameter set subfield is further used for indicating at least one of: the number of packet number counters; a TID; or a count of the packet number counter for the TID.

In some embodiments, the second frame further includes: third indication information for indicating that the context information includes information of a block acknowledgement agreement context and/or a security association context.

In some embodiments, the request frame is transmitted by the non-AP MLD to the current AP MLD, and then transmitted by the current AP MLD to the target AP MLD; and the response frame is transmitted by the target AP MLD to the current AP MLD, and then transmitted by the current AP MLD to the non-AP MLD.

In some embodiments, the transition is based on FT, the request frame is an FT confirm frame and the response frame is an FT Ack frame.

In some embodiments, the current AP MLD and the target AP MLD belong to the same mobility domain MLD, and the method further includes that: an FT request frame transmitted by the current AP MLD is received; and an FT response frame is transmitted to the current AP MLD.

In some embodiments, the method further includes that: an association request frame transmitted by the current AP MLD is received; and an association response frame is transmitted to the current AP MLD.

In some embodiments, the transition is based on FT, and the link reconfiguration is performed by the non-AP MLD when a first duration is less than or equal to a deadline time of the link reconfiguration. Here, the first duration represents a duration between a time for transmitting an FT request frame and a time for transmitting a link reconfiguration request frame, and the first frame includes the link reconfiguration request frame.

In some embodiments, the method further includes that: fourth indication information is received, where the fourth indication information is used for indicating a deadline time or timeout time of the link reconfiguration.

In some embodiments, the fourth indication information performs the indication using a start time and a timeout interval, or the fourth indication information performs the indication using the deadline time.

In some embodiments, the start time is implicitly represented by a time for transmitting the fourth indication information or a time for receiving the fourth indication information; and the timeout interval is explicitly indicated by the fourth indication information.

For specific implementation details of the operation 2710, the reference may be made to the operation 510 of the embodiment of FIG. 5, which will not be repeated herein.

In summary, by transmitting and/or receiving at least one first frame, where the at least one first frame is used to enable transition between the current AP MLD and the target AP MLD at different positions based on link reconfiguration, the method provided by the present embodiment optimizes a link reconfiguration protocol between the current AP MLD and target AP MLD at different positions, and realizes the transition of the non-AP MLD between the current AP MLD and target AP MLD during communication.

By replication or migration of the block acknowledgement agreement context and the security association context, the method provided by the present embodiment also eliminates the duration of data connectivity loss between the non-AP MLD and the current and target AP MLDs and maintains data continuity between the non-AP MLD and the current and target AP MLDs. Here, the block acknowledgement agreement context ensures the connectivity of data transmission, and the security association context obviates the need for key re-agreement after transition by bypassing the key agreement process.

In the above embodiments, the operations having the same serial numbers may be considered to be the same operation. Here, the embodiment corresponding to FIG. 4, the embodiment corresponding to FIG. 5, the embodiment corresponding to FIG. 23, the embodiment corresponding to FIG. 24, the embodiment corresponding to FIG. 25, the embodiment corresponding to FIG. 26, and the embodiment corresponding to FIG. 27 may be implemented alone or in combination, and the present disclosure is not limited thereto.

FIG. 28 illustrates a block diagram of a non-access point multi-link device provided by an exemplary embodiment of the present disclosure. The device may be implemented or partially implemented by software or hardware, or a combination of both. The device includes a transmission module 2810. Here, functions of the transmission module 2810 may be implemented as a transmitter or receiver in the non-AP MLD.

The transmission module 2810 is configured to transmit and/or receive at least one first frame. Here, the at least one first frame is used to enable a transition between two access point multi-link devices at different locations based on link reconfiguration.

In a possible design of the present embodiment, the two access point multi-link devices belong to the same mobility domain MLD, or the two access point multi-link devices belong to the same mobility domain.

The mobility domain MLD (or referred to as logical access point multi-link device) regards multiple non-collocated access point multi-link devices as one MLD, and the specific name of the mobility domain MLD is not limited in this embodiment.

In a possible design of the present embodiment, the transition of the non-access point multi-link device between the two access point multi-link devices includes at least one of transition scenario 1 or transition scenario 2.

The transition scenario 1: when the non-access point multi-link device is associated with the mobility domain MLD and the two access point multi-link devices belong to the same mobility domain MLD, the non-access point multi-link device performs transition of association at the access point multi-link device level affiliated with the mobility domain MLD between the two access point multi-link devices.

The transition scenario 2: when the non-access point multi-link device is associated with only one of the two access point multi-link devices, and the two access point multi-link devices are not affiliated with the same mobility domain MLD, the non-access point multi-link device performs transition of association between the two access point multi-link devices.

The transition in the embodiments of the present disclosure may also be described as switching alternatively.

For transition scenario 1, the transition of association at the access point multi-link device level affiliated with the mobility domain MLD means that: before transition, the non-access point multi-link device is associated with the mobility domain MLD, and the non-access point multi-link device establishes multi-link with an access point multi-link device affiliated with the mobility domain MLD (i.e., the links established between the non-access point multi-link device and the mobility domain MLD wholly or partially belong to links between the non-access point multi-link device and the access point multi-link device affiliated with the mobility domain MLD); after transition, the non-access point multi-link device is also associated with the mobility domain MLD, and the non-access point multi-link device establishes multi-link with another access point multi-link device affiliated with the mobility domain MLD (i.e., the links established between the non-access point multi-link device and the mobility domain MLD wholly or partially belong to links between the non-access point multi-link device and the another access point multi-link device affiliated with the mobility domain MLD).

For transition scenario 2, the non-access point multi-link device is associated with access point multi-link devices affiliated with different mobility domain MLDs before and after transition, thereby performing transition of association.

For a mobility domain MLD with which a current access point multi-link device of the two access point multi-link devices is affiliated, the mobility domain MLD has multiple affiliated access point multi-link devices including the current access point multi-link device.

For a mobility domain MLD with which a target access point multi-link device of the two access point multi-link devices is affiliated, the mobility domain MLD has multiple affiliated access point multi-link devices including the target access point multi-link device.

The transition provided by the embodiments of the present disclosure may include BSS transition, FT, seamless BSS transition, or seamless fast transition.

In a possible design of the present embodiment, the two access point multi-link devices belong to the same mobility domain MLD, and the mobility domain MLD is used for at least one of: providing connection services between the non-access point multi-link device or the two access point multi-link devices and a distribution system (DS); maintaining data continuity for the non-access point multi-link device during the transition between the two access point multi-link devices in a roaming process; authentication and/or association or re-association of the non-access point multi-link device; security association of the non-access point multi-link device; distribution of all or part of security association information of the non-access point multi-link device; synchronization of all or part of state and/or buffer information of upper layers of upper MAC sublayers (Upper-UMAC) of the two access point multi-link devices; managing distribution of authentication information of a link of the non-access point multi-link device; managing access point multi-link device-level association or re-association between the non-access point multi-link device and the two access point multi-link devices; for a target access point multi-link device of the two access point multi-link devices that establishes a multi-link with the non-access point multi-link device, selecting a MAC corresponding to the target access point multi-link device for data transmission; synchronization of first data between the two access point multi-link devices, the first data being used to maintain data communication between the non-access point multi-link device and the two access point multi-link devices or the DS; or exchanging or indicating device-level information through MAC sublayers of the two access point multi-link devices.

In a possible design of the present embodiment, the transmission module 2810 is configured to: transmit a link reconfiguration request frame, where the link reconfiguration request frame is used for indicating that the non-access point multi-link device requests link reconfiguration with the two access point multi-link devices to perform the transition; and receive a link reconfiguration response frame, where the link reconfiguration response frame is used for providing feedback on the link reconfiguration with the two access point multi-link devices to the non-access point multi-link device.

In a possible design of the present embodiment, the two access point multi-link devices include a current access point multi-link device and a target access point multi-link device, and the link reconfiguration request frame is transmitted by the non-access point multi-link device to the current access point multi-link device and transmitted by the current access point multi-link device to the target access point multi-link device.

In a possible design of the present embodiment, the two access point multi-link devices include a current access point multi-link device and a target access point multi-link device, and the link reconfiguration response frame is transmitted by the target access point multi-link device to the current access point multi-link device and then fed back by the current access point multi-link device.

In a case where the non-access point multi-link device needs to transition from communication with the current access point multi-link device to communication with the target access point multi-link device, the non-access point multi-link device transmits a link reconfiguration request frame to the current access point multi-link device, where the link reconfiguration request frame is used for requesting deletion of at least one link with the current access point multi-link device; and the current access point multi-link device transmits a link reconfiguration request frame to the target access point multi-link device, where the link reconfiguration request frame is used to request establishment of at least one link between the non-access point multi-link device and the target access point multi-link device.

The target access point multi-link device transmits a link reconfiguration response frame to the current access point multi-link device, where the link reconfiguration response frame is used to indicate a link reconfiguration status corresponding to the target access point multi-link device, for example, whether to establish a link with the non-access point multi-link device. The current access point multi-link device transmits a link reconfiguration response frame to the non-access point multi-link device, where the link reconfiguration response frame is used to indicate link reconfiguration statuses corresponding to the current access point multi-link device and the target access point multi-link device, for example, whether the current access point multi-link device deletes a link and whether the target access point multi-link device establishes a link with the non-access point multi-link device.

In a possible design of the present embodiment, the two access point multi-link devices include a current access point multi-link device and a target access point multi-link device.

The link reconfiguration request frame includes: a first element corresponding to the current access point multi-link device, for deleting at least one link with the current access point multi-link device; and a second element corresponding to the target access point multi-link device, for establishing at least one link with the target access point multi-link device.

In a possible design of the present embodiment, the first element includes a first reconfiguration multi-link element for describing reconfiguration multi-link information between the non-access point multi-link device and the current access point multi-link device; and the second element includes a second reconfiguration multi-link element for describing reconfiguration multi-link information between the non-access point multi-link device and the target access point multi-link device.

In a possible design of the present embodiment, the link reconfiguration request frame further includes: a first TID-to-link mapping element for TID-to-link mapping on the link established with the target access point multi-link device.

In a possible design of the present embodiment, the format of the link reconfiguration request frame is as illustrated in Table 1 in the embodiment of FIG. 4.

In a possible design of the present embodiment, the two access point multi-link devices include a current access point multi-link device and a target access point multi-link device, and the link reconfiguration response frame includes: a third element corresponding to the current access point multi-link device, for indicating a link reconfiguration status corresponding to the current access point multi-link device; and a fourth element corresponding to the target access point multi-link device, for indicating a link reconfiguration status corresponding to the target access point multi-link device.

In a possible design of the present embodiment, the third element includes at least one of: a reconfiguration status list for the current access point multi-link device, including at least one reconfiguration status tuple; or the number of reconfiguration status tuples for the current access point multi-link device. The fourth element includes at least one of: a reconfiguration status list for the target access point multi-link device, including at least one reconfiguration status element; or the number of reconfiguration status tuples for the target access point multi-link device.

Here, the reconfiguration status element is used to indicate a reconfiguration status of one link.

In a possible design of the present embodiment, the link reconfiguration response frame may be an action frame of a protected EHT or UHR, or UHR+ type. The format of the link reconfiguration response frame is as illustrated in Table 2 in the embodiment of FIG. 4.

In a possible design of the present embodiment, the two access point multi-link devices belong to the same mobility domain MLD, or the two access point multi-link devices belong to the same mobility domain, the transmission module 2810 is configured to: transmit and/or receive first indication information, where the first indication information is used for indicating the mobility domain MLD.

In a possible design of the present embodiment, the first indication information is carried in at least one of: a link reconfiguration request frame; a link reconfiguration response frame; a request frame; a response frame; an FT request frame; an FT response frame; an FT confirm frame; an FT acknowledgement (Ack) frame; an association request frame; an association response frame; a re-association request frame; or a re-association response frame.

Here, the request frame is used to indicate that the non-access point multi-link device requests replication or migration of context information between the two access point multi-link devices to maintain data connectivity during the transition, and the response frame is used to indicate a result of the replication or migration of the context information between the two access point multi-link devices to the non-access point multi-link device.

In a possible design of the present embodiment, the first indication information includes at least one of: a mobility domain MLD identifier (ID); or a mobility domain MLD MAC address.

Exemplarily, the first indication information is referred to as a mobility domain element (MDE), which is used to indicate that link reconfiguration is performed in a mobility domain MLD scenario, and carries information such as mobility domain MLD information (e.g., mobility domain MLD ID or mobility domain MLD MAC address), whether or not the FT is in the same mobility domain MLD, and the like. The access point multi-link device may use the MDE to advertise that the access point multi-link device is included in or affiliated with the mobility domain MLD, and advertise the access point multi-link device's support for FT functions and FT policy information, including whether FT between the two access point multi-link devices affiliated with the same mobility domain MLD is supported or allowed.

In a possible design of the present embodiment, the transition is based on FT, the transmission module 2810 is configured to: transmit and/or receive second indication information, where the second indication information is used for indicating whether FT between the two access point multi-link devices affiliated with the same mobility domain MLD is supported or allowed.

Compared to FT between the two access point multi-link devices, the FT between the two access point multi-link devices affiliated with the same mobility domain MLD is used for maintaining data connectivity during the transition.

In a possible design of the present embodiment, the second indication information is carried in at least one of: a link reconfiguration request frame; a link reconfiguration response frame; a request frame; a response frame; an FT request frame; an FT response frame; an FT confirm frame; an FT Ack frame; an association request frame; an association response frame; a re-association request frame; or a re-association response frame.

Here, the request frame is used to indicate that the non-access point multi-link device requests replication or migration of context information between the two access point multi-link devices to maintain data connectivity during the transition, and the response frame is used to indicate a result of the replication or migration of the context information between the two access point multi-link devices to the non-access point multi-link device.

In a possible design of the present embodiment, based on the mobility domain MLD architecture, a high-level architecture of the mobility domain MLD and its affiliated access point multi-link devices and the non-access point multi-link devices for the data connectivity-oriented transition of a non-access point multi-link device (or STA) from the current access point multi-link device (or AP) to the target access point multi-link device (or AP) is illustrated in FIG. 6.

The high-level architecture includes at least one of: a DS 610, a mobility domain MLD common sublayer 620, a first transition module 630, an affiliated MLD upper MAC sublayer 640, an affiliated MLD lower MAC sublayer 650, a second transition module 660, a non-access point multi-link device lower MAC sublayer 670, or a non-access point multi-link device upper MAC sublayer 680.

The DS 610 is an architecture for distributing computing and communication functions among multiple nodes or devices. The primary function of the DS is to coordinate and manage computing and communication tasks in distributed environments for efficient data transmission and collaboration.

The mobility domain MLD common sublayer 620 includes a mobility domain access point multi-link device 621 with an MLD MAC address of Q, for performing data communication with the DS 610 through a first MAC-service access point (SAP).

Access point multi-link device 1 with an MLD MAC address of M and access point multi-link device 2 with an MLD MAC address of N have the same functions, and access point multi-link device 1 is taken as an example for illustration. The mobility domain access point multi-link device 621 performs data communication with the access point multi-link device 1 through the first transition module 630. The first transition module 630 is a module in the mobility domain access point multi-link device 621, or a module in the access point multi-link device 1, or a module in another access point multi-link device.

The access point multi-link device 1 performs data communication with AP1 with an MAC address of w and AP2 with an MAC address of x via a second MAC-SAP. The functions of AP1 and AP2 are the same, and AP1 is taken as an example for illustration. The AP1 performs data communication with the second transition module 660 through link 1. The second transition module 660 is a module in a non-access point multi-link device 681, or a module in the access point multi-link device 1, or a module in another access point multi-link device.

The non-AP STA1 with an MAC address of y and the non-AP STA2 with an MAC address of z have the same functions, the non-AP STA1 is associated with the AP1 and the AP3 with an MAC address of r, and the non-AP STA2 is associated with the AP2 and the AP4 with an MAC address of s, and the non-AP STA1 is taken as an example for illustration. The non-access point multi-link device with an MLD MAC address of P performs data communication with the non-AP STA1 through a fourth MAC-SAP.

The functions of the mobility domain MLD common sublayer 620 include at least one of: (1) providing a distribution system access function (DSAF) to the affiliated access point multi-link device (e.g., access point multi-link device 1, access point multi-link device 2) of the mobility domain MLD; (2) authentication, association, and re-association between the non-access point multi-link device 681 and the mobility domain access point multi-link device 621; (3) security association (such as pairwise master key security association (PMKSA), pairwise transient key security association (PTKSA)) and managing distribution of GTK/IGTK/BIGTK; (4) managing partial association and re-association between the non-access point multi-link device 681 and the affiliated access point multi-link device of the mobility domain access point multi-link device; (5) for the affiliated access point multi-link device associated with the non-access point multi-link device 681, selecting an MAC corresponding to the affiliated access point multi-link device for data transmission; (6) synchronization (replication or migration) of all or part of state and buffer information of upper layers of upper MAC sublayers (Upper-UMAC) of affiliated MLDs of the mobility domain MLD; or (7) exchanging or indicating device-level management information through MAC sublayers of the affiliated MLD.

Here, the synchronization of all or part of state and buffer information of upper layers of upper MAC sublayers (Upper-UMAC) of affiliated MLDs of the mobility domain MLD includes: for a designated non-access point multi-link device associated with the mobility domain MLD, transition of the non-access point multi-link device from the current access point multi-link device associated to the target access point multi-link device to be associated involves synchronization of all or part of state and buffer information of upper layers of upper MAC sublayers (Upper-UMAC) of the affiliated MLDs, to maintain the continuity of the data communication session and the persistence of data transmission in the process where the non-access point multi-link device is associated with different affiliated access point multi-link devices due to roaming.

All or part of the state and buffer information of the upper layers of upper MAC sublayers (Upper-UMAC) of the affiliated MLDs of the mobility domain MLD (i.e., the session or protocol state and buffer information (for the designated non-access point multi-link device) maintained for data exchange with the designated non-access point multi-link device) include at least one of: (1) sequence number (SN)/packet number (PN) allocation state and related buffer data for unicast frames; (2) SN allocation state and related buffer data for group addressed MAC service data units (MSDUs); (3) power-saving buffer data for individually addressed frames; (4) block Ack session state, and duplicate detection and reordering buffer data for received frames; or (5) PN counter state at the transmitting end and replay detection state at the receiving end, and related buffer data.

In a possible design of the present embodiment, the link reconfiguration response frame includes a status code for indicating a status code of the link reconfiguration in a mobility domain MLD scenario. When a value of the status code is a first value, the status code is used to indicate that mobility domain link reconfiguration is denied.

The format of the link reconfiguration response frame is illustrated in Table 2 of the embodiment of FIG. 4.

In a possible design of the present embodiment, the reconfiguration status list subfield of the current access point multi-link device and the reconfiguration status list subfield of the target access point multi-link device both adopt the reconfiguration status list format. The reconfiguration status list contains one or more reconfiguration status tuples, as illustrated in Figure 7. FIG. 7 is a schematic diagram illustrating a reconfiguration status list subfield format according to an exemplary embodiment of the present disclosure. The reconfiguration status list subfield format includes at least one of: a link ID Info field, or a status field. In the embodiments of the present disclosure, the field may be referred to as the domain, and the subfield may be referred to as subdomain.

Here, the link ID Info field occupies 1 byte and the status field occupies 2 bytes. The format of the link ID Info field is as defined in IEEE 802.11be. The link ID field in the link ID Info field indicates a link ID corresponding to the access point multi-link device, and is used in the corresponding link reconfiguration request frame for deleting an existing link or add a new link. The status field indicates the status of the link reconfiguration operation of the link corresponding to the link ID field.

The above-described reconfiguration status list subfield format is an exemplary possible case. Under different embodiments or different designs, it is not excluded that at least one of the following designs may vary: the position of the reconfiguration status list subfield in the frame, the arrangement order between the reconfiguration status list subfield and other fields, the number of bytes occupied, or the field name. The present embodiment is not limited thereto.

In a possible design of the present embodiment, the link reconfiguration response frame includes group key data for indicating a group key for a corresponding link successfully added to the target access point multi-link device. The group key data subfield is optionally present and contains the group key for the corresponding link successfully added to the target access point multi-link device (the value of the status code is SUCCESS). FIG. 8 illustrates a schematic diagram of a group key data subfield format provided by an exemplary embodiment of the present disclosure. The group key data subfield format includes at least one of: a key data length field, or a key data field.

The key data length field occupies 2 bytes, and the number of bytes occupied by the key data field is variable.

The group key data subfield contains an MLO GTK KDE, an MLO IGTK KDE, and an MLO BIGTK KDE, which provide the group key, identified by the link ID subfield, for the link added to the target access point multi-link device.

In the case where the link reconfiguration response frame includes the group key data subfield and also includes an OCI element, an OCI element subfield is optionally present.

The above-described group key data subfield format is an exemplary possible case. Under different embodiments or different designs, it is not excluded that at least one of the following designs may vary: the position of the group key data subfield in the frame, the arrangement order between the group key data subfield and other fields, the number of bytes occupied, or the field name. The present embodiment is not limited thereto.

In a possible design of the present embodiment, the link reconfiguration response frame includes a basic multi-link element for providing Per-STA profiles for one or more affiliated APs of the target access point multi-link device.

In the case where the target access point multi-link device adds at least one link, the link reconfiguration response frame includes a basic multi-link element for providing Per-STA profiles for one or more affiliated APs of the target access point multi-link device. These APs respectively correspond to the links successfully added to the multi-link reconfiguration of the non-access point multi-link device. In the case where the target access point multi-link device does not add a link, the link reconfiguration response frame excludes the basic multi-link element.

In a possible design of the present embodiment, the link reconfiguration response frame includes a second TID-to-link mapping element for responding to TID-to-link mapping on a link established with the target access point multi-link device.

In a possible design of the present embodiment, the link reconfiguration response frame is used for the access point multi-link device (including the current access point multi-link device and the target access point multi-link device) in the mobility domain MLD scenario to respond to the link reconfiguration request frame transmitted from the non-access point multi-link device, thereby accepting or rejecting the request of the non-access point multi-link device to delete and/or add link(s) on established multi-link setup.

For FT, the link reconfiguration response frame is used by the access point multi-link device (including the current access point multi-link device and the target access point multi-link device) to respond to the link reconfiguration request frame transmitted from the non-access point multi-link device in the mobility domain MLD scenario, to accept or reject the request of the non-access point multi-link device to delete link(s) from the established multi-link of the current access point multi-link device and to add new link(s) to the target access point multi-link device.

In a possible design of the present embodiment, the transition is based on FT, at least one of the link reconfiguration request frame or the link reconfiguration response frame further includes second indication information, for indicating whether FT between the two access point multi-link devices affiliated with the same mobility domain MLD is supported or allowed.

Exemplarily, the second indication information is referred to as a "FTinMobileDomainMLD" field, where when the value of this field is 1, it indicates that FT is supported or allowed between the two access point multi-link devices affiliated with the same mobility domain MLD, and when the value of this field is 0, it indicates that FT is not supported or allowed between the two access point multi-link devices affiliated with the same mobility domain MLD.

FIG. 9 illustrates a schematic diagram of a mobility domain element format provided by an exemplary embodiment of the present disclosure. The mobility domain element format includes at least one of: an element ID field, a length field, a mobility domain identifier (MDID) field, an FT capability and policy field, a mobility domain MLD ID field, or a mobility domain MLD MAC address field.

Here, the element ID field occupies 1 byte, the length field occupies 1 byte, the MDID field occupies 2 bytes, the FT capability and policy field occupies 1 byte, the mobility domain MLD ID field occupies 0 or 1 byte, and the mobility domain MLD MAC address field occupies 0 or 6 bytes.

For the FT capability and policy field, FIG. 10 illustrates a schematic diagram of an FT capability and policy field format provided by an exemplary embodiment of the present disclosure. The FT capability and policy field includes at least one of: an FT over DS field, a resource request protocol capability field, an FTinMobileDomainMLD field, or a reserved field.

Here, the FT over DS field occupies 1 bit, the resource request protocol capability field occupies 1 bit, the FTinMobileDomainMLD field occupies 1 bit, and the reserved field occupies 5 bits.

The "FTinMobileDomainMLD" field indicates whether FT between the two access point multi-link devices affiliated with the same mobility domain MLD is supported or allowed. For example, when the value of the "FTinMobileDomainMLD" field is 1, it indicates that FT is supported or allowed between the two access point multi-link devices affiliated with the same mobility domain MLD, and when the value of the "FTinMobileDomainMLD" field is 0, it indicates that FT is not supported or allowed between the two access point multi-link devices affiliated with the same mobility domain MLD. Alternatively, when the value of the "FTinMobileDomainMLD" field is 0, it may indicate that FT is supported or allowed between the two access point multi-link devices affiliated with the same mobility domain MLD, and when the value of the "FTinMobileDomainMLD" field is 1, it may indicate that FT is not supported or allowed between the two access point multi-link devices affiliated with the same mobility domain MLD, which are not limited in this embodiment.

The "FTinMobileDomainMLD" field may control the behavior of the STA or the non-access point multi-link device to perform the FT. The non-access point multi-link device may determine the transition method recommended by the access point multi-link device and the protocol supported by the access point multi-link device, using the information from the MDE.

The above-described mobility domain element format and the FT capability and policy field format are exemplary possible cases. Under different embodiments or different designs, it is not excluded that at least one of the following designs may vary: the positions of the mobility domain element and the FT capability and policy field in a frame, the arrangement order between the mobility domain element as well as the FT capability and policy field and other fields, the number of occupied bytes, the number of occupied bits, the element name, or the field name. The present embodiment is not limited thereto.

In a possible design of the present embodiment, the transmission module 2810 is configured to: transmit and/or receive at least one second frame, where the second frame is used for synchronizing context information related to the non-access point multi-link device between the two access point multi-link devices, and the context information includes at least one of state information or buffer information.

In a possible design of the present embodiment, the transmission module 2810 is configured to: transmit a request frame, where the request frame is used for indicating that the non-access point multi-link device requests synchronization of the context information related to the non-access point multi-link device between the two access point multi-link devices; and receive a response frame, where the response frame is used for providing feedback to the non-access point multi-link device regarding the synchronization of the context information related to the non-access point multi-link device between the two access point multi-link devices.

In a possible design of the present embodiment, the context information includes at least one of: first context information, related to a block acknowledgement (Ack) agreement context; or second context information, related to a security association context.

In a possible design of the present embodiment, the first context information is carried in a block acknowledgement agreement context element.

In a possible design of the present embodiment, the second context information is carried in a security association context element.

### Block acknowledgement agreement context element

In a possible design of the present embodiment, the block acknowledgement agreement context may also be described as a block Ack agreement scenario, block Ack context, or block Ack scenario, which is information maintained for the block acknowledgement process.

In a possible design of the present embodiment, the block acknowledgement agreement context element includes block acknowledgement agreement context or status information that the specified MLD has established and maintained with one or more peer MLDs (i.e., non-access point multi-link devices). The block acknowledgement agreement context element includes a block acknowledgement agreement context parameter control field for indicating at least one of: a device in which the block acknowledgement agreement context element is located; whether the device in which the block acknowledgement agreement context element is located and the non-access point multi-link device for which the block acknowledgement agreement context is used are the same device; the non-access point multi-link device for which the block acknowledgement agreement context is used, when the device in which the block acknowledgement agreement context element is located and the non-access point multi-link device for which the block acknowledgement agreement context is used are the same device; or the number of block acknowledgement agreement context parameter sets included in the block acknowledgement agreement context element.

In a possible design of the present embodiment, the device in which the block acknowledgement agreement context element is located is the current access point multi-link device.

FIG. 11 illustrates a schematic diagram of a block acknowledgement agreement context element format provided by an exemplary embodiment of the present disclosure. The block acknowledgement agreement context element format includes at least one of: an element ID field, a length field, an element ID extension field, a block acknowledgement agreement context parameter control field, or a block acknowledgement agreement context parameter set list field. In the embodiments of the present disclosure, the field may be referred to as the domain, and the subfield may be referred to as the subdomain.

Here, the element ID field occupies 1 byte, the length field occupies 1 byte, the element ID extension field occupies 1 byte, the block acknowledgement agreement context parameter control field occupies 9 or 15 bytes, and the block acknowledgement agreement context parameter set list field occupies the variable number of bytes.

For the block acknowledgement agreement context parameter control field, FIG. 12 illustrates a schematic diagram of a block acknowledgement agreement context parameter control field format provided by an exemplary embodiment of the present disclosure. The block acknowledgement agreement context parameter control field includes at least one of: an MLD MAC address field, a "whether peer MLD is the same MLD" field, a peer MLD MAC address field, a "the number of single block acknowledgement agreement context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of single block acknowledgement agreement context parameter sets" field occupies 16 bits, and the reserved field occupies 7 bits.

The MLD MAC address field indicates the MAC address of the MLD where the block acknowledgement agreement context described by the block acknowledgement agreement context element is located. Here, the MLD MAC address may be an MLD address of a roaming MLD.

The "whether peer MLD is the same MLD" field indicates whether the peer MLD for which the block acknowledgement agreement context of the MLD described by the block acknowledgement agreement context element is used is the same MLD. When the value of this field is 0, it indicates that the peer MLD for which the block acknowledgement agreement context of the MLD described by the block acknowledgement context element is used is the same MLD, and when the value of this field is 1, it indicates that the peer MLD for which the block acknowledgement agreement context of the MLD described by the block acknowledgement agreement context element is used is multiple MLDs. Alternatively, when the value of this field is 1, it indicates that the peer MLD for which the block acknowledgement agreement context of the MLD described by the block acknowledgement agreement context element is used is the same MLD, and when the value of this field is 0, it indicates that the peer MLD for which the block acknowledgement agreement context of the MLD described by the block acknowledgement agreement context element is used is multiple MLDs. This is not limited in the embodiments of the present disclosure.

The peer MLD MAC address field indicates the MAC address of the peer MLD for which the block acknowledgement agreement context of the MLD described by the block acknowledgement agreement context element is used. When the value of the field is 0, the peer MLD MAC address field is present in the block acknowledgement agreement context parameter control field; and when the value of the field is 1, the peer MLD MAC address field is absent in the block acknowledgement agreement context parameter control field. Alternatively, when the value of the field is 1, the peer MLD MAC address field is present in the block acknowledgement agreement context parameter control field; and when the value of the field is 0, the peer MLD MAC address field is absent in the block acknowledgement agreement context parameter control field. This is not limited in the embodiments of the present disclosure.

The "the number of single block acknowledgement agreement context parameter sets" field is a 16-bit unsigned integer indicating the number of single block acknowledgement agreement context parameter set fields in the block acknowledgement agreement context parameter set list field.

In a possible design of the present embodiment, the block acknowledgement agreement context element includes a block acknowledgement agreement context parameter set list field, including at least one block acknowledgement agreement context parameter set subfield, where one block acknowledgement agreement context parameter set subfield is used for indicating one block acknowledgement agreement context parameter set.

In a possible design of the present embodiment, the block acknowledgement agreement context parameter set subfield is used to indicate at least one of: a role of a device where the block acknowledgement agreement context is located within the block acknowledgement agreement context; the non-access point multi-link device for which the block acknowledgment agreement context is used; a block acknowledgement parameter set; or a block acknowledgement timeout.

For the block acknowledgement agreement context parameter set list field, FIG. 13 illustrates a schematic diagram of a block acknowledgement agreement context parameter set list field format provided by an exemplary embodiment of the present disclosure. The block acknowledgement agreement context parameter set list field includes at least one of: one or more single block acknowledgement agreement context parameter set fields, or a padding field.

Here, the number of bits occupied by the single block acknowledgement agreement context parameter set field is variable, and the number of bits occupied by the padding field is variable.

In a possible design of the present embodiment, if the block acknowledgement agreement context parameter set subfield is used to indicate that the role of the device where the corresponding block acknowledgement agreement context is located within the block acknowledgement agreement context is an originator, the block acknowledgement agreement context parameter set subfield is further used to indicate at least one of: a starting sequence number of a transmit window; or a size of the transmit window.

In a possible design of the present embodiment, if the block acknowledgement agreement context parameter set subfield is used to indicate that the role of the device where the block acknowledgement agreement context is located within the block acknowledgement agreement context is a recipient, the block acknowledgement agreement context parameter set subfield is further used to indicate at least one of: a starting sequence number of a receive buffer; a size of a receive window; a starting sequence number of a record bitmap; an ending sequence number of the record bitmap; or a size of the record bitmap.

For the single block acknowledgement agreement context parameter set field, in the case where the MLD where the block acknowledgement agreement context is located is an originator MLD role, FIG. 14 illustrates a diagram of a single block acknowledgement agreement context parameter set field format provided by an exemplary embodiment of the present disclosure. The single block acknowledgement agreement context parameter set field includes at least one of: an MLD role field (originator MLD), a peer MLD field, a block acknowledgement parameter set field, a block acknowledgement timeout field, a "starting sequence number of transmit window (WinStartO)" field, and a "size of transmit window (WinStartO)" field.

Here, the MLD role field (originator MLD) occupies 1 bit, the peer MLD field occupies 0 or 48 bits, the block acknowledgement parameter set field occupies 16 bits, the block acknowledgement timeout field occupies 8 bits, the WinStartO field occupies 12 bits, and the WinStartO field occupies 10 bits.

In the case where the MLD where the block acknowledgement agreement context is located is a recipient MLD role, FIG. 15 illustrates a schematic diagram of a single block acknowledgement agreement context parameter set field format provided by an exemplary embodiment of the present disclosure. The single block acknowledgement agreement context parameter set field includes at least one of: an MLD role field (recipient MLD), a peer MLD field, a block acknowledgement parameter set field, a block acknowledgement timeout field, a "the starting sequence number of the receive buffer (WinStartB)" field, a "the size of the receive window (WinSizeB)" field, a "the starting sequence number of the record bitmap (WinStartR)" field, an "the ending sequence number of the record bitmap (WinEndR)" field, or a "the size of the record bitmap (WinSizeR)" field.

Here, the MLD role field (recipient MLD) occupies 1 bit, the peer MLD field occupies 0 or 48 bits, the block acknowledgement parameter set field occupies 48 bits, the block acknowledgement timeout field occupies 16 bits, the WinStartB field occupies 12 bits, the WinSizeB field occupies 10 bits, the WinStartR field occupies 12 bits, the WinEndR field occupies 12 bits, and the WinSizeR field occupies 10 bits.

The MLD role field indicates the role of the MLD (in which the block acknowledgement agreement context described by the single block acknowledgement agreement context parameter set is located) within the block acknowledgement agreement. Exemplarily, when the value of the MLD role field is 0, it indicates that the MLD in which the block acknowledgement agreement context described by the single block acknowledgement agreement context parameter set is located plays the role of the originator MLD within the block acknowledgement agreement; and when the value of the MLD role field is 1, it indicates that the MLD in which the block acknowledgement agreement context described by the single block acknowledgement agreement context parameter set is located plays the role of the recipient MLD within the block acknowledgement agreement. Alternatively, when the value of the MLD role field is 1, it indicates that the MLD in which the block acknowledgement agreement context described by the single block acknowledgement agreement context parameter set is located plays the role of the originator MLD within the block acknowledgement agreement; and when the value of the MLD role field is 0, it indicates that the MLD in which the block acknowledgement agreement context described by the single block acknowledgement agreement context parameter set is located plays the role of the recipient MLD within the block acknowledgement agreement.

When the MLD in which the block acknowledgement agreement context is located is an originator role, the single block acknowledgement agreement context parameter set format is illustrated in FIG. 14, and when the MLD in which the block acknowledgement agreement context is located is a recipient role, the single block acknowledgement agreement context parameter set format is illustrated in FIG. 15.

The peer MLD field indicates the MAC address of the peer MLD for which the block acknowledgement agreement context described by the single block acknowledgement agreement context parameter set field is used.

The block acknowledgement parameter set field indicates the parameter set related to the established block acknowledgement agreement corresponding to the block acknowledgement agreement context described by the single block acknowledgement agreement context parameter set field.

The block acknowledgement timeout field contains a duration in units of TUs (1024 microseconds). If no frame exchange sequence occurs using the block acknowledgement agreement within the duration, the block acknowledgement agreement shall be terminated after the duration. This field is set to 0, indicating that the timeout is disabled.

The WinStartO field is a transmit buffer control parameter for indicating the starting sequence number of the transmit window.

In a possible design of the present embodiment, the block acknowledgement parameter set includes at least one of: indication information indicating whether an aggregated MSDU is supported; a block acknowledgement policy; a TID; or a buffer size.

For the block acknowledgement parameter set field, FIG. 16 illustrates a schematic diagram of a block acknowledgement parameter set field format provided by an exemplary embodiment of the present disclosure. The block acknowledgement parameter set field includes at least one of: an A-MSDU supported field, a block acknowledgement policy field, a TID field, or a buffer size field.

Here, the A-MSDU supported field occupies 1 bit, the block acknowledgement policy field occupies 1 bit, the TID field occupies 4 bits, and the buffer size field occupies 10 bits.

The WinSizeO field is a transmit buffer control parameter, for indicating the buffer size of the transmit window negotiated in the block acknowledgement agreement. Here, the WinSizeO field indicates the number of buffers available for the specified TID. When the A-MSDU supported field is equal to 0, the number of bytes that each buffer can accommodate is equal to the maximum size of an MSDU. When the STA's supported A-MSDU field is equal to 1, the number of bytes that each buffer can accommodate is equal to the maximum size of an A-MSDU supported by the STA.

The WinStartB field is a receive reordering buffer control parameter, for indicating the sequence number field value of the first MSDU or A-MSDU (in ascending sequence number order) that has not yet been received.

The WinSizeB field is a receive reordering buffer control parameter, for indicating the size of the receive window.

The WinStartR field is a scoreboard context control parameter, which is a 12-bit unsigned integer that represents the starting sequence number, for indicating the lowest sequence number position in the block acknowledgement record bitmap (indexed by sequence number).

The WinEndR field indicates the highest sequence number of the current transmission window.

The WinSizeR field is a scoreboard context control parameter, for indicating the maximum transmission window size, which is set to the smaller value between the length of the bitmap and the value of the buffer size field in the relevant response frame that established the block acknowledgement agreement.

The block acknowledgment agreement context element format, the block acknowledgment agreement context parameter control field format, the block acknowledgment agreement context parameter set list field format, the single block acknowledgment agreement context parameter set field format, and the block acknowledgment parameter set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

### Security association context element

In a possible design of the present embodiment, the security association context may also be described as a security association scenario, which is information maintained for the security association process.

In a possible design of the present embodiment, the security association context element contains the PN configuration and PN counter state information at the transmitting end and/or the replay detection context and replay counter state information at the receiving end that the specified MLD has established and maintained with one or more peer MLDs for security association-related data encryption/decryption and/or integrity protection and verification. FIG. 17 is a schematic diagram of a security association context element format provided by an exemplary embodiment of the present disclosure. The security association context element format includes at least one of: an element ID field, a length field, an element ID extension field, a security association (SA) context parameters control field, or a security association context parameters set list field.

Here, the element ID field occupies 1 byte, the length field occupies 1 byte, the element ID extension field occupies 1 byte, the security association context parameters control field occupies 9 or 15 bytes, and the security association context parameters set list field occupies the variable number of bytes.

In a possible design of the present embodiment, the security association context element includes a security association context parameters control field for indicating at least one of: a device in which the security association context element is located; whether the device in which the security association context element is located and the non-access point multi-link device for which the security association context is used are the same device; the non-access point multi-link device for which the security association context is used, when the device in which the security association context element is located and the non-access point multi-link device for which the security association context is used are the same device; or the number of security association context parameter sets included in the security association context element.

In a possible design of the present embodiment, the device in which the security association context element is located is the current access point multi-link device.

For the security association context parameters control field, FIG. 18 illustrates a schematic diagram of a security association context parameters control field format provided by an exemplary embodiment of the present disclosure. The security association context parameters control field includes at least one of: an MLD MAC address field, a "whether peer MLD is the same MLD" field, a peer MLD MAC address field, a "the number of security association context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of security association context parameter sets" field occupies 16 bits, and the reserved field occupies 7 bits.

In a possible design of the present embodiment, the security association context element includes a security association context parameters set list field, including at least one security association context parameters set subfield, where one security association context parameters set subfield is used for indicating one security association context parameters set.

In a possible design of the present embodiment, the security association context parameters set subfield is used to indicate at least one of: a role of a device where the security association context is located within the security association context; the non-access point multi-link device for which the security association context is used; or a security association type of the security association context.

For the security association context parameter set list field, FIG. 19 illustrates a schematic diagram of a security association context parameters set list field format provided by an exemplary embodiment of the present disclosure. The security association context parameters set list field includes at least one of: one or more security association context parameters set fields.

Here, the number of bits occupied by the security association context parameters set field is variable.

In a possible design of the present embodiment, if the security association context parameters set subfield is used to indicate that the role of the device where the security association context is located within the security association context is an originator, the security association context parameters set subfield is further used to indicate at least one of: the number of replay counters; a TID; or the count of the replay counter for the TID.

In a possible design of the present embodiment, if the security association context parameters set subfield is used to indicate that the role of the device where the security association context is located within the security association context is a recipient, the security association context parameters set subfield is further used to indicate at least one of: the number of packet number (PN) counters; a TID; or the count of the packet number counter for the TID.

For the security association context parameters set field, in the case where the MLD in which the security association context described by the security association context parameters set field is located is a recipient MLD role, FIG. 20 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of replay counters" field, one or more TID fields, or one or more "the count of replay counter" fields.

Here, the MLD role field occupies 1 bit, the peer MLD field occupies 0 or 48 bits, the "PTKSA/GTKSA/TPKSA" field occupies 2 bits, the "the number of replay counters" field occupies 5 bits, the TID field occupies 8 bits, and the "the count of replay counter" field occupies 48 bits.

In the case where the MLD in which the security association context described by the security association context parameters set field is located is an originator MLD role, FIG. 21 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of PN counters" field, one or more TID fields, or one or more "the count of the PN counter" fields.

Here, the MLD role field occupies 1 bit, the peer MLD field occupies 0 or 48 bits, the "PTKSA/GTKSA/TPKSA" field occupies 2 bits, the "the number of PN counters" field occupies 5 bits, the TID field occupies 8 bits, the middle "the count of the PN counter" field occupies 0 or 48 bits, and the last "the count of the PN counter" field occupies 48 bits.

The MLD role field indicates the role of the MLD (in which the security association context described by the security association context parameters set field is located) within the security association context. For example, when the value of the MLD role field is 0, it indicates that the MLD in which the security association context described by the security association context parameters set field is located plays the role of a recipient MLD, that is, what is described is the replay context parameter set at the receiving end; and when the value of the MLD role field is 1, it indicates that the MLD in which the security association context described by the security association context parameters set field is located plays the role of an originator MLD, that is, what is described is the PN counter context parameter set at the transmitting end. Alternatively, when the value of the MLD role field is 1, it indicates that the MLD in which the security association context described by the security association context parameters set field is located plays the role of a recipient MLD; and when the value of the MLD role field is 0, it indicates that the MLD in which the security association context described by the security association context parameters set field is located plays the role of an originator MLD.

The "PTKSA/GTKSA/TPKSA" field indicates the type of security association corresponding to the replay context described by the replay context parameter set field, as illustrated in Table 4.

The block acknowledgement agreement context element format, the security association context parameters control field format, the security association context parameters set list field format, and the security association context parameters set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

In a possible design of the present embodiment, the second frame further includes third indication information for indicating that the context information includes information of a block acknowledgement agreement context and/or a security association context.

In a possible design of the present embodiment, the two access point multi-link devices belong to the same mobility domain MLD, at least one of the request frame or the response frame further includes: first indication information for indicating the mobility domain MLD.

In a possible design of the present embodiment, the transition is based on FT, at least one of the request frame or the response frame further includes: second indication information for indicating whether FT between the two access point multi-link devices affiliated with the same mobility domain MLD is supported or allowed. Exemplarily, the second indication information is referred to as the "FTinMobileDomainMLD" field, where when the value of this field is 1, it indicates that FT is supported or allowed between the two access point multi-link devices affiliated with the same mobility domain MLD; and when the value of this field is 0, it indicates that FT is not supported or allowed between the two access point multi-link devices affiliated with the same mobility domain MLD.

In a possible design of the present embodiment, the two access point multi-link devices include a current access point multi-link device and a target access point multi-link device.

The request frame is transmitted to the current access point multi-link device, and then transmitted by the current access point multi-link device to the target access point multi-link device.

The response frame is transmitted by the target access point multi-link device to the current access point multi-link device, and then fed back by the current access point multi-link device.

In a possible design of the present embodiment, the transition is based on FT, the request frame is an FT confirm frame and the response frame is an FT Ack frame.

The non-access point multi-link device transmits the FT confirm frame to the target access point multi-link device through the current access point multi-link device, and then the target access point multi-link device transmits the FT Ack frame to the non-access point multi-link device through the current access point multi-link device. The FT confirm frame includes at least one of: non-access point multi-link device information, target access point multi-link device information, MDE, block acknowledgement agreement context element, security association context element, or basic multi-link element. The FT Ack frame includes at least one of: non-access point multi-link device information, target access point multi-link device information, MDE, timeout interval element, block acknowledgement agreement context element, security association context element, or basic multi-link element.

Here, the FT confirm frame and the FT Ack frame carry the block acknowledgement agreement context element and the security association context element, indicating relevant block acknowledgement agreement context (or state) information and security association context (or state) information.

In a possible design of the present embodiment, the two access point multi-link devices belong to the same mobility domain MLD, the transmission module 2810 is configured to: transmit an FT request frame; and receive an FT response frame.

When the non-access point multi-link device determines that it needs to transition from the current access point multi-link device to the target access point multi-link device in the mobility domain MLD scenario, the non-access point multi-link device transmits the FT request frame to the target access point multi-link device through the current access point multi-link device, and then the target access point multi-link device transmits the FT response frame to the non-access point multi-link device through the current access point multi-link device. The FT request frame includes at least one of: non-access point multi-link device information, target access point multi-link device information, MDE, or basic multi-link element. The FT response frame includes at least one of: non-access point multi-link device information, target access point multi-link device information, MDE, or basic multi-link element.

Here, the FT request frame and the FT response frame carry the MDE (the "FTinMobileDomainMLD" field, the mobility domain MLD information field), indicating that FT between the two access point multi-link devices affiliated with the same mobility domain MLD is supported or allowed.

In a possible design of the present embodiment, the transmission module 2810 is further configured to: transmit an association request frame; and receive an association response frame.

The non-access point multi-link device transmits the association request frame or the re-association request frame to the current access point multi-link device, and then the current access point multi-link device feeds back the association response frame or the re-association response frame to the non-access point multi-link device.

The association request frame or the re-association request frame transmitted by the non-access point multi-link device to the current access point multi-link device includes: mobility domain element (MDE), basic multi-link element.

The association response frame or the re-association response frame transmitted by the current access point multi-link device to the non-access point multi-link device includes: mobility domain element (MDE), basic multi-link element.

Here, the association request frame or the re-association request frame carries the MDE (the "FTinMobileDomainMLD" field, the mobility domain MLD information field), indicating that the non-access point multi-link device is to perform association with an access point multi-link device in the mobility domain MLD scenario (or the non-access point multi-link device is to be associated with the access point multi-link device affiliated with the mobility domain MLD), and indicating that FT between the two access point multi-link devices affiliated with the same mobility domain MLD is supported or allowed.

In a possible design of the present embodiment, the transition is based on FT, and the link reconfiguration is performed in a case where a first duration is less than or equal to a deadline time of the link reconfiguration.

Here, the first duration represents a duration between a transmission time of the FT request frame and a transmission time of the link reconfiguration request frame, and the first frame includes the link reconfiguration request frame.

In a possible design of the present embodiment, the transmission module 2810 is further configured to transmit fourth indication information, where the fourth indication information is used for indicating a deadline time or a timeout time of the link reconfiguration.

By way of example, the fourth indication information is referred to as a timeout interval element (TIE) for specifying a time interval and the timeout time.

In a possible design of the present embodiment, the fourth indication information performs indication using a start time and a timeout interval, or, the fourth instruction information performs indication using the deadline time.

In a possible design of the present embodiment, the start time is implicitly represented by a transmission time or a reception time of the fourth indication information. The timeout interval is explicitly indicated by the fourth indication information.

In the embodiments of the present disclosure, a timeout interval type value corresponding to the link reconfiguration deadline interval is added to the timeout interval type field of the timeout interval element, and is used to indicate that the timeout interval value field represents the link reconfiguration deadline interval. FIG. 22 is a schematic diagram of a timeout interval element format provided by an exemplary embodiment of the present disclosure. The timeout interval element format includes at least one of: an element ID field, a length field, a timeout interval type field, and a timeout interval value field.

Here, the element ID field occupies 1 byte, the length field occupies 1 byte, the timeout interval type field occupies 1 byte, and the timeout interval value field occupies 4 bytes.

The above-described timeout interval element format is an exemplary possible case. Under different embodiments or different designs, it is not excluded that at least one of the following designs may vary: the position of the timeout interval element in the frame, the arrangement order between the timeout interval element and other fields, the number of bytes occupied, or the element name. This embodiment is not limited thereto.

The timeout interval value field contains a 32-bit unsigned integer, where the link reconfiguration deadline interval may be set to 0, to indicate the absence of the deadline time. The definition of the timeout interval type field is illustrated in Table 5.

In the present embodiment, the transmission module 2810 may be split into multiple transmission modules, for example, a first transmission module, a second transmission module. The transmission module is configured to transmit the first frame, and the second transmission module is configured to receive the first frame; or, the first transmission module is configured to receive the first frame, and the second transmission module is configured to transmit the first frame. The present embodiment does not limit the functions of different transmission modules.

The present embodiment uses a single transmission module 2810 for illustrative purposes, and the number of transmission modules 2810 is not limited.

For the functions of the transmission module 2810, the reference may be made to the operation 510 of the embodiment of FIG. 5.

FIG. 29 illustrates a block diagram of a current access point multi-link device provided by an exemplary embodiment of the present disclosure. The device may be implemented or partially implemented by software or hardware, or a combination of both. The device includes a transmission module 2910 and a processing module 2920. Here, functions of the transmission module 2910 may be implemented as a transmitter or receiver in the current AP MLD, and functions of the processing module 2920 may be implemented as a processor in the current AP MLD.

The transmission module 2910 is configured to transmit and/or receive at least one first frame. Here, the at least one first frame is used to enable a transition of a non-access point multi-link device between the current access point multi-link device and a target access point multi-link device at different locations based on link reconfiguration.

In a possible design of the present embodiment, the current access point multi-link device and the target access point multi-link device belong to the same mobility domain MLD, or the current access point multi-link device and the target access point multi-link device belong to the same mobility domain.

The mobility domain MLD (or referred to as logical access point multi-link device) regards multiple non-collocated access point multi-link devices as one MLD, and the specific name of the mobility domain MLD is not limited in this embodiment.

In a possible design of the present embodiment, the transition of the non-access point multi-link device between the current access point multi-link device and the target access point multi-link device includes at least one of transition scenario 1 or transition scenario 2.

The transition scenario 1: when the non-access point multi-link device is associated with the mobility domain MLD and the current access point multi-link device and the target access point multi-link device belong to the same mobility domain MLD, the non-access point multi-link device performs transition of association at the access point multi-link device level affiliated with the mobility domain MLD between the current access point multi-link device and the target access point multi-link device.

The transition scenario 2: when the non-access point multi-link device is associated with only one of the current access point multi-link device and the target access point multi-link device, and the current access point multi-link device and the target access point multi-link device are not affiliated with the same mobility domain MLD, the non-access point multi-link device performs transition of association between the current access point multi-link device and the target access point multi-link device.

The transition in the embodiments of the present disclosure may also be described as switching alternatively.

For transition scenario 1, the transition of association at the access point multi-link device level affiliated with the mobility domain MLD means that: before transition, the non-access point multi-link device is associated with the mobility domain MLD, and the non-access point multi-link device establishes multi-link with an access point multi-link device affiliated with the mobility domain MLD (i.e., the links established between the non-access point multi-link device and the mobility domain MLD wholly or partially belong to links between the non-access point multi-link device and the access point multi-link device affiliated with the mobility domain MLD); after transition, the non-access point multi-link device is also associated with the mobility domain MLD, and the non-access point multi-link device establishes multi-link with another access point multi-link device affiliated with the mobility domain MLD (i.e., the links established between the non-access point multi-link device and the mobility domain MLD wholly or partially belong to links between the non-access point multi-link device and the another access point multi-link device affiliated with the mobility domain MLD).

For transition scenario 2, the non-access point multi-link device is associated with access point multi-link devices affiliated with different mobility domain MLDs before and after transition, thereby performing transition of association.

For a mobility domain MLD with which the current access point multi-link device of the current and target access point multi-link devices is affiliated, the mobility domain MLD has multiple affiliated access point multi-link devices including the current access point multi-link device.

For a mobility domain MLD with which the target access point multi-link device of the current and target access point multi-link devices is affiliated, the mobility domain MLD has multiple affiliated access point multi-link devices including the target access point multi-link device.

The transition provided by the embodiments of the present disclosure may include BSS transition, FT, seamless BSS transition, or seamless fast transition.

In a possible design of the present embodiment, the current and target access point multi-link devices belong to the same mobility domain MLD, and the mobility domain MLD is used for at least one of: providing connection services between the non-access point multi-link device or the current and target access point multi-link devices and a distribution system (DS); maintaining data continuity for the non-access point multi-link device during the transition between the current access point multi-link device and the target access point multi-link device in a roaming process; authentication and/or association or re-association of the non-access point multi-link device; security association of the non-access point multi-link device; distribution of all or part of security association information of the non-access point multi-link device; synchronization of all or part of state and/or buffer information of upper layers of upper MAC sublayers (Upper-UMAC) of the current and target access point multi-link devices; managing distribution of authentication information of a link of the non-access point multi-link device; managing access point multi-link device-level association or re-association between the non-access point multi-link device and the current and target access point multi-link devices; for the target access point multi-link device of the current and target access point multi-link devices that establishes a multi-link with the non-access point multi-link device, selecting a MAC corresponding to the target access point multi-link device for data transmission; synchronization of first data between the current and target access point multi-link devices, the first data being used to maintain data communication between the non-access point multi-link device and the current and target access point multi-link devices or the DS; or exchanging or indicating MLD-level information through MAC sublayers of the current and target access point multi-link devices.

In a possible design of the present embodiment, the transmission module 2910 is configured to: transmit a link reconfiguration request frame, where the link reconfiguration request frame is used for indicating that the non-access point multi-link device requests link reconfiguration with the current and target access point multi-link devices to perform the transition; and receive a link reconfiguration response frame, where the link reconfiguration response frame is used for providing feedback on the link reconfiguration with the current and target access point multi-link devices to the non-access point multi-link device.

In a possible design of the present embodiment, the current and target access point multi-link devices include the current access point multi-link device and the target access point multi-link device, and the link reconfiguration request frame is transmitted by the non-access point multi-link device to the current access point multi-link device and transmitted by the current access point multi-link device to the target access point multi-link device.

In a possible design of the present embodiment, the current and target access point multi-link devices include the current access point multi-link device and the target access point multi-link device, and the link reconfiguration response frame is transmitted by the target access point multi-link device to the current access point multi-link device and then fed back by the current access point multi-link device.

In a case where the non-access point multi-link device needs to transition from communication with the current access point multi-link device to communication with the target access point multi-link device, the non-access point multi-link device transmits a link reconfiguration request frame to the current access point multi-link device, where the link reconfiguration request frame is used for requesting deletion of at least one link with the current access point multi-link device; and the current access point multi-link device transmits a link reconfiguration request frame to the target access point multi-link device, where the link reconfiguration request frame is used to request establishment of at least one link between the non-access point multi-link device and the target access point multi-link device.

The target access point multi-link device transmits a link reconfiguration response frame to the current access point multi-link device, where the link reconfiguration response frame is used to indicate a link reconfiguration status corresponding to the target access point multi-link device, for example, whether to establish a link with the non-access point multi-link device. The current access point multi-link device transmits a link reconfiguration response frame to the non-access point multi-link device, where the link reconfiguration response frame is used to indicate link reconfiguration statuses corresponding to the current access point multi-link device and the target access point multi-link device, for example, whether the current access point multi-link device deletes a link and whether the target access point multi-link device establishes a link with the non-access point multi-link device.

In a possible design of the present embodiment, the current and target access point multi-link devices include the current access point multi-link device and the target access point multi-link device. The link reconfiguration request frame includes: a first element corresponding to the current access point multi-link device, for deleting at least one link with the current access point multi-link device; and a second element corresponding to the target access point multi-link device, for establishing at least one link with the target access point multi-link device.

In a possible design of the present embodiment, the first element includes a first reconfiguration multi-link element for describing reconfiguration multi-link information between the non-access point multi-link device and the current access point multi-link device; and the second element includes a second reconfiguration multi-link element for describing reconfiguration multi-link information between the non-access point multi-link device and the target access point multi-link device.

In a possible design of the present embodiment, the link reconfiguration request frame further includes: a first TID-to-link mapping element for TID-to-link mapping on the link established with the target access point multi-link device.

In a possible design of the present embodiment, the format of the link reconfiguration request frame is as illustrated in Table 1 in the embodiment of FIG. 4.

In a possible design of the present embodiment, the current and target access point multi-link devices include the current access point multi-link device and the target access point multi-link device, and the link reconfiguration response frame includes: a third element corresponding to the current access point multi-link device, for indicating a link reconfiguration status corresponding to the current access point multi-link device; and a fourth element corresponding to the target access point multi-link device, for indicating a link reconfiguration status corresponding to the target access point multi-link device.

In a possible design of the present embodiment, the third element includes at least one of: a reconfiguration status list for the current access point multi-link device, including at least one reconfiguration status tuple; or the number of reconfiguration status tuples for the current access point multi-link device. The fourth element includes at least one of: a reconfiguration status list for the target access point multi-link device, including at least one reconfiguration status element; or the number of reconfiguration status tuples for the target access point multi-link device.

Here, the reconfiguration status element is used to indicate a reconfiguration status of one link.

In a possible design of the present embodiment, the link reconfiguration response frame may be an action frame of a protected EHT or UHR, or UHR+ type. The format of the link reconfiguration response frame is as illustrated in Table 2 in the embodiment of FIG. 4.

In a possible design of the present embodiment, the current and target access point multi-link devices belong to the same mobility domain MLD, or the current and target access point multi-link devices belong to the same mobility domain, the transmission module 2910 is configured to: transmit and/or receive first indication information, where the first indication information is used for indicating the mobility domain MLD.

In a possible design of the present embodiment, the first indication information is carried in at least one of: a link reconfiguration request frame; a link reconfiguration response frame; a request frame; a response frame; an FT request frame; an FT response frame; an FT confirm frame; an FT acknowledgement (Ack) frame; an association request frame; an association response frame; a re-association request frame; or a re-association response frame.

Here, the request frame is used to indicate that the non-access point multi-link device requests replication or migration of context information between the current and target access point multi-link devices to maintain data connectivity during the transition, and the response frame is used to indicate a result of the replication or migration of the context information between the current and target access point multi-link devices to the non-access point multi-link device.

In a possible design of the present embodiment, the first indication information includes at least one of: a mobility domain MLD identifier (ID); or a mobility domain MLD MAC address.

Exemplarily, the first indication information is referred to as a mobility domain element (MDE), which is used to indicate that link reconfiguration is performed in a mobility domain MLD scenario, and carries information such as mobility domain MLD information (e.g., mobility domain MLD ID or mobility domain MLD MAC address), whether or not the FT is in the same mobility domain MLD, and the like. The access point multi-link device may use the MDE to advertise that the access point multi-link device is included in or affiliated with the mobility domain MLD, and advertise the access point multi-link device's support for FT functions and FT policy information, including whether FT between the current and target access point multi-link devices affiliated with the same mobility domain MLD is supported or allowed.

In a possible design of the present embodiment, the transition is based on FT, the transmission module 2910 is configured to: transmit and/or receive second indication information, where the second indication information is used for indicating whether FT between the current and target access point multi-link devices affiliated with the same mobility domain MLD is supported or allowed.

Compared to FT between the current and target access point multi-link devices, the FT between the current and target access point multi-link devices affiliated with the same mobility domain MLD is used for maintaining data connectivity during the transition.

In a possible design of the present embodiment, the second indication information is carried in at least one of: a link reconfiguration request frame; a link reconfiguration response frame; a request frame; a response frame; an FT request frame; an FT response frame; an FT confirm frame; an FT Ack frame; an association request frame; an association response frame; a re-association request frame; or a re-association response frame.

Here, the request frame is used to indicate that the non-access point multi-link device requests replication or migration of context information between the current and target access point multi-link devices to maintain data connectivity during the transition, and the response frame is used to indicate a result of the replication or migration of the context information between the current and target access point multi-link devices to the non-access point multi-link device.

In a possible design of the present embodiment, based on the mobility domain MLD architecture, a high-level architecture of the mobility domain MLD and its affiliated access point multi-link devices and the non-access point multi-link devices for the data connectivity-oriented transition of a non-access point multi-link device (or STA) from the current access point multi-link device (or AP) to the target access point multi-link device (or AP) is illustrated in FIG. 6.

The high-level architecture includes at least one of: a DS 610, a mobility domain MLD common sublayer 620, a first transition module 630, an affiliated MLD upper MAC sublayer 640, an affiliated MLD lower MAC sublayer 650, a second transition module 660, a non-access point multi-link device lower MAC sublayer 670, or a non-access point multi-link device upper MAC sublayer 680.

The DS 610 is an architecture for distributing computing and communication functions among multiple nodes or devices. The primary function of the DS is to coordinate and manage computing and communication tasks in distributed environments for efficient data transmission and collaboration.

The mobility domain MLD common sublayer 620 includes a mobility domain access point multi-link device 621 with an MLD MAC address of Q, for performing data communication with the DS 610 through a first MAC-service access point (SAP).

Access point multi-link device 1 with an MLD MAC address of M and access point multi-link device 2 with an MLD MAC address of N have the same functions, and access point multi-link device 1 is taken as an example for illustration. The mobility domain access point multi-link device 621 performs data communication with the access point multi-link device 1 through the first transition module 630. The first transition module 630 is a module in the mobility domain access point multi-link device 621, or a module in the access point multi-link device 1, or a module in another access point multi-link device.

The access point multi-link device 1 performs data communication with AP1 with an MAC address of w and AP2 with an MAC address of x via a second MAC-SAP. The functions of AP1 and AP2 are the same, and AP1 is taken as an example for illustration. The AP1 performs data communication with the second transition module 660 through link 1. The second transition module 660 is a module in a non-access point multi-link device 681, or a module in the access point multi-link device 1, or a module in another access point multi-link device.

The non-AP STA1 with an MAC address of y and the non-AP STA2 with an MAC address of z have the same functions, the non-AP STA1 is associated with the AP1 and the AP3 with an MAC address of r, and the non-AP STA2 is associated with the AP2 and the AP4 with an MAC address of s, and the non-AP STA1 is taken as an example for illustration. The non-access point multi-link device with an MLD MAC address of P performs data communication with the non-AP STA1 through a fourth MAC-SAP.

The functions of the mobility domain MLD common sublayer 620 include at least one of: (1) providing a distribution system access function (DSAF) to the affiliated access point multi-link device (e.g., access point multi-link device 1, access point multi-link device 2) of the mobility domain MLD; (2) authentication, association, and re-association between the non-access point multi-link device 681 and the mobility domain access point multi-link device 621; (3) security association (such as pairwise master key security association (PMKSA), pairwise transient key security association (PTKSA)) and managing distribution of GTK/IGTK/BIGTK; (4) managing partial association and re-association between the non-access point multi-link device 681 and the affiliated access point multi-link device of the mobility domain access point multi-link device; (5) for the affiliated access point multi-link device associated with the non-access point multi-link device 681, selecting an MAC corresponding to the affiliated access point multi-link device for data transmission; (6) synchronization (replication or migration) of all or part of state and buffer information of upper layers of upper MAC sublayers (Upper-UMAC) of affiliated MLDs of the mobility domain MLD; or (7) exchanging or indicating MLD-level management information through MAC sublayers of the affiliated MLD.

Here, the synchronization of all or part of state and buffer information of upper layers of upper MAC sublayers (Upper-UMAC) of affiliated MLDs of the mobility domain MLD includes: for a designated non-access point multi-link device associated with the mobility domain MLD, transition of the non-access point multi-link device from the current access point multi-link device associated to the target access point multi-link device to be associated involves synchronization of all or part of state and buffer information of upper layers of upper MAC sublayers (Upper-UMAC) of the affiliated MLDs, to maintain the continuity of the data communication session and the persistence of data transmission in the process where the non-access point multi-link device is associated with different affiliated access point multi-link devices due to roaming.

All or part of the state and buffer information of the upper layers of upper MAC sublayers (Upper-UMAC) of the affiliated MLDs of the mobility domain MLD (i.e., the session or protocol state and buffer information (for the designated non-access point multi-link device) maintained for data exchange with the designated non-access point multi-link device) include at least one of: (1) sequence number (SN)/packet number (PN) allocation state and related buffer data for unicast frames; (2) SN allocation state and related buffer data for group addressed MAC service data units (MSDUs); (3) power-saving buffer data for individually addressed frames; (4) block Ack session state, and duplicate detection and reordering buffer data for received frames; or (5) PN counter state at the transmitting end and replay detection state at the receiving end, and related buffer data.

In a possible design of the present embodiment, the link reconfiguration response frame includes a status code for indicating a status code of the link reconfiguration in a mobility domain MLD scenario. When a value of the status code is a first value, the status code is used to indicate that mobility domain link reconfiguration is denied.

The format of the link reconfiguration response frame is illustrated in Table 2 of the embodiment of FIG. 4.

In a possible design of the present embodiment, the reconfiguration status list subfield of the current access point multi-link device and the reconfiguration status list subfield of the target access point multi-link device both adopt the reconfiguration status list format. The reconfiguration status list contains one or more reconfiguration status tuples, as illustrated in Figure 7. FIG. 7 is a schematic diagram illustrating a reconfiguration status list subfield format according to an exemplary embodiment of the present disclosure. The reconfiguration status list subfield format includes at least one of: a link ID Info field, or a status field. In the embodiments of the present disclosure, the field may be referred to as the domain, and the subfield may be referred to as subdomain.

Here, the link ID Info field occupies 1 byte and the status field occupies 2 bytes. The format of the link ID Info field is as defined in IEEE 802.11be. The link ID field in the link ID Info field indicates a link ID corresponding to the access point multi-link device, and is used in the corresponding link reconfiguration request frame for deleting an existing link or add a new link. The status field indicates the status of the link reconfiguration operation of the link corresponding to the link ID field.

The above-described reconfiguration status list subfield format is an exemplary possible case. Under different embodiments or different designs, it is not excluded that at least one of the following designs may vary: the position of the reconfiguration status list subfield in the frame, the arrangement order between the reconfiguration status list subfield and other fields, the number of bytes occupied, or the field name. The present embodiment is not limited thereto.

In a possible design of the present embodiment, the link reconfiguration response frame includes group key data for indicating a group key for a corresponding link successfully added to the target access point multi-link device. The group key data subfield is optionally present and contains the group key for the corresponding link successfully added to the target access point multi-link device (the value of the status code is SUCCESS). FIG. 8 illustrates a schematic diagram of a group key data subfield format provided by an exemplary embodiment of the present disclosure. The group key data subfield format includes at least one of: a key data length field, or a key data field.

The key data length field occupies 2 bytes, and the number of bytes occupied by the key data field is variable.

The group key data subfield contains an MLO GTK KDE, an MLO IGTK KDE, and an MLO BIGTK KDE, which provide the group key, identified by the link ID subfield, for the link added to the target access point multi-link device.

In the case where the link reconfiguration response frame includes the group key data subfield and also includes an OCI element, an OCI element subfield is optionally present.

The above-described group key data subfield format is an exemplary possible case. Under different embodiments or different designs, it is not excluded that at least one of the following designs may vary: the position of the group key data subfield in the frame, the arrangement order between the group key data subfield and other fields, the number of bytes occupied, or the field name. The present embodiment is not limited thereto.

In a possible design of the present embodiment, the link reconfiguration response frame includes a basic multi-link element for providing Per-STA profiles for one or more affiliated APs of the target access point multi-link device.

In the case where the target access point multi-link device adds at least one link, the link reconfiguration response frame includes a basic multi-link element for providing Per-STA profiles for one or more affiliated APs of the target access point multi-link device. These APs respectively correspond to the links successfully added to the multi-link reconfiguration of the non-access point multi-link device. In the case where the target access point multi-link device does not add a link, the link reconfiguration response frame excludes the basic multi-link element.

In a possible design of the present embodiment, the link reconfiguration response frame includes a second TID-to-link mapping element for responding to TID-to-link mapping on a link established with the target access point multi-link device.

In a possible design of the present embodiment, the link reconfiguration response frame is used for the access point multi-link device (including the current access point multi-link device and the target access point multi-link device) in the mobility domain MLD scenario to respond to the link reconfiguration request frame transmitted from the non-access point multi-link device, thereby accepting or rejecting the request of the non-access point multi-link device to delete and/or add link(s) on established multi-link setup.

For FT, the link reconfiguration response frame is used by the access point multi-link device (including the current access point multi-link device and the target access point multi-link device) to respond to the link reconfiguration request frame transmitted from the non-access point multi-link device in the mobility domain MLD scenario, to accept or reject the request of the non-access point multi-link device to delete link(s) from the established multi-link of the current access point multi-link device and to add new link(s) to the target access point multi-link device.

In a possible design of the present embodiment, the transition is based on FT, at least one of the link reconfiguration request frame or the link reconfiguration response frame further includes second indication information, for indicating whether FT between the current and target access point multi-link devices affiliated with the same mobility domain MLD is supported or allowed.

Exemplarily, the second indication information is referred to as a "FTinMobileDomainMLD" field, where when the value of this field is 1, it indicates that FT is supported or allowed between the current and target access point multi-link devices affiliated with the same mobility domain MLD, and when the value of this field is 0, it indicates that FT is not supported or allowed between the current and target access point multi-link devices affiliated with the same mobility domain MLD.

FIG. 9 illustrates a schematic diagram of a mobility domain element format provided by an exemplary embodiment of the present disclosure. The mobility domain element format includes at least one of: an element ID field, a length field, a mobility domain identifier (MDID) field, an FT capability and policy field, a mobility domain MLD ID field, or a mobility domain MLD MAC address field.

Here, the element ID field occupies 1 byte, the length field occupies 1 byte, the MDID field occupies 2 bytes, the FT capability and policy field occupies 1 byte, the mobility domain MLD ID field occupies 0 or 1 byte, and the mobility domain MLD MAC address field occupies 0 or 6 bytes.

For the FT capability and policy field, FIG. 10 illustrates a schematic diagram of an FT capability and policy field format provided by an exemplary embodiment of the present disclosure. The FT capability and policy field includes at least one of: an FT over DS field, a resource request protocol capability field, an FTinMobileDomainMLD field, or a reserved field.

Here, the FT over DS field occupies 1 bit, the resource request protocol capability field occupies 1 bit, the FTinMobileDomainMLD field occupies 1 bit, and the reserved field occupies 5 bits.

The "FTinMobileDomainMLD" field indicates whether FT between the current and target access point multi-link devices affiliated with the same mobility domain MLD is supported or allowed. For example, when the value of the "FTinMobileDomainMLD" field is 1, it indicates that FT is supported or allowed between the current and target access point multi-link devices affiliated with the same mobility domain MLD, and when the value of the "FTinMobileDomainMLD" field is 0, it indicates that FT is not supported or allowed between the current and target access point multi-link devices affiliated with the same mobility domain MLD. Alternatively, when the value of the "FTinMobileDomainMLD" field is 0, it may indicate that FT is supported or allowed between the current and target access point multi-link devices affiliated with the same mobility domain MLD, and when the value of the "FTinMobileDomainMLD" field is 1, it may indicate that FT is not supported or allowed between the current and target access point multi-link devices affiliated with the same mobility domain MLD, which are not limited in this embodiment.

The "FTinMobileDomainMLD" field may control the behavior of the STA or the non-access point multi-link device to perform the FT. The non-access point multi-link device may determine the transition method recommended by the access point multi-link device and the protocol supported by the access point multi-link device, using the information from the MDE.

The above-described mobility domain element format and the FT capability and policy field format are exemplary possible cases. Under different embodiments or different designs, it is not excluded that at least one of the following designs may vary: the positions of the mobility domain element and the FT capability and policy field in a frame, the arrangement order between the mobility domain element as well as the FT capability and policy field and other fields, the number of occupied bytes, the number of occupied bits, the element name, or the field name. The present embodiment is not limited thereto.

In a possible design of the present embodiment, the transmission module 2910 is configured to: transmit and/or receive at least one second frame, where the second frame is used for synchronizing context information related to the non-access point multi-link device between the current and target access point multi-link devices, and the context information includes at least one of state information or buffer information.

In a possible design of the present embodiment, the transmission module 2810 is configured to: transmit a request frame, where the request frame is used for indicating that the non-access point multi-link device requests synchronization of the context information related to the non-access point multi-link device between the current and target access point multi-link devices; and receive a response frame, where the response frame is used for providing feedback to the non-access point multi-link device regarding the synchronization of the context information related to the non-access point multi-link device between the current and target access point multi-link devices.

In a possible design of the present embodiment, the context information includes at least one of: first context information, related to a block acknowledgement (Ack) agreement context; or second context information, related to a security association context.

In a possible design of the present embodiment, the first context information is carried in a block acknowledgement agreement context element.

In a possible design of the present embodiment, the second context information is carried in a security association context element.

### Block acknowledgement agreement context element

In a possible design of the present embodiment, the block acknowledgement agreement context may also be described as a block Ack agreement scenario, block Ack context, or block Ack scenario, which is information maintained for the block acknowledgement process.

In a possible design of the present embodiment, the block acknowledgement agreement context element includes block acknowledgement agreement context or status information that the specified MLD has established and maintained with one or more peer MLDs (i.e., non-access point multi-link devices). The block acknowledgement agreement context element includes a block acknowledgement agreement context parameter control field for indicating at least one of: a device in which the block acknowledgement agreement context element is located; whether the device in which the block acknowledgement agreement context element is located and the non-access point multi-link device for which the block acknowledgement agreement context is used are the same device; the non-access point multi-link device for which the block acknowledgement agreement context is used, when the device in which the block acknowledgement agreement context element is located and the non-access point multi-link device for which the block acknowledgement agreement context is used are the same device; or the number of block acknowledgement agreement context parameter sets included in the block acknowledgement agreement context element.

In a possible design of the present embodiment, the device in which the block acknowledgement agreement context element is located is the current access point multi-link device.

FIG. 11 illustrates a schematic diagram of a block acknowledgement agreement context element format provided by an exemplary embodiment of the present disclosure. The block acknowledgement agreement context element format includes at least one of: an element ID field, a length field, an element ID extension field, a block acknowledgement agreement context parameter control field, or a block acknowledgement agreement context parameter set list field. In the embodiments of the present disclosure, the field may be referred to as the domain, and the subfield may be referred to as the subdomain.

Here, the element ID field occupies 1 byte, the length field occupies 1 byte, the element ID extension field occupies 1 byte, the block acknowledgement agreement context parameter control field occupies 9 or 15 bytes, and the block acknowledgement agreement context parameter set list field occupies the variable number of bytes.

For the block acknowledgement agreement context parameter control field, FIG. 12 illustrates a schematic diagram of a block acknowledgement agreement context parameter control field format provided by an exemplary embodiment of the present disclosure. The block acknowledgement agreement context parameter control field includes at least one of: an MLD MAC address field, a "whether peer MLD is the same MLD" field, a peer MLD MAC address field, a "the number of single block acknowledgement agreement context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of single block acknowledgement agreement context parameter sets" field occupies 16 bits, and the reserved field occupies 7 bits.

The MLD MAC address field indicates the MAC address of the MLD where the block acknowledgement agreement context described by the block acknowledgement agreement context element is located. Here, the MLD MAC address may be an MLD address of a roaming MLD.

The "whether peer MLD is the same MLD" field indicates whether the peer MLD for which the block acknowledgement agreement context of the MLD described by the block acknowledgement agreement context element is used is the same MLD. When the value of this field is 0, it indicates that the peer MLD for which the block acknowledgement agreement context of the MLD described by the block acknowledgement context element is used is the same MLD, and when the value of this field is 1, it indicates that the peer MLD for which the block acknowledgement agreement context of the MLD described by the block acknowledgement agreement context element is used is multiple MLDs. Alternatively, when the value of this field is 1, it indicates that the peer MLD for which the block acknowledgement agreement context of the MLD described by the block acknowledgement agreement context element is used is the same MLD, and when the value of this field is 0, it indicates that the peer MLD for which the block acknowledgement agreement context of the MLD described by the block acknowledgement agreement context element is used is multiple MLDs. This is not limited in the embodiments of the present disclosure.

The peer MLD MAC address field indicates the MAC address of the peer MLD for which the block acknowledgement agreement context of the MLD described by the block acknowledgement agreement context element is used. When the value of the field is 0, the peer MLD MAC address field is present in the block acknowledgement agreement context parameter control field; and when the value of the field is 1, the peer MLD MAC address field is absent in the block acknowledgement agreement context parameter control field. Alternatively, when the value of the field is 1, the peer MLD MAC address field is present in the block acknowledgement agreement context parameter control field; and when the value of the field is 0, the peer MLD MAC address field is absent in the block acknowledgement agreement context parameter control field. This is not limited in the embodiments of the present disclosure.

The "the number of single block acknowledgement agreement context parameter sets" field is a 16-bit unsigned integer indicating the number of single block acknowledgement agreement context parameter set fields in the block acknowledgement agreement context parameter set list field.

In a possible design of the present embodiment, the block acknowledgement agreement context element includes a block acknowledgement agreement context parameter set list field, including at least one block acknowledgement agreement context parameter set subfield, where one block acknowledgement agreement context parameter set subfield is used for indicating one block acknowledgement agreement context parameter set.

In a possible design of the present embodiment, the block acknowledgement agreement context parameter set subfield is used to indicate at least one of: a role of a device where the block acknowledgement agreement context is located within the block acknowledgement agreement context; the non-access point multi-link device for which the block acknowledgment agreement context is used; a block acknowledgement parameter set; or a block acknowledgement timeout.

For the block acknowledgement agreement context parameter set list field, FIG. 13 illustrates a schematic diagram of a block acknowledgement agreement context parameter set list field format provided by an exemplary embodiment of the present disclosure. The block acknowledgement agreement context parameter set list field includes at least one of: one or more single block acknowledgement agreement context parameter set fields, or a padding field.

Here, the number of bits occupied by the single block acknowledgement agreement context parameter set field is variable, and the number of bits occupied by the padding field is variable.

In a possible design of the present embodiment, if the block acknowledgement agreement context parameter set subfield is used to indicate that the role of the device where the corresponding block acknowledgement agreement context is located within the block acknowledgement agreement context is an originator, the block acknowledgement agreement context parameter set subfield is further used to indicate at least one of: a starting sequence number of a transmit window; or a size of the transmit window.

In a possible design of the present embodiment, if the block acknowledgement agreement context parameter set subfield is used to indicate that the role of the device where the block acknowledgement agreement context is located within the block acknowledgement agreement context is a recipient, the block acknowledgement agreement context parameter set subfield is further used to indicate at least one of: a starting sequence number of a receive buffer; a size of a receive window; a starting sequence number of a record bitmap; an ending sequence number of the record bitmap; or a size of the record bitmap.

For the single block acknowledgement agreement context parameter set field, in the case where the MLD where the block acknowledgement agreement context is located is an originator MLD role, FIG. 14 illustrates a diagram of a single block acknowledgement agreement context parameter set field format provided by an exemplary embodiment of the present disclosure. The single block acknowledgement agreement context parameter set field includes at least one of: an MLD role field (originator MLD), a peer MLD field, a block acknowledgement parameter set field, a block acknowledgement timeout field, a "starting sequence number of transmit window (WinStartO)" field, and a "size of transmit window (WinStartO)" field.

Here, the MLD role field (originator MLD) occupies 1 bit, the peer MLD field occupies 0 or 48 bits, the block acknowledgement parameter set field occupies 16 bits, the block acknowledgement timeout field occupies 8 bits, the WinStartO field occupies 12 bits, and the WinStartO field occupies 10 bits.

In the case where the MLD where the block acknowledgement agreement context is located is a recipient MLD role, FIG. 15 illustrates a schematic diagram of a single block acknowledgement agreement context parameter set field format provided by an exemplary embodiment of the present disclosure. The single block acknowledgement agreement context parameter set field includes at least one of: an MLD role field (recipient MLD), a peer MLD field, a block acknowledgement parameter set field, a block acknowledgement timeout field, a "the starting sequence number of the receive buffer (WinStartB)" field, a "the size of the receive window (WinSizeB)" field, a "the starting sequence number of the record bitmap (WinStartR)" field, an "the ending sequence number of the record bitmap (WinEndR)" field, or a "the size of the record bitmap (WinSizeR)" field.

Here, the MLD role field (recipient MLD) occupies 1 bit, the peer MLD field occupies 0 or 48 bits, the block acknowledgement parameter set field occupies 48 bits, the block acknowledgement timeout field occupies 16 bits, the WinStartB field occupies 12 bits, the WinSizeB field occupies 10 bits, the WinStartR field occupies 12 bits, the WinEndR field occupies 12 bits, and the WinSizeR field occupies 10 bits.

The MLD role field indicates the role of the MLD (in which the block acknowledgement agreement context described by the single block acknowledgement agreement context parameter set is located) within the block acknowledgement agreement. Exemplarily, when the value of the MLD role field is 0, it indicates that the MLD in which the block acknowledgement agreement context described by the single block acknowledgement agreement context parameter set is located plays the role of the originator MLD within the block acknowledgement agreement; and when the value of the MLD role field is 1, it indicates that the MLD in which the block acknowledgement agreement context described by the single block acknowledgement agreement context parameter set is located plays the role of the recipient MLD within the block acknowledgement agreement. Alternatively, when the value of the MLD role field is 1, it indicates that the MLD in which the block acknowledgement agreement context described by the single block acknowledgement agreement context parameter set is located plays the role of the originator MLD within the block acknowledgement agreement; and when the value of the MLD role field is 0, it indicates that the MLD in which the block acknowledgement agreement context described by the single block acknowledgement agreement context parameter set is located plays the role of the recipient MLD within the block acknowledgement agreement.

When the MLD in which the block acknowledgement agreement context is located is an originator role, the single block acknowledgement agreement context parameter set format is illustrated in FIG. 14, and when the MLD in which the block acknowledgement agreement context is located is a recipient role, the single block acknowledgement agreement context parameter set format is illustrated in FIG. 15.

The peer MLD field indicates the MAC address of the peer MLD for which the block acknowledgement agreement context described by the single block acknowledgement agreement context parameter set field is used.

The block acknowledgement parameter set field indicates the parameter set related to the established block acknowledgement agreement corresponding to the block acknowledgement agreement context described by the single block acknowledgement agreement context parameter set field.

The block acknowledgement timeout field contains a duration in units of TUs (1024 microseconds). If no frame exchange sequence occurs using the block acknowledgement agreement within the duration, the block acknowledgement agreement shall be terminated after the duration. This field is set to 0, indicating that the timeout is disabled.

The WinStartO field is a transmit buffer control parameter for indicating the starting sequence number of the transmit window.

In a possible design of the present embodiment, the block acknowledgement parameter set includes at least one of: indication information indicating whether an aggregated MSDU is supported; a block acknowledgement policy; a TID; or a buffer size.

For the block acknowledgement parameter set field, FIG. 16 illustrates a schematic diagram of a block acknowledgement parameter set field format provided by an exemplary embodiment of the present disclosure. The block acknowledgement parameter set field includes at least one of: an A-MSDU supported field, a block acknowledgement policy field, a TID field, or a buffer size field.

Here, the A-MSDU supported field occupies 1 bit, the block acknowledgement policy field occupies 1 bit, the TID field occupies 4 bits, and the buffer size field occupies 10 bits.

The WinSizeO field is a transmit buffer control parameter, for indicating the buffer size of the transmit window negotiated in the block acknowledgement agreement. Here, the WinSizeO field indicates the number of buffers available for the specified TID. When the A-MSDU supported field is equal to 0, the number of bytes that each buffer can accommodate is equal to the maximum size of an MSDU. When the STA's supported A-MSDU field is equal to 1, the number of bytes that each buffer can accommodate is equal to the maximum size of an A-MSDU supported by the STA.

The WinStartB field is a receive reordering buffer control parameter, for indicating the sequence number field value of the first MSDU or A-MSDU (in ascending sequence number order) that has not yet been received.

The WinSizeB field is a receive reordering buffer control parameter, for indicating the size of the receive window.

The WinStartR field is a scoreboard context control parameter, which is a 12-bit unsigned integer that represents the starting sequence number, for indicating the lowest sequence number position in the block acknowledgement record bitmap (indexed by sequence number).

The WinEndR field indicates the highest sequence number of the current transmission window.

The WinSizeR field is a scoreboard context control parameter, for indicating the maximum transmission window size, which is set to the smaller value between the length of the bitmap and the value of the buffer size field in the relevant response frame that established the block acknowledgement agreement.

The block acknowledgment agreement context element format, the block acknowledgment agreement context parameter control field format, the block acknowledgment agreement context parameter set list field format, the single block acknowledgment agreement context parameter set field format, and the block acknowledgment parameter set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

### Security association context element

In a possible design of the present embodiment, the security association context may also be described as a security association scenario, which is information maintained for the security association process.

In a possible design of the present embodiment, the security association context element contains the PN configuration and PN counter state information at the transmitting end and/or the replay detection context and replay counter state information at the receiving end that the specified MLD has established and maintained with one or more peer MLDs for security association-related data encryption/decryption and/or integrity protection and verification. FIG. 17 is a schematic diagram of a security association context element format provided by an exemplary embodiment of the present disclosure. The security association context element format includes at least one of: an element ID field, a length field, an element ID extension field, a security association (SA) context parameters control field, or a security association context parameters set list field.

Here, the element ID field occupies 1 byte, the length field occupies 1 byte, the element ID extension field occupies 1 byte, the security association context parameters control field occupies 9 or 15 bytes, and the security association context parameters set list field occupies the variable number of bytes.

In a possible design of the present embodiment, the security association context element includes a security association context parameters control field for indicating at least one of: a device in which the security association context element is located; whether the device in which the security association context element is located and the non-access point multi-link device for which the security association context is used are the same device; the non-access point multi-link device for which the security association context is used, when the device in which the security association context element is located and the non-access point multi-link device for which the security association context is used are the same device; or the number of security association context parameter sets included in the security association context element.

In a possible design of the present embodiment, the device in which the security association context element is located is the current access point multi-link device.

For the security association context parameters control field, FIG. 18 illustrates a schematic diagram of a security association context parameters control field format provided by an exemplary embodiment of the present disclosure. The security association context parameters control field includes at least one of: an MLD MAC address field, a "whether peer MLD is the same MLD" field, a peer MLD MAC address field, a "the number of security association context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of security association context parameter sets" field occupies 16 bits, and the reserved field occupies 7 bits.

In a possible design of the present embodiment, the security association context element includes a security association context parameters set list field, including at least one security association context parameters set subfield, where one security association context parameters set subfield is used for indicating one security association context parameters set.

In a possible design of the present embodiment, the security association context parameters set subfield is used to indicate at least one of: a role of a device where the security association context is located within the security association context; the non-access point multi-link device for which the security association context is used; or a security association type of the security association context.

For the security association context parameter set list field, FIG. 19 illustrates a schematic diagram of a security association context parameters set list field format provided by an exemplary embodiment of the present disclosure. The security association context parameters set list field includes at least one of: one or more security association context parameters set fields.

Here, the number of bits occupied by the security association context parameters set field is variable.

In a possible design of the present embodiment, if the security association context parameters set subfield is used to indicate that the role of the device where the security association context is located within the security association context is an originator, the security association context parameters set subfield is further used to indicate at least one of: the number of replay counters; a TID; or the count of the replay counter for the TID.

In a possible design of the present embodiment, if the security association context parameters set subfield is used to indicate that the role of the device where the security association context is located within the security association context is a recipient, the security association context parameters set subfield is further used to indicate at least one of: the number of packet number (PN) counters; a TID; or the count of the packet number counter for the TID.

For the security association context parameters set field, in the case where the MLD in which the security association context described by the security association context parameters set field is located is a recipient MLD role, FIG. 20 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of replay counters" field, one or more TID fields, or one or more "the count of replay counter" fields.

Here, the MLD role field occupies 1 bit, the peer MLD field occupies 0 or 48 bits, the "PTKSA/GTKSA/TPKSA" field occupies 2 bits, the "the number of replay counters" field occupies 5 bits, the TID field occupies 8 bits, and the "the count of replay counter" field occupies 48 bits.

In the case where the MLD in which the security association context described by the security association context parameters set field is located is an originator MLD role, FIG. 21 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of PN counters" field, one or more TID fields, or one or more "the count of the PN counter" fields.

Here, the MLD role field occupies 1 bit, the peer MLD field occupies 0 or 48 bits, the "PTKSA/GTKSA/TPKSA" field occupies 2 bits, the "the number of PN counters" field occupies 5 bits, the TID field occupies 8 bits, the middle "the count of the PN counter" field occupies 0 or 48 bits, and the last "the count of the PN counter" field occupies 48 bits.

The MLD role field indicates the role of the MLD (in which the security association context described by the security association context parameters set field is located) within the security association context. For example, when the value of the MLD role field is 0, it indicates that the MLD in which the security association context described by the security association context parameters set field is located plays the role of a recipient MLD, that is, what is described is the replay context parameter set at the receiving end; and when the value of the MLD role field is 1, it indicates that the MLD in which the security association context described by the security association context parameters set field is located plays the role of an originator MLD, that is, what is described is the PN counter context parameter set at the transmitting end. Alternatively, when the value of the MLD role field is 1, it indicates that the MLD in which the security association context described by the security association context parameters set field is located plays the role of a recipient MLD; and when the value of the MLD role field is 0, it indicates that the MLD in which the security association context described by the security association context parameters set field is located plays the role of an originator MLD.

The "PTKSA/GTKSA/TPKSA" field indicates the type of security association corresponding to the replay context described by the replay context parameter set field, as illustrated in Table 4.

The block acknowledgement agreement context element format, the security association context parameters control field format, the security association context parameters set list field format, and the security association context parameters set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

In a possible design of the present embodiment, the second frame further includes third indication information for indicating that the context information includes information of a block acknowledgement agreement context and/or a security association context.

In a possible design of the present embodiment, the current and target access point multi-link devices belong to the same mobility domain MLD, at least one of the request frame or the response frame further includes: first indication information for indicating the mobility domain MLD.

In a possible design of the present embodiment, the transition is based on FT, at least one of the request frame or the response frame further includes: second indication information for indicating whether FT between the current and target access point multi-link devices affiliated with the same mobility domain MLD is supported or allowed. Exemplarily, the second indication information is referred to as the "FTinMobileDomainMLD" field, where when the value of this field is 1, it indicates that FT is supported or allowed between the current and target access point multi-link devices affiliated with the same mobility domain MLD; and when the value of this field is 0, it indicates that FT is not supported or allowed between the current and target access point multi-link devices affiliated with the same mobility domain MLD.

In a possible design of the present embodiment, the current and target access point multi-link devices include the current access point multi-link device and the target access point multi-link device. The request frame is transmitted to the current access point multi-link device, and then transmitted by the current access point multi-link device to the target access point multi-link device. The response frame is transmitted by the target access point multi-link device to the current access point multi-link device, and then fed back by the current access point multi-link device.

In a possible design of the present embodiment, the transition is based on FT, the request frame is an FT confirm frame and the response frame is an FT Ack frame.

The non-access point multi-link device transmits the FT confirm frame to the target access point multi-link device through the current access point multi-link device, and then the target access point multi-link device transmits the FT Ack frame to the non-access point multi-link device through the current access point multi-link device. The FT confirm frame includes at least one of: non-access point multi-link device information, target access point multi-link device information, MDE, block acknowledgement agreement context element, security association context element, or basic multi-link element. The FT Ack frame includes at least one of: non-access point multi-link device information, target access point multi-link device information, MDE, timeout interval element, block acknowledgement agreement context element, security association context element, or basic multi-link element.

Here, the FT confirm frame and the FT Ack frame carry the block acknowledgement agreement context element and the security association context element, indicating relevant block acknowledgement agreement context (or state) information and security association context (or state) information.

In a possible design of the present embodiment, the current and target access point multi-link devices belong to the same mobility domain MLD, the transmission module 2910 is configured to: transmit an FT request frame; and receive an FT response frame.

When the non-access point multi-link device determines that it needs to transition from the current access point multi-link device to the target access point multi-link device in the mobility domain MLD scenario, the non-access point multi-link device transmits the FT request frame to the target access point multi-link device through the current access point multi-link device, and then the target access point multi-link device transmits the FT response frame to the non-access point multi-link device through the current access point multi-link device. The FT request frame includes at least one of: non-access point multi-link device information, target access point multi-link device information, MDE, or basic multi-link element. The FT response frame includes at least one of: non-access point multi-link device information, target access point multi-link device information, MDE, or basic multi-link element.

Here, the FT request frame and the FT response frame carry the MDE (the "FTinMobileDomainMLD" field, the mobility domain MLD information field), indicating that FT between current and target access point multi-link devices affiliated with the same mobility domain MLD is supported or allowed.

In a possible design of the present embodiment, the transmission module 2910 is further configured to: transmit an association request frame; and receive an association response frame.

The non-access point multi-link device transmits the association request frame or the re-association request frame to the current access point multi-link device, and then the current access point multi-link device feeds back the association response frame or the re-association response frame to the non-access point multi-link device.

The association request frame or the re-association request frame transmitted by the non-access point multi-link device to the current access point multi-link device includes: mobility domain element (MDE), basic multi-link element.

The association response frame or the re-association response frame transmitted by the current access point multi-link device to the non-access point multi-link device includes: mobility domain element (MDE), basic multi-link element.

Here, the association request frame or the re-association request frame carries the MDE (the "FTinMobileDomainMLD" field, the mobility domain MLD information field), indicating that the non-access point multi-link device is to perform association with an access point multi-link device in the mobility domain MLD scenario (or the non-access point multi-link device is to be associated with the access point multi-link device affiliated with the mobility domain MLD), and indicating that FT between the current and target access point multi-link devices affiliated with the same mobility domain MLD is supported or allowed.

In a possible design of the present embodiment, the transition is based on FT, and the link reconfiguration is performed in a case where a first duration is less than or equal to a deadline time of the link reconfiguration.

Here, the first duration represents a duration between a transmission time of the FT request frame and a transmission time of the link reconfiguration request frame, and the first frame includes the link reconfiguration request frame.

In a possible design of the present embodiment, the transmission module 2910 is further configured to transmit fourth indication information, where the fourth indication information is used for indicating a deadline time or a timeout time of the link reconfiguration.

By way of example, the fourth indication information is referred to as a timeout interval element (TIE) for specifying a time interval and the timeout time.

In a possible design of the present embodiment, the fourth indication information performs indication using a start time and a timeout interval, or, the fourth instruction information performs indication using the deadline time.

In a possible design of the present embodiment, the start time is implicitly represented by a transmission time or a reception time of the fourth indication information. The timeout interval is explicitly indicated by the fourth indication information.

In the embodiments of the present disclosure, a timeout interval type value corresponding to the link reconfiguration deadline interval is added to the timeout interval type field of the timeout interval element, and is used to indicate that the timeout interval value field represents the link reconfiguration deadline interval. FIG. 22 is a schematic diagram of a timeout interval element format provided by an exemplary embodiment of the present disclosure. The timeout interval element format includes at least one of: an element ID field, a length field, a timeout interval type field, and a timeout interval value field.

Here, the element ID field occupies 1 byte, the length field occupies 1 byte, the timeout interval type field occupies 1 byte, and the timeout interval value field occupies 4 bytes.

The above-described timeout interval element format is an exemplary possible case. Under different embodiments or different designs, it is not excluded that at least one of the following designs may vary: the position of the timeout interval element in the frame, the arrangement order between the timeout interval element and other fields, the number of bytes occupied, or the element name. This embodiment is not limited thereto.

The timeout interval value field contains a 32-bit unsigned integer, where the link reconfiguration deadline interval may be set to 0, to indicate the absence of the deadline time. The definition of the timeout interval type field is illustrated in Table 5.

In a possible design of the present embodiment, the processing module 2920 is configured to: accept, by the current access point multi-link device, deletion of all links when the target access point multi-link device accepts establishment of at least one link; reject, by the current access point multi-link device, deletion of at least one link when the target access point multi-link device rejects establishment of all links.

In a possible design of the present embodiment, the processing module 2920 is configured to: accept, by the current access point multi-link device, deletion of all links other than links required to be retained, when the target access point multi-link device accepts the establishment of the at least one link.

In the present embodiment, the transmission module 2910 may be split into multiple transmission modules, for example, a first transmission module, a second transmission module. The transmission module is configured to transmit the first frame, and the second transmission module is configured to receive the first frame; or, the first transmission module is configured to receive the first frame, and the second transmission module is configured to transmit the first frame. The present embodiment does not limit the functions of different transmission modules.

In the present embodiment, the processing module 2920 may be split into multiple processing modules, for example, a first processing module, a second processing module. The processing module is configured to accept, by the current access point multi-link device, deletion of all links when the target access point multi-link device accepts establishment of at least one link, and the second processing module is configured to reject, by the current access point multi-link device, deletion of at least one link when the target access point multi-link device rejects establishment of all links; or the first processing module is configured to reject, by the current access point multi-link device, deletion of at least one link when the target access point multi-link device rejects establishment of all links, and the second processing module is configured to accept, by the current access point multi-link device, deletion of all links other than links required to be retained when the target access point multi-link device accepts establishment of at least one link. The present embodiment does not limit the functions of different processing modules.

The present embodiment uses a single transmission module 2910 for illustrative purposes, and the number of transmission modules 2910 is not limited.

The present embodiment uses a single processing module 2920 for illustrative purposes, and the number of processing modules 2920 is not limited.

For the functions of the transmission module 2910, the reference may be made to the operation 2610 of the embodiment of FIG. 26.

For the functions of the processing module 2920, the reference may be made to the operation 2610 of the embodiment of FIG. 26.

FIG. 30 illustrates a block diagram of a target point multi-link device provided by an exemplary embodiment of the present disclosure. The device may be implemented or partially implemented by software or hardware, or a combination of both. The device includes a transmission module 3010. Here, functions of the transmission module 3010 may be implemented as a transmitter or receiver in the target AP MLD.

The transmission module 3010 is configured to transmit and/or receive at least one first frame. Here, the at least one first frame is used to enable a transition of a non-access point multi-link device between a current access point multi-link device and the target access point multi-link device at different locations based on link reconfiguration.

In a possible design of the present embodiment, the current and target access point multi-link devices belong to the same mobility domain MLD, or the current and target access point multi-link devices belong to the same mobility domain.

The mobility domain MLD (or referred to as logical access point multi-link device) regards multiple non-collocated access point multi-link devices as one MLD, and the specific name of the mobility domain MLD is not limited in this embodiment.

In a possible design of the present embodiment, the transition of the non-access point multi-link device between the current and target access point multi-link devices includes at least one of transition scenario 1 or transition scenario 2.

The transition scenario 1: when the non-access point multi-link device is associated with the mobility domain MLD and the current and target access point multi-link devices belong to the same mobility domain MLD, the non-access point multi-link device performs transition of association at the access point multi-link device level affiliated with the mobility domain MLD between the current and target access point multi-link devices.

The transition scenario 2: when the non-access point multi-link device is associated with only one of the current and target access point multi-link devices, and the current and target access point multi-link devices are not affiliated with the same mobility domain MLD, the non-access point multi-link device performs transition of association between the current and target access point multi-link devices.

The transition in the embodiments of the present disclosure may also be described as switching alternatively.

For transition scenario 1, the transition of association at the access point multi-link device level affiliated with the mobility domain MLD means that: before transition, the non-access point multi-link device is associated with the mobility domain MLD, and the non-access point multi-link device establishes multi-link with an access point multi-link device affiliated with the mobility domain MLD (i.e., the links established between the non-access point multi-link device and the mobility domain MLD wholly or partially belong to links between the non-access point multi-link device and the access point multi-link device affiliated with the mobility domain MLD); after transition, the non-access point multi-link device is also associated with the mobility domain MLD, and the non-access point multi-link device establishes multi-link with another access point multi-link device affiliated with the mobility domain MLD (i.e., the links established between the non-access point multi-link device and the mobility domain MLD wholly or partially belong to links between the non-access point multi-link device and the another access point multi-link device affiliated with the mobility domain MLD).

For transition scenario 2, the non-access point multi-link device is associated with access point multi-link devices affiliated with different mobility domain MLDs before and after transition, thereby performing transition of association.

For a mobility domain MLD with which the current access point multi-link device of the current and target access point multi-link devices is affiliated, the mobility domain MLD has multiple affiliated access point multi-link devices including the current access point multi-link device.

For a mobility domain MLD with which the target access point multi-link device of the current and target access point multi-link devices is affiliated, the mobility domain MLD has multiple affiliated access point multi-link devices including the target access point multi-link device.

The transition provided by the embodiments of the present disclosure may include BSS transition, FT, seamless BSS transition, or seamless fast transition.

In a possible design of the present embodiment, the current and target access point multi-link devices belong to the same mobility domain MLD, and the mobility domain MLD is used for at least one of: providing connection services between the non-access point multi-link device or the current and target access point multi-link devices and a distribution system (DS); maintaining data continuity for the non-access point multi-link device during the transition between the current and target access point multi-link devices in a roaming process; authentication and/or association or re-association of the non-access point multi-link device; security association of the non-access point multi-link device; distribution of all or part of security association information of the non-access point multi-link device; synchronization of all or part of state and/or buffer information of upper layers of upper MAC sublayers (Upper-UMAC) of the current and target access point multi-link devices; managing distribution of authentication information of a link of the non-access point multi-link device; managing access point multi-link device-level association or re-association between the non-access point multi-link device and the current and target access point multi-link devices; for the target access point multi-link device of the current and target access point multi-link devices that establishes a multi-link with the non-access point multi-link device, selecting a MAC corresponding to the target access point multi-link device for data transmission; synchronization of first data between the current and target access point multi-link devices, the first data being used to maintain data communication between the non-access point multi-link device and the current and target access point multi-link devices or the DS; or exchanging or indicating MLD-level information through MAC sublayers of the current and target access point multi-link devices.

In a possible design of the present embodiment, the transmission module 3010 is configured to: transmit a link reconfiguration request frame, where the link reconfiguration request frame is used for indicating that the non-access point multi-link device requests link reconfiguration with the current and target access point multi-link devices to perform the transition; and receive a link reconfiguration response frame, where the link reconfiguration response frame is used for providing feedback on the link reconfiguration with the current and target access point multi-link devices to the non-access point multi-link device.

In a possible design of the present embodiment, the current and target access point multi-link devices include the current access point multi-link device and the target access point multi-link device, and the link reconfiguration request frame is transmitted by the non-access point multi-link device to the current access point multi-link device and transmitted by the current access point multi-link device to the target access point multi-link device.

In a possible design of the present embodiment, the current and target access point multi-link devices include the current access point multi-link device and the target access point multi-link device, and the link reconfiguration response frame is transmitted by the target access point multi-link device to the current access point multi-link device and then fed back by the current access point multi-link device.

In a case where the non-access point multi-link device needs to transition from communication with the current access point multi-link device to communication with the target access point multi-link device, the non-access point multi-link device transmits a link reconfiguration request frame to the current access point multi-link device, where the link reconfiguration request frame is used for requesting deletion of at least one link with the current access point multi-link device; and the current access point multi-link device transmits a link reconfiguration request frame to the target access point multi-link device, where the link reconfiguration request frame is used to request establishment of at least one link between the non-access point multi-link device and the target access point multi-link device.

The target access point multi-link device transmits a link reconfiguration response frame to the current access point multi-link device, where the link reconfiguration response frame is used to indicate a link reconfiguration status corresponding to the target access point multi-link device, for example, whether to establish a link with the non-access point multi-link device. The current access point multi-link device transmits a link reconfiguration response frame to the non-access point multi-link device, where the link reconfiguration response frame is used to indicate link reconfiguration statuses corresponding to the current access point multi-link device and the target access point multi-link device, for example, whether the current access point multi-link device deletes a link and whether the target access point multi-link device establishes a link with the non-access point multi-link device.

In a possible design of the present embodiment, the current and target access point multi-link devices include the current access point multi-link device and the target access point multi-link device. The link reconfiguration request frame includes: a first element corresponding to the current access point multi-link device, for deleting at least one link with the current access point multi-link device; and a second element corresponding to the target access point multi-link device, for establishing at least one link with the target access point multi-link device.

In a possible design of the present embodiment, the first element includes a first reconfiguration multi-link element for describing reconfiguration multi-link information between the non-access point multi-link device and the current access point multi-link device; and the second element includes a second reconfiguration multi-link element for describing reconfiguration multi-link information between the non-access point multi-link device and the target access point multi-link device.

In a possible design of the present embodiment, the link reconfiguration request frame further includes: a first TID-to-link mapping element for TID-to-link mapping on the link established with the target access point multi-link device.

In a possible design of the present embodiment, the format of the link reconfiguration request frame is as illustrated in Table 1 in the embodiment of FIG. 4.

In a possible design of the present embodiment, the current and target access point multi-link devices include the current access point multi-link device and the target access point multi-link device, and the link reconfiguration response frame includes: a third element corresponding to the current access point multi-link device, for indicating a link reconfiguration status corresponding to the current access point multi-link device; and a fourth element corresponding to the target access point multi-link device, for indicating a link reconfiguration status corresponding to the target access point multi-link device.

In a possible design of the present embodiment, the third element includes at least one of: a reconfiguration status list for the current access point multi-link device, including at least one reconfiguration status tuple; or the number of reconfiguration status tuples for the current access point multi-link device. The fourth element includes at least one of: a reconfiguration status list for the target access point multi-link device, including at least one reconfiguration status element; or the number of reconfiguration status tuples for the target access point multi-link device.

Here, the reconfiguration status element is used to indicate a reconfiguration status of one link.

In a possible design of the present embodiment, the link reconfiguration response frame may be an action frame of a protected EHT or UHR, or UHR+ type. The format of the link reconfiguration response frame is as illustrated in Table 2 in the embodiment of FIG. 4.

In a possible design of the present embodiment, the current and target access point multi-link devices belong to the same mobility domain MLD, or the current and target access point multi-link devices belong to the same mobility domain, and the transmission module 3010 is configured to: transmit and/or receive first indication information, where the first indication information is used for indicating the mobility domain MLD.

In a possible design of the present embodiment, the first indication information is carried in at least one of: a link reconfiguration request frame; a link reconfiguration response frame; a request frame; a response frame; an FT request frame; an FT response frame; an FT confirm frame; an FT acknowledgement (Ack) frame; an association request frame; an association response frame; a re-association request frame; or a re-association response frame.

Here, the request frame is used to indicate that the non-access point multi-link device requests replication or migration of context information between the current and target access point multi-link devices to maintain data connectivity during the transition, and the response frame is used to indicate a result of the replication or migration of the context information between the current and target access point multi-link devices to the non-access point multi-link device.

In a possible design of the present embodiment, the first indication information includes at least one of: a mobility domain MLD identifier (ID); or a mobility domain MLD MAC address.

Exemplarily, the first indication information is referred to as a mobility domain element (MDE), which is used to indicate that link reconfiguration is performed in a mobility domain MLD scenario, and carries information such as mobility domain MLD information (e.g., mobility domain MLD ID or mobility domain MLD MAC address), whether or not the FT is in the same mobility domain MLD, and the like. The access point multi-link device may use the MDE to advertise that the access point multi-link device is included in or affiliated with the mobility domain MLD, and advertise the access point multi-link device's support for FT functions and FT policy information, including whether FT between the current and target access point multi-link devices affiliated with the same mobility domain MLD is supported or allowed.

In a possible design of the present embodiment, the transition is based on FT, the transmission module 3010 is configured to: transmit and/or receive second indication information, where the second indication information is used for indicating whether FT between the current and target access point multi-link devices affiliated with the same mobility domain MLD is supported or allowed.

Compared to FT between the current and target access point multi-link devices, the FT between the current and target access point multi-link devices affiliated with the same mobility domain MLD is used for maintaining data connectivity during the transition.

In a possible design of the present embodiment, the second indication information is carried in at least one of: a link reconfiguration request frame; a link reconfiguration response frame; a request frame; a response frame; an FT request frame; an FT response frame; an FT confirm frame; an FT Ack frame; an association request frame; an association response frame; a re-association request frame; or a re-association response frame.

Here, the request frame is used to indicate that the non-access point multi-link device requests replication or migration of context information between the current and target access point multi-link devices to maintain data connectivity during the transition, and the response frame is used to indicate a result of the replication or migration of the context information between the current and target access point multi-link devices to the non-access point multi-link device.

In a possible design of the present embodiment, based on the mobility domain MLD architecture, a high-level architecture of the mobility domain MLD and its affiliated access point multi-link devices and the non-access point multi-link devices for the data connectivity-oriented transition of a non-access point multi-link device (or STA) from the current access point multi-link device (or AP) to the target access point multi-link device (or AP) is illustrated in FIG. 6.

The high-level architecture includes at least one of: a DS 610, a mobility domain MLD common sublayer 620, a first transition module 630, an affiliated MLD upper MAC sublayer 640, an affiliated MLD lower MAC sublayer 650, a second transition module 660, a non-access point multi-link device lower MAC sublayer 670, or a non-access point multi-link device upper MAC sublayer 680.

The DS 610 is an architecture for distributing computing and communication functions among multiple nodes or devices. The primary function of the DS is to coordinate and manage computing and communication tasks in distributed environments for efficient data transmission and collaboration.

The mobility domain MLD common sublayer 620 includes a mobility domain access point multi-link device 621 with an MLD MAC address of Q, for performing data communication with the DS 610 through a first MAC-service access point (SAP).

Access point multi-link device 1 with an MLD MAC address of M and access point multi-link device 2 with an MLD MAC address of N have the same functions, and access point multi-link device 1 is taken as an example for illustration. The mobility domain access point multi-link device 621 performs data communication with the access point multi-link device 1 through the first transition module 630. The first transition module 630 is a module in the mobility domain access point multi-link device 621, or a module in the access point multi-link device 1, or a module in another access point multi-link device.

The access point multi-link device 1 performs data communication with AP1 with an MAC address of w and AP2 with an MAC address of x via a second MAC-SAP. The functions of AP1 and AP2 are the same, and AP1 is taken as an example for illustration. The AP1 performs data communication with the second transition module 660 through link 1. The second transition module 660 is a module in a non-access point multi-link device 681, or a module in the access point multi-link device 1, or a module in another access point multi-link device.

The non-AP STA1 with an MAC address of y and the non-AP STA2 with an MAC address of z have the same functions, the non-AP STA1 is associated with the AP1 and the AP3 with an MAC address of r, and the non-AP STA2 is associated with the AP2 and the AP4 with an MAC address of s, and the non-AP STA1 is taken as an example for illustration. The non-access point multi-link device with an MLD MAC address of P performs data communication with the non-AP STA1 through a fourth MAC-SAP.

The functions of the mobility domain MLD common sublayer 620 include at least one of: (1) providing a distribution system access function (DSAF) to the affiliated access point multi-link device (e.g., access point multi-link device 1, access point multi-link device 2) of the mobility domain MLD; (2) authentication, association, and re-association between the non-access point multi-link device 681 and the mobility domain access point multi-link device 621; (3) security association (such as pairwise master key security association (PMKSA), pairwise transient key security association (PTKSA)) and managing distribution of GTK/IGTK/BIGTK; (4) managing partial association and re-association between the non-access point multi-link device 681 and the affiliated access point multi-link device of the mobility domain access point multi-link device; (5) for the affiliated access point multi-link device associated with the non-access point multi-link device 681, selecting an MAC corresponding to the affiliated access point multi-link device for data transmission; (6) synchronization (replication or migration) of all or part of state and buffer information of upper layers of upper MAC sublayers (Upper-UMAC) of affiliated MLDs of the mobility domain MLD; or (7) exchanging or indicating MLD-level management information through MAC sublayers of the affiliated MLD.

Here, the synchronization of all or part of state and buffer information of upper layers of upper MAC sublayers (Upper-UMAC) of affiliated MLDs of the mobility domain MLD includes: for a designated non-access point multi-link device associated with the mobility domain MLD, transition of the non-access point multi-link device from the current access point multi-link device associated to the target access point multi-link device to be associated involves synchronization of all or part of state and buffer information of upper layers of upper MAC sublayers (Upper-UMAC) of the affiliated MLDs, to maintain the continuity of the data communication session and the persistence of data transmission in the process where the non-access point multi-link device is associated with different affiliated access point multi-link devices due to roaming.

All or part of the state and buffer information of the upper layers of upper MAC sublayers (Upper-UMAC) of the affiliated MLDs of the mobility domain MLD (i.e., the session or protocol state and buffer information (for the designated non-access point multi-link device) maintained for data exchange with the designated non-access point multi-link device) include at least one of: (1) sequence number (SN)/packet number (PN) allocation state and related buffer data for unicast frames; (2) SN allocation state and related buffer data for group addressed MAC service data units (MSDUs); (3) power-saving buffer data for individually addressed frames; (4) block Ack session state, and duplicate detection and reordering buffer data for received frames; or (5) PN counter state at the transmitting end and replay detection state at the receiving end, and related buffer data.

In a possible design of the present embodiment, the link reconfiguration response frame includes a status code for indicating a status code of the link reconfiguration in a mobility domain MLD scenario. When a value of the status code is a first value, the status code is used to indicate that mobility domain link reconfiguration is denied.

The format of the link reconfiguration response frame is illustrated in Table 2 of the embodiment of FIG. 4.

In a possible design of the present embodiment, the reconfiguration status list subfield of the current access point multi-link device and the reconfiguration status list subfield of the target access point multi-link device both adopt the reconfiguration status list format. The reconfiguration status list contains one or more reconfiguration status tuples, as illustrated in Figure 7. FIG. 7 is a schematic diagram illustrating a reconfiguration status list subfield format according to an exemplary embodiment of the present disclosure. The reconfiguration status list subfield format includes at least one of: a link ID Info field, or a status field. In the embodiments of the present disclosure, the field may be referred to as the domain, and the subfield may be referred to as subdomain.

Here, the link ID Info field occupies 1 byte and the status field occupies 2 bytes. The format of the link ID Info field is as defined in IEEE 802.11be. The link ID field in the link ID Info field indicates a link ID corresponding to the access point multi-link device, and is used in the corresponding link reconfiguration request frame for deleting an existing link or add a new link. The status field indicates the status of the link reconfiguration operation of the link corresponding to the link ID field.

The above-described reconfiguration status list subfield format is an exemplary possible case. Under different embodiments or different designs, it is not excluded that at least one of the following designs may vary: the position of the reconfiguration status list subfield in the frame, the arrangement order between the reconfiguration status list subfield and other fields, the number of bytes occupied, or the field name. The present embodiment is not limited thereto.

In a possible design of the present embodiment, the link reconfiguration response frame includes group key data for indicating a group key for a corresponding link successfully added to the target access point multi-link device. The group key data subfield is optionally present and contains the group key for the corresponding link successfully added to the target access point multi-link device (the value of the status code is SUCCESS). FIG. 8 illustrates a schematic diagram of a group key data subfield format provided by an exemplary embodiment of the present disclosure. The group key data subfield format includes at least one of: a key data length field, or a key data field.

The key data length field occupies 2 bytes, and the number of bytes occupied by the key data field is variable.

The group key data subfield contains an MLO GTK KDE, an MLO IGTK KDE, and an MLO BIGTK KDE, which provide the group key, identified by the link ID subfield, for the link added to the target access point multi-link device.

In the case where the link reconfiguration response frame includes the group key data subfield and also includes an OCI element, an OCI element subfield is optionally present.

The above-described group key data subfield format is an exemplary possible case. Under different embodiments or different designs, it is not excluded that at least one of the following designs may vary: the position of the group key data subfield in the frame, the arrangement order between the group key data subfield and other fields, the number of bytes occupied, or the field name. The present embodiment is not limited thereto.

In a possible design of the present embodiment, the link reconfiguration response frame includes a basic multi-link element for providing Per-STA profiles for one or more affiliated APs of the target access point multi-link device.

In the case where the target access point multi-link device adds at least one link, the link reconfiguration response frame includes a basic multi-link element for providing Per-STA profiles for one or more affiliated APs of the target access point multi-link device. These APs respectively correspond to the links successfully added to the multi-link reconfiguration of the non-access point multi-link device. In the case where the target access point multi-link device does not add a link, the link reconfiguration response frame excludes the basic multi-link element.

In a possible design of the present embodiment, the link reconfiguration response frame includes a second TID-to-link mapping element for responding to TID-to-link mapping on a link established with the target access point multi-link device.

In a possible design of the present embodiment, the link reconfiguration response frame is used for the access point multi-link device (including the current access point multi-link device and the target access point multi-link device) in the mobility domain MLD scenario to respond to the link reconfiguration request frame transmitted from the non-access point multi-link device, thereby accepting or rejecting the request of the non-access point multi-link device to delete and/or add link(s) on established multi-link setup.

For FT, the link reconfiguration response frame is used by the access point multi-link device (including the current access point multi-link device and the target access point multi-link device) to respond to the link reconfiguration request frame transmitted from the non-access point multi-link device in the mobility domain MLD scenario, to accept or reject the request of the non-access point multi-link device to delete link(s) from the established multi-link of the current access point multi-link device and to add new link(s) to the target access point multi-link device.

In a possible design of the present embodiment, the transition is based on FT, at least one of the link reconfiguration request frame or the link reconfiguration response frame further includes second indication information, for indicating whether FT between the current and target access point multi-link devices affiliated with the same mobility domain MLD is supported or allowed.

Exemplarily, the second indication information is referred to as a "FTinMobileDomainMLD" field, where when the value of this field is 1, it indicates that FT is supported or allowed between the current and target access point multi-link devices affiliated with the same mobility domain MLD, and when the value of this field is 0, it indicates that FT is not supported or allowed between the current and target access point multi-link devices affiliated with the same mobility domain MLD.

FIG. 9 illustrates a schematic diagram of a mobility domain element format provided by an exemplary embodiment of the present disclosure. The mobility domain element format includes at least one of: an element ID field, a length field, a mobility domain identifier (MDID) field, an FT capability and policy field, a mobility domain MLD ID field, or a mobility domain MLD MAC address field.

Here, the element ID field occupies 1 byte, the length field occupies 1 byte, the MDID field occupies 2 bytes, the FT capability and policy field occupies 1 byte, the mobility domain MLD ID field occupies 0 or 1 byte, and the mobility domain MLD MAC address field occupies 0 or 6 bytes.

For the FT capability and policy field, FIG. 10 illustrates a schematic diagram of an FT capability and policy field format provided by an exemplary embodiment of the present disclosure. The FT capability and policy field includes at least one of: an FT over DS field, a resource request protocol capability field, an FTinMobileDomainMLD field, or a reserved field.

Here, the FT over DS field occupies 1 bit, the resource request protocol capability field occupies 1 bit, the FTinMobileDomainMLD field occupies 1 bit, and the reserved field occupies 5 bits.

The "FTinMobileDomainMLD" field indicates whether FT between the current and target access point multi-link devices affiliated with the same mobility domain MLD is supported or allowed. For example, when the value of the "FTinMobileDomainMLD" field is 1, it indicates that FT is supported or allowed between the current and target access point multi-link devices affiliated with the same mobility domain MLD, and when the value of the "FTinMobileDomainMLD" field is 0, it indicates that FT is not supported or allowed between the current and target access point multi-link devices affiliated with the same mobility domain MLD. Alternatively, when the value of the "FTinMobileDomainMLD" field is 0, it may indicate that FT is supported or allowed between the current and target access point multi-link devices affiliated with the same mobility domain MLD, and when the value of the "FTinMobileDomainMLD" field is 1, it may indicate that FT is not supported or allowed between the current and target access point multi-link devices affiliated with the same mobility domain MLD, which are not limited in this embodiment.

The "FTinMobileDomainMLD" field may control the behavior of the STA or the non-access point multi-link device to perform the FT. The non-access point multi-link device may determine the transition method recommended by the access point multi-link device and the protocol supported by the access point multi-link device, using the information from the MDE.

The above-described mobility domain element format and the FT capability and policy field format are exemplary possible cases. Under different embodiments or different designs, it is not excluded that at least one of the following designs may vary: the positions of the mobility domain element and the FT capability and policy field in a frame, the arrangement order between the mobility domain element as well as the FT capability and policy field and other fields, the number of occupied bytes, the number of occupied bits, the element name, or the field name. The present embodiment is not limited thereto.

In a possible design of the present embodiment, the transmission module 3010 is configured to: transmit and/or receive at least one second frame, where the second frame is used for synchronizing context information related to the non-access point multi-link device between the current and target access point multi-link devices, and the context information includes at least one of state information or buffer information.

In a possible design of the present embodiment, the transmission module 3010 is configured to: transmit a request frame, where the request frame is used for indicating that the non-access point multi-link device requests synchronization of the context information related to the non-access point multi-link device between the current and target access point multi-link devices; and receive a response frame, where the response frame is used for providing feedback to the non-access point multi-link device regarding the synchronization of the context information related to the non-access point multi-link device between the current and target access point multi-link devices.

In a possible design of the present embodiment, the context information includes at least one of: first context information, related to a block acknowledgement (Ack) agreement context; or second context information, related to a security association context.

In a possible design of the present embodiment, the first context information is carried in a block acknowledgement agreement context element.

**In** a possible design of the present embodiment, the second context information is carried in a security association context element.

### Block acknowledgement agreement context element

**In** a possible design of the present embodiment, the block acknowledgement agreement context may also be described as a block Ack agreement scenario, block Ack context, or block Ack scenario, which is information maintained for the block acknowledgement process.

**In** a possible design of the present embodiment, the block acknowledgement agreement context element includes block acknowledgement agreement context or status information that the specified MLD has established and maintained with one or more peer MLDs (i.e., non-access point multi-link devices). The block acknowledgement agreement context element includes a block acknowledgement agreement context parameter control field for indicating at least one of: a device in which the block acknowledgement agreement context element is located; whether the device in which the block acknowledgement agreement context element is located and the non-access point multi-link device for which the block acknowledgement agreement context is used are the same device; the non-access point multi-link device for which the block acknowledgement agreement context is used, when the device in which the block acknowledgement agreement context element is located and the non-access point multi-link device for which the block acknowledgement agreement context is used are the same device; or the number of block acknowledgement agreement context parameter sets included in the block acknowledgement agreement context element.

**In** a possible design of the present embodiment, the device in which the block acknowledgement agreement context element is located is the current access point multi-link device.

FIG. 11 illustrates a schematic diagram of a block acknowledgement agreement context element format provided by an exemplary embodiment of the present disclosure. The block acknowledgement agreement context element format includes at least one of: an element ID field, a length field, an element ID extension field, a block acknowledgement agreement context parameter control field, or a block acknowledgement agreement context parameter set list field. In the embodiments of the present disclosure, the field may be referred to as the domain, and the subfield may be referred to as the subdomain.

Here, the element ID field occupies 1 byte, the length field occupies 1 byte, the element ID extension field occupies 1 byte, the block acknowledgement agreement context parameter control field occupies 9 or 15 bytes, and the block acknowledgement agreement context parameter set list field occupies the variable number of bytes.

For the block acknowledgement agreement context parameter control field, FIG. 12 illustrates a schematic diagram of a block acknowledgement agreement context parameter control field format provided by an exemplary embodiment of the present disclosure. The block acknowledgement agreement context parameter control field includes at least one of: an MLD MAC address field, a "whether peer MLD is the same MLD" field, a peer MLD MAC address field, a "the number of single block acknowledgement agreement context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of single block acknowledgement agreement context parameter sets" field occupies 16 bits, and the reserved field occupies 7 bits.

The MLD MAC address field indicates the MAC address of the MLD where the block acknowledgement agreement context described by the block acknowledgement agreement context element is located. Here, the MLD MAC address may be an MLD address of a roaming MLD.

The "whether peer MLD is the same MLD" field indicates whether the peer MLD for which the block acknowledgement agreement context of the MLD described by the block acknowledgement agreement context element is used is the same MLD. When the value of this field is 0, it indicates that the peer MLD for which the block acknowledgement agreement context of the MLD described by the block acknowledgement context element is used is the same MLD, and when the value of this field is 1, it indicates that the peer MLD for which the block acknowledgement agreement context of the MLD described by the block acknowledgement agreement context element is used is multiple MLDs. Alternatively, when the value of this field is 1, it indicates that the peer MLD for which the block acknowledgement agreement context of the MLD described by the block acknowledgement agreement context element is used is the same MLD, and when the value of this field is 0, it indicates that the peer MLD for which the block acknowledgement agreement context of the MLD described by the block acknowledgement agreement context element is used is multiple MLDs. This is not limited in the embodiments of the present disclosure.

The peer MLD MAC address field indicates the MAC address of the peer MLD for which the block acknowledgement agreement context of the MLD described by the block acknowledgement agreement context element is used. When the value of the field is 0, the peer MLD MAC address field is present in the block acknowledgement agreement context parameter control field; and when the value of the field is 1, the peer MLD MAC address field is absent in the block acknowledgement agreement context parameter control field. Alternatively, when the value of the field is 1, the peer MLD MAC address field is present in the block acknowledgement agreement context parameter control field; and when the value of the field is 0, the peer MLD MAC address field is absent in the block acknowledgement agreement context parameter control field. This is not limited in the embodiments of the present disclosure.

The "the number of single block acknowledgement agreement context parameter sets" field is a 16-bit unsigned integer indicating the number of single block acknowledgement agreement context parameter set fields in the block acknowledgement agreement context parameter set list field.

In a possible design of the present embodiment, the block acknowledgement agreement context element includes a block acknowledgement agreement context parameter set list field, including at least one block acknowledgement agreement context parameter set subfield, where one block acknowledgement agreement context parameter set subfield is used for indicating one block acknowledgement agreement context parameter set.

In a possible design of the present embodiment, the block acknowledgement agreement context parameter set subfield is used to indicate at least one of: a role of a device where the block acknowledgement agreement context is located within the block acknowledgement agreement context; the non-access point multi-link device for which the block acknowledgment agreement context is used; a block acknowledgement parameter set; or a block acknowledgement timeout.

For the block acknowledgement agreement context parameter set list field, FIG. 13 illustrates a schematic diagram of a block acknowledgement agreement context parameter set list field format provided by an exemplary embodiment of the present disclosure. The block acknowledgement agreement context parameter set list field includes at least one of: one or more single block acknowledgement agreement context parameter set fields, or a padding field.

Here, the number of bits occupied by the single block acknowledgement agreement context parameter set field is variable, and the number of bits occupied by the padding field is variable.

In a possible design of the present embodiment, if the block acknowledgement agreement context parameter set subfield is used to indicate that the role of the device where the corresponding block acknowledgement agreement context is located within the block acknowledgement agreement context is an originator, the block acknowledgement agreement context parameter set subfield is further used to indicate at least one of: a starting sequence number of a transmit window; or a size of the transmit window.

In a possible design of the present embodiment, if the block acknowledgement agreement context parameter set subfield is used to indicate that the role of the device where the block acknowledgement agreement context is located within the block acknowledgement agreement context is a recipient, the block acknowledgement agreement context parameter set subfield is further used to indicate at least one of: a starting sequence number of a receive buffer; a size of a receive window; a starting sequence number of a record bitmap; an ending sequence number of the record bitmap; or a size of the record bitmap.

For the single block acknowledgement agreement context parameter set field, in the case where the MLD where the block acknowledgement agreement context is located is an originator MLD role, FIG. 14 illustrates a diagram of a single block acknowledgement agreement context parameter set field format provided by an exemplary embodiment of the present disclosure. The single block acknowledgement agreement context parameter set field includes at least one of: an MLD role field (originator MLD), a peer MLD field, a block acknowledgement parameter set field, a block acknowledgement timeout field, a "starting sequence number of transmit window (WinStartO)" field, and a "size of transmit window (WinStartO)" field.

Here, the MLD role field (originator MLD) occupies 1 bit, the peer MLD field occupies 0 or 48 bits, the block acknowledgement parameter set field occupies 16 bits, the block acknowledgement timeout field occupies 8 bits, the WinStartO field occupies 12 bits, and the WinStartO field occupies 10 bits.

In the case where the MLD where the block acknowledgement agreement context is located is a recipient MLD role, FIG. 15 illustrates a schematic diagram of a single block acknowledgement agreement context parameter set field format provided by an exemplary embodiment of the present disclosure. The single block acknowledgement agreement context parameter set field includes at least one of: an MLD role field (recipient MLD), a peer MLD field, a block acknowledgement parameter set field, a block acknowledgement timeout field, a "the starting sequence number of the receive buffer (WinStartB)" field, a "the size of the receive window (WinSizeB)" field, a "the starting sequence number of the record bitmap (WinStartR)" field, an "the ending sequence number of the record bitmap (WinEndR)" field, or a "the size of the record bitmap (WinSizeR)" field.

Here, the MLD role field (recipient MLD) occupies 1 bit, the peer MLD field occupies 0 or 48 bits, the block acknowledgement parameter set field occupies 48 bits, the block acknowledgement timeout field occupies 16 bits, the WinStartB field occupies 12 bits, the WinSizeB field occupies 10 bits, the WinStartR field occupies 12 bits, the WinEndR field occupies 12 bits, and the WinSizeR field occupies 10 bits.

The MLD role field indicates the role of the MLD (in which the block acknowledgement agreement context described by the single block acknowledgement agreement context parameter set is located) within the block acknowledgement agreement. Exemplarily, when the value of the MLD role field is 0, it indicates that the MLD in which the block acknowledgement agreement context described by the single block acknowledgement agreement context parameter set is located plays the role of the originator MLD within the block acknowledgement agreement; and when the value of the MLD role field is 1, it indicates that the MLD in which the block acknowledgement agreement context described by the single block acknowledgement agreement context parameter set is located plays the role of the recipient MLD within the block acknowledgement agreement. Alternatively, when the value of the MLD role field is 1, it indicates that the MLD in which the block acknowledgement agreement context described by the single block acknowledgement agreement context parameter set is located plays the role of the originator MLD within the block acknowledgement agreement; and when the value of the MLD role field is 0, it indicates that the MLD in which the block acknowledgement agreement context described by the single block acknowledgement agreement context parameter set is located plays the role of the recipient MLD within the block acknowledgement agreement.

When the MLD in which the block acknowledgement agreement context is located is an originator role, the single block acknowledgement agreement context parameter set format is illustrated in FIG. 14, and when the MLD in which the block acknowledgement agreement context is located is a recipient role, the single block acknowledgement agreement context parameter set format is illustrated in FIG. 15.

The peer MLD field indicates the MAC address of the peer MLD for which the block acknowledgement agreement context described by the single block acknowledgement agreement context parameter set field is used.

The block acknowledgement parameter set field indicates the parameter set related to the established block acknowledgement agreement corresponding to the block acknowledgement agreement context described by the single block acknowledgement agreement context parameter set field.

The block acknowledgement timeout field contains a duration in units of TUs (1024 microseconds). If no frame exchange sequence occurs using the block acknowledgement agreement within the duration, the block acknowledgement agreement shall be terminated after the duration. This field is set to 0, indicating that the timeout is disabled.

The WinStartO field is a transmit buffer control parameter for indicating the starting sequence number of the transmit window.

In a possible design of the present embodiment, the block acknowledgement parameter set includes at least one of: indication information indicating whether an aggregated MSDU is supported; a block acknowledgement policy; a TID; or a buffer size.

For the block acknowledgement parameter set field, FIG. 16 illustrates a schematic diagram of a block acknowledgement parameter set field format provided by an exemplary embodiment of the present disclosure. The block acknowledgement parameter set field includes at least one of: an A-MSDU supported field, a block acknowledgement policy field, a TID field, or a buffer size field.

Here, the A-MSDU supported field occupies 1 bit, the block acknowledgement policy field occupies 1 bit, the TID field occupies 4 bits, and the buffer size field occupies 10 bits.

The WinSizeO field is a transmit buffer control parameter, for indicating the buffer size of the transmit window negotiated in the block acknowledgement agreement. Here, the WinSizeO field indicates the number of buffers available for the specified TID. When the A-MSDU supported field is equal to 0, the number of bytes that each buffer can accommodate is equal to the maximum size of an MSDU. When the STA's supported A-MSDU field is equal to 1, the number of bytes that each buffer can accommodate is equal to the maximum size of an A-MSDU supported by the STA.

The WinStartB field is a receive reordering buffer control parameter, for indicating the sequence number field value of the first MSDU or A-MSDU (in ascending sequence number order) that has not yet been received.

The WinSizeB field is a receive reordering buffer control parameter, for indicating the size of the receive window.

The WinStartR field is a scoreboard context control parameter, which is a 12-bit unsigned integer that represents the starting sequence number, for indicating the lowest sequence number position in the block acknowledgement record bitmap (indexed by sequence number).

The WinEndR field indicates the highest sequence number of the current transmission window.

The WinSizeR field is a scoreboard context control parameter, for indicating the maximum transmission window size, which is set to the smaller value between the length of the bitmap and the value of the buffer size field in the relevant response frame that established the block acknowledgement agreement.

The block acknowledgment agreement context element format, the block acknowledgment agreement context parameter control field format, the block acknowledgment agreement context parameter set list field format, the single block acknowledgment agreement context parameter set field format, and the block acknowledgment parameter set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

### Security association context element

In a possible design of the present embodiment, the security association context may also be described as a security association scenario, which is information maintained for the security association process.

In a possible design of the present embodiment, the security association context element contains the PN configuration and PN counter state information at the transmitting end and/or the replay detection context and replay counter state information at the receiving end that the specified MLD has established and maintained with one or more peer MLDs for security association-related data encryption/decryption and/or integrity protection and verification. FIG. 17 is a schematic diagram of a security association context element format provided by an exemplary embodiment of the present disclosure. The security association context element format includes at least one of: an element ID field, a length field, an element ID extension field, a security association (SA) context parameters control field, or a security association context parameters set list field.

Here, the element ID field occupies 1 byte, the length field occupies 1 byte, the element ID extension field occupies 1 byte, the security association context parameters control field occupies 9 or 15 bytes, and the security association context parameters set list field occupies the variable number of bytes.

In a possible design of the present embodiment, the security association context element includes a security association context parameters control field for indicating at least one of: a device in which the security association context element is located; whether the device in which the security association context element is located and the non-access point multi-link device for which the security association context is used are the same device; the non-access point multi-link device for which the security association context is used, when the device in which the security association context element is located and the non-access point multi-link device for which the security association context is used are the same device; or the number of security association context parameter sets included in the security association context element.

In a possible design of the present embodiment, the device in which the security association context element is located is the current access point multi-link device.

For the security association context parameters control field, FIG. 18 illustrates a schematic diagram of a security association context parameters control field format provided by an exemplary embodiment of the present disclosure. The security association context parameters control field includes at least one of: an MLD MAC address field, a "whether peer MLD is the same MLD" field, a peer MLD MAC address field, a "the number of security association context parameter sets" field, or a reserved field.

Here, the MLD MAC address field occupies 48 bits, the "whether peer MLD is the same MLD" field occupies 1 bit, the peer MLD MAC address field occupies 0 or 48 bits, the "the number of security association context parameter sets" field occupies 16 bits, and the reserved field occupies 7 bits.

In a possible design of the present embodiment, the security association context element includes a security association context parameters set list field, including at least one security association context parameters set subfield, where one security association context parameters set subfield is used for indicating one security association context parameters set.

In a possible design of the present embodiment, the security association context parameters set subfield is used to indicate at least one of: a role of a device where the security association context is located within the security association context; the non-access point multi-link device for which the security association context is used; or a security association type of the security association context.

For the security association context parameter set list field, FIG. 19 illustrates a schematic diagram of a security association context parameters set list field format provided by an exemplary embodiment of the present disclosure. The security association context parameters set list field includes at least one of: one or more security association context parameters set fields.

Here, the number of bits occupied by the security association context parameters set field is variable.

In a possible design of the present embodiment, if the security association context parameters set subfield is used to indicate that the role of the device where the security association context is located within the security association context is an originator, the security association context parameters set subfield is further used to indicate at least one of: the number of replay counters; a TID; or the count of the replay counter for the TID.

In a possible design of the present embodiment, if the security association context parameters set subfield is used to indicate that the role of the device where the security association context is located within the security association context is a recipient, the security association context parameters set subfield is further used to indicate at least one of: the number of packet number (PN) counters; a TID; or the count of the packet number counter for the TID.

For the security association context parameters set field, in the case where the MLD in which the security association context described by the security association context parameters set field is located is a recipient MLD role, FIG. 20 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of replay counters" field, one or more TID fields, or one or more "the count of replay counter" fields.

Here, the MLD role field occupies 1 bit, the peer MLD field occupies 0 or 48 bits, the "PTKSA/GTKSA/TPKSA" field occupies 2 bits, the "the number of replay counters" field occupies 5 bits, the TID field occupies 8 bits, and the "the count of replay counter" field occupies 48 bits.

In the case where the MLD in which the security association context described by the security association context parameters set field is located is an originator MLD role, FIG. 21 illustrates a diagram of a security association context parameters set field format provided by an exemplary embodiment of the present disclosure. The security association context parameters set field includes at least one of: an MLD role field, a peer MLD field, a "PTKSA/GTKSA/TPKSA" field, a "the number of PN counters" field, one or more TID fields, or one or more "the count of the PN counter" fields.

Here, the MLD role field occupies 1 bit, the peer MLD field occupies 0 or 48 bits, the "PTKSA/GTKSA/TPKSA" field occupies 2 bits, the "the number of PN counters" field occupies 5 bits, the TID field occupies 8 bits, the middle "the count of the PN counter" field occupies 0 or 48 bits, and the last "the count of the PN counter" field occupies 48 bits.

The MLD role field indicates the role of the MLD (in which the security association context described by the security association context parameters set field is located) within the security association context. For example, when the value of the MLD role field is 0, it indicates that the MLD in which the security association context described by the security association context parameters set field is located plays the role of a recipient MLD, that is, what is described is the replay context parameter set at the receiving end; and when the value of the MLD role field is 1, it indicates that the MLD in which the security association context described by the security association context parameters set field is located plays the role of an originator MLD, that is, what is described is the PN counter context parameter set at the transmitting end. Alternatively, when the value of the MLD role field is 1, it indicates that the MLD in which the security association context described by the security association context parameters set field is located plays the role of a recipient MLD; and when the value of the MLD role field is 0, it indicates that the MLD in which the security association context described by the security association context parameters set field is located plays the role of an originator MLD.

The "PTKSA/GTKSA/TPKSA" field indicates the type of security association corresponding to the replay context described by the replay context parameter set field, as illustrated in Table 4.

The block acknowledgement agreement context element format, the security association context parameters control field format, the security association context parameters set list field format, and the security association context parameters set field format are exemplary possible cases. Under different embodiments or different designs, it is not excluded that at least one of the following designs may vary: the positions of the above fields in the frame, the arrangement order between the above fields and other fields, the number of occupied bytes, the number of occupied bits, the element name, or the field name. This embodiment is not limited thereto.

In a possible design of the present embodiment, the second frame further includes third indication information for indicating that the context information includes information of a block acknowledgement agreement context and/or a security association context.

In a possible design of the present embodiment, the current and target access point multi-link devices belong to the same mobility domain MLD, at least one of the request frame or the response frame further includes: first indication information for indicating the mobility domain MLD.

In a possible design of the present embodiment, the transition is based on FT, at least one of the request frame or the response frame further includes: second indication information for indicating whether FT between the current and target access point multi-link devices affiliated with the same mobility domain MLD is supported or allowed. Exemplarily, the second indication information is referred to as the "FTinMobileDomainMLD" field, where when the value of this field is 1, it indicates that FT is supported or allowed between the current and target access point multi-link devices affiliated with the same mobility domain MLD; and when the value of this field is 0, it indicates that FT is not supported or allowed between the current and target access point multi-link devices affiliated with the same mobility domain MLD.

In a possible design of the present embodiment, the current and target access point multi-link devices include the current access point multi-link device and the target access point multi-link device. The request frame is transmitted to the current access point multi-link device, and then transmitted by the current access point multi-link device to the target access point multi-link device. The response frame is transmitted by the target access point multi-link device to the current access point multi-link device, and then fed back by the current access point multi-link device.

In a possible design of the present embodiment, the transition is based on FT, the request frame is an FT confirm frame and the response frame is an FT Ack frame.

The non-access point multi-link device transmits the FT confirm frame to the target access point multi-link device through the current access point multi-link device, and then the target access point multi-link device transmits the FT Ack frame to the non-access point multi-link device through the current access point multi-link device. The FT confirm frame includes at least one of: non-access point multi-link device information, target access point multi-link device information, MDE, block acknowledgement agreement context element, security association context element, or basic multi-link element. The FT Ack frame includes at least one of: non-access point multi-link device information, target access point multi-link device information, MDE, timeout interval element, block acknowledgement agreement context element, security association context element, or basic multi-link element.

Here, the FT confirm frame and the FT Ack frame carry the block acknowledgement agreement context element and the security association context element, indicating relevant block acknowledgement agreement context (or state) information and security association context (or state) information.

In a possible design of the present embodiment, the current and target access point multi-link devices belong to the same mobility domain MLD, the transmission module 3010 is configured to: transmit an FT request frame; and receive an FT response frame.

When the non-access point multi-link device determines that it needs to transition from the current access point multi-link device to the target access point multi-link device in the mobility domain MLD scenario, the non-access point multi-link device transmits the FT request frame to the target access point multi-link device through the current access point multi-link device, and then the target access point multi-link device transmits the FT response frame to the non-access point multi-link device through the current access point multi-link device. The FT request frame includes at least one of: non-access point multi-link device information, target access point multi-link device information, MDE, or basic multi-link element. The FT response frame includes at least one of: non-access point multi-link device information, target access point multi-link device information, MDE, or basic multi-link element.

Here, the FT request frame and the FT response frame carry the MDE (the "FTinMobileDomainMLD" field, the mobility domain MLD information field), indicating that FT between the current and target access point multi-link devices affiliated with the same mobility domain MLD is supported or allowed.

In a possible design of the present embodiment, the transmission module 3010 is further configured to: transmit an association request frame; and receive an association response frame.

The non-access point multi-link device transmits the association request frame or the re-association request frame to the current access point multi-link device, and then the current access point multi-link device feeds back the association response frame or the re-association response frame to the non-access point multi-link device.

The association request frame or the re-association request frame transmitted by the non-access point multi-link device to the current access point multi-link device includes: mobility domain element (MDE), basic multi-link element.

The association response frame or the re-association response frame transmitted by the current access point multi-link device to the non-access point multi-link device includes: mobility domain element (MDE), basic multi-link element.

Here, the association request frame or the re-association request frame carries the MDE (the "FTinMobileDomainMLD" field, the mobility domain MLD information field), indicating that the non-access point multi-link device is to perform association with an access point multi-link device in the mobility domain MLD scenario (or the non-access point multi-link device is to be associated with the access point multi-link device affiliated with the mobility domain MLD), and indicating that FT between the current and target access point multi-link devices affiliated with the same mobility domain MLD is supported or allowed.

In a possible design of the present embodiment, the transition is based on FT, and the link reconfiguration is performed in a case where a first duration is less than or equal to a deadline time of the link reconfiguration.

Here, the first duration represents a duration between a transmission time of the FT request frame and a transmission time of the link reconfiguration request frame, and the first frame includes the link reconfiguration request frame.

In a possible design of the present embodiment, the transmission module 3010 is further configured to transmit fourth indication information, where the fourth indication information is used for indicating a deadline time or a timeout time of the link reconfiguration.

By way of example, the fourth indication information is referred to as a timeout interval element (TIE) for specifying a time interval and the timeout time.

In a possible design of the present embodiment, the fourth indication information performs indication using a start time and a timeout interval, or, the fourth instruction information performs indication using the deadline time.

In a possible design of the present embodiment, the start time is implicitly represented by a transmission time or a reception time of the fourth indication information. The timeout interval is explicitly indicated by the fourth indication information.

In the embodiments of the present disclosure, a timeout interval type value corresponding to the link reconfiguration deadline interval is added to the timeout interval type field of the timeout interval element, and is used to indicate that the timeout interval value field represents the link reconfiguration deadline interval. FIG. 22 is a schematic diagram of a timeout interval element format provided by an exemplary embodiment of the present disclosure. The timeout interval element format includes at least one of: an element ID field, a length field, a timeout interval type field, and a timeout interval value field.

Here, the element ID field occupies 1 byte, the length field occupies 1 byte, the timeout interval type field occupies 1 byte, and the timeout interval value field occupies 4 bytes.

The above-described timeout interval element format is an exemplary possible case. Under different embodiments or different designs, it is not excluded that at least one of the following designs may vary: the position of the timeout interval element in the frame, the arrangement order between the timeout interval element and other fields, the number of bytes occupied, or the element name. This embodiment is not limited thereto.

The timeout interval value field contains a 32-bit unsigned integer, where the link reconfiguration deadline interval may be set to 0, to indicate the absence of the deadline time. The definition of the timeout interval type field is illustrated in Table 5.

In the present embodiment, the transmission module 3010 may be split into multiple transmission modules, for example, a first transmission module, a second transmission module. The transmission module is configured to transmit the first frame, and the second transmission module is configured to receive the first frame; or, the first transmission module is configured to receive the first frame, and the second transmission module is configured to transmit the first frame. The present embodiment does not limit the functions of different transmission modules.

The present embodiment uses a single transmission module 3010 for illustrative purposes, and the number of transmission modules 3010 is not limited.

For the functions of the transmission module 3010, the reference may be made to the operation 2710 of the embodiment of FIG. 27.

FIG. 31 illustrates a schematic structural diagram of a non-access point multi-link device or an access point multi-link device 3100 provided by an exemplary embodiment of the present disclosure, including a processor 3101, a receiver 3102, a transmitter 3103, a memory 3104, and a bus 3105.

The processor 3101 includes one or more processing cores, and executes various functional applications and information processing by running software programs and modules. In some embodiments, the processor 3101 may be configured to implement the functions and operations of the processing module 2920 described above.

The receiver 3102 and the transmitter 3103 may be implemented as a communication component, which may be a communication chip and may be referred to as a transceiver. In some embodiments, the receiver 3102 may be configured to implement the functions and operations of the transmission module 2810, the transmission module 2910, and the transmission module 3010 described above, and the transmitter 3103 may be configured to implement the functions and operations of the transmission module 2810, the transmission module 2910, and the transmission module 3010 described above.

The memory 3104 is connected to the processor 3101 via a bus 3105.

The memory 3104 may be configured to store at least one instruction, and the processor 3101 is configured to execute the at least one instruction to implement the various operations in the method embodiments described above.

Further, the memory 3104 may be implemented by any type of volatile or non-volatile storage device or a combination thereof. The volatile or non-volatile storage device includes, but not limited to, magnetic or optical disks, electrically-erasable programmable read only memory (EEPROM), erasable programmable read only memory (EPROM), static random access memory (SRAM), read-only memory (ROM), magnetic memory, flash memory, and/or programmable read-only memory (PROM).

In some embodiments, the receiver 3102 independently receives signals/data, or the processor 3101 controls the receiver 3102 to receive signals/data, or the processor 3101 requests the receiver 3102 to receive signals/data, or the processor 3101 cooperates with the receiver 3102 to receive signals/data.

In some embodiments, the transmitter 3103 independently transmits signals/data, or the processor 3101 controls the transmitter 3103 to transmit signals/data, or the processor 3101 requests the transmitter 3103 to transmit signals/data, or the processor 3101 cooperates with the transmitter 3103 to transmit signals/data.

In an exemplary embodiment, there is also provided a computer-readable storage medium having stored thereon at least one program that, when loaded and executed by a processor, implements the transition methods provided by the method embodiments described above.

In an exemplary embodiment, there is also provided a computer program product or a computer program that, when run on a processor, causes the non-access point multi-link device or the access point multi-link device 3100 to perform the transition methods provided by the method embodiments described above.

One of ordinary skill in the art will understand that all or part of the operations for implementing the above embodiments may be done by hardware, or may be done by instructing related hardware by a program, where the program may be stored in a computer-readable storage medium. The above-mentioned storage medium may be a read-only memory, a magnetic disk or an optical disk, or the like.

The above are only alternative embodiments of the present disclosure, and are not intended to limit the present disclosure. Any modification, equivalent substitution, improvement, and the like made within the spirit and principle of the present disclosure should be included within the scope of protection of the present disclosure.

## Claims

1. A transition method, performed by a non-access point multi-link device (non-AP MLD), the method comprising:
transmitting and/or receiving at least one first frame, the at least one first frame being used for enabling a transition between two access point multi-link devices (AP MLDs) at different locations based on link reconfiguration.

2. The method according to claim 1, wherein the two AP MLDs belong to the same mobility domain MLD, or the two AP MLDs belong to the same mobility domain.

3. The method according to claim 1 or 2, wherein the two AP MLDs belong to the same mobility domain MLD, and the mobility domain MLD is used for at least one of:
providing connection services between the non-AP MLD or the two AP MLDs and a distribution system (DS);
maintaining data continuity for the non-AP MLD during the transition between the two AP MLDs in a roaming process;
authentication and/or association or reassociation of the non-AP MLD;
security association of the non-AP MLD;
distribution of all or part of security association information of the non-AP MLD;
synchronization of all or part of state and/or buffer information of upper-layers of upper medium access control (MAC) sublayers (Upper-UMAC) of the two AP MLDs;
managing distribution of authentication information of a link of the non-AP MLD;
managing AP MLD-level association or reassociation between the non-AP MLD and the two AP MLDs;
for a target AP MLD of the two AP MLDs that establishes a multi-link with the non-AP MLD, selecting a MAC corresponding to the target AP MLD for data transmission;
synchronization of first data between the two AP MLDs, the first data being used for maintaining data communication between the non-AP MLD and the two AP MLDs or the DS; or
exchanging or indicating MLD-level information through MAC sublayers of the two AP MLDs.

4. The method according to any one of claims 1 to 3, wherein transmitting and/or receiving the at least one first frame comprises:
transmitting a link reconfiguration request frame, the link reconfiguration request frame being used for indicating that the non-AP MLD requests link reconfiguration with the two AP MLDs to perform the transition; and
receiving a link reconfiguration response frame, the link reconfiguration response frame being used for providing feedback to the non-AP MLD regarding the link reconfiguration with the two AP MLDs.

5. The method according to claim 4, wherein the two AP MLDs comprise a current AP MLD and a target AP MLD; and
the link reconfiguration request frame comprises:
a first element corresponding to the current AP MLD, for deleting at least one link with the current AP MLD; and
a second element corresponding to the target AP MLD, for establishing at least one link with the target AP MLD.

6. The method according to claim 5, wherein,
the first element comprises a first reconfiguration multi-link element for describing reconfiguration multi-link information between the non-AP MLD and the current AP MLD; and
the second element comprises a second reconfiguration multi-link element for describing reconfiguration multi-link information between the non-AP MLD and the target AP MLD.

7. The method according to claim 5, wherein the link reconfiguration request frame further comprises:
a first traffic identifier to link mapping (TID-to-Link mapping) element, for TID-to-Link mapping on the link established with the target AP MLD.

8. The method according to claim 4, wherein the two AP MLDs comprise a current AP MLD and a target AP MLD; and
the link reconfiguration response frame comprises:
a third element corresponding to the current AP MLD, for indicating a link reconfiguration status corresponding to the current AP MLD; and
a fourth element corresponding to the target AP MLD, for indicating a link reconfiguration status corresponding to the target AP MLD.

9. The method according to claim 8, wherein,
the third element comprises at least one of: a reconfiguration status list for the current AP MLD, comprising at least one reconfiguration status tuple; or a number of reconfiguration status tuples for the current AP MLD; and
the fourth element comprises at least one of: a reconfiguration status list for the target AP MLD, comprising at least one reconfiguration status element; or a number of reconfiguration status tuples for the target AP MLD;
wherein the reconfiguration status element is used for indicating a reconfiguration status of one link.

10. The method according to any one of claims 5 to 9, wherein the two AP MLDs belong to the same mobility domain MLD, or the two AP MLDs belong to the same mobility domain, and the method further comprises:
transmitting and/or receiving first indication information, the first indication information being used for indicating the mobility domain MLD.

11. The method according to claim 10, wherein the first indication information is carried in at least one of:
a link reconfiguration request frame;
a link reconfiguration response frame;
a request frame;
a response frame;
a fast basic service set (BSS) transition (FT) request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the two AP MLDs to maintain data connectivity during the transition, and the response frame is used for indicating a result of the replication or migration of the context information between the two AP MLDs to the non-AP MLD.

12. The method according to claim 10 or 11, wherein the first indication information comprises at least one of:
a mobility domain MLD identifier; or
a mobility domain MLD media access control (MAC) address.

13. The method according to any one of claims 5 to 9, wherein the transition is based on fast basic service set (BSS) transition (FT), and the method further comprises:
transmitting and/or receiving second indication information, the second indication information being used for indicating whether FT between the two AP MLDs affiliated with the same mobility domain MLD is supported or allowed.

14. The method according to claim 13, wherein the FT between the two AP MLDs affiliated with the same mobility domain MLD is used for maintaining data connectivity during the transition.

15. The method according to claim 13, wherein the second indication information is carried in at least one of:
a link reconfiguration request frame;
a link reconfiguration response frame;
a request frame;
a response frame;
an FT request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the two AP MLDs to maintain data connectivity during the transition, and the response frame is used for indicating a result of the replication or migration of the context information between the two AP MLDs to the non-AP MLD.

16. The method according to claim 13, wherein the link reconfiguration response frame comprises:
a status code, for indicating a status code of the link reconfiguration in a mobility domain MLD scenario.

17. The method according to claim 16, wherein when the status code has a first value, the status code is used for indicating that mobility domain link reconfiguration is denied.

18. The method according to claim 8, wherein the link reconfiguration response frame comprises:
group key data, for indicating a group key for a corresponding link successfully added to the target AP MLD.

19. The method according to claim 8, wherein the link reconfiguration response frame comprises:
a basic multi-link element, for providing per station (Per-STA) profiles for one or more affiliated APs of the target AP MLD.

20. The method according to claim 8, wherein the link reconfiguration response frame comprises:
a second traffic identifier to link mapping (TID-to-Link mapping) element, for responding to TID-to-Link mapping on a link established with the target AP MLD.

21. The method according to any one of claims 4 to 20, wherein the two AP MLDs comprise a current AP MLD and a target AP MLD, and the link reconfiguration request frame is transmitted to the current AP MLD, and then transmitted by the current AP MLD to the target AP MLD.

22. The method according to any one of claims 4 to 20, wherein the two AP MLDs comprise a current AP MLD and a target AP MLD, and the link reconfiguration response frame is transmitted by the target AP MLD to the current AP MLD, and then fed back by the current AP MLD.

23. The method according to any one of claims 1 to 22, further comprising:
transmitting and/or receiving at least one second frame, the second frame being used for synchronizing context information related to the non-AP MLD between the two AP MLDs, the context information comprising at least one of state information or buffer information.

24. The method according to claim 23, wherein transmitting and/or receiving the at least one second frame comprises:
transmitting a request frame, the request frame being used for indicating that the non-AP MLD requests synchronization of the context information related to the non-AP MLD between the two AP MLDs; and
receiving a response frame, the response frame being used for providing feedback to the non-AP MLD regarding the synchronization of the context information related to the non-AP MLD between the two AP MLDs.

25. The method according to claim 24, wherein the context information comprises at least one of:
first context information, related to a block acknowledgment agreement context; or
second context information, related to a security association context.

26. The method according to claim 25, wherein the first context information is carried in a block acknowledgment agreement context element.

27. The method according to claim 26, wherein the block acknowledgment agreement context element comprises a block acknowledgment agreement context parameter control field, the block acknowledgment agreement context parameter control field being used for indicating at least one of:
a device in which the block acknowledgment agreement context element is located;
whether the device in which the block acknowledgment agreement context element is located and the non-AP MLD for which the block acknowledgment agreement context is used are the same device;
the non-AP MLD for which the block acknowledgment agreement context is used, when the device in which the block acknowledgment agreement context element is located and the non-AP MLD for which the block acknowledgment agreement context is used are the same device; or
a number of block acknowledgment agreement context parameter sets comprised in the block acknowledgment agreement context element.

28. The method according to any one of claims 25 to 27, wherein the block acknowledgment agreement context element comprises a block acknowledgment agreement context parameter set list field, the block acknowledgment agreement context parameter set list field comprising at least one block acknowledgment agreement context parameter set subfield, one block acknowledgment agreement context parameter set subfield being used for indicating one block acknowledgment agreement context parameter set.

29. The method according to claim 28, wherein the block acknowledgment agreement context parameter set subfield is used for indicating at least one of:
a role of a device where the block acknowledgment agreement context is located within the block acknowledgment agreement context;
the non-AP MLD for which the block acknowledgment agreement context is used;
a block acknowledgment parameter set; or
a block acknowledgment timeout.

30. The method according to claim 29, wherein if the block acknowledgment agreement context parameter set subfield is used for indicating that the role of the device where the block acknowledgment agreement context is located within the block acknowledgment agreement context is an originator, the block acknowledgment agreement context parameter set subfield is further used for indicating at least one of:
a starting sequence number of a transmit window; or
a size of the transmit window.

31. The method according to claim 29, wherein if the block acknowledgment agreement context parameter set subfield is used for indicating that the role of the device where the block acknowledgment agreement context is located within the block acknowledgment agreement context is a recipient, the block acknowledgment agreement context parameter set subfield is further used for indicating at least one of:
a starting sequence number of a receive buffer;
a size of a receive window;
a starting sequence number of a record bitmap;
an ending sequence number of the record bitmap; or
a size of the record bitmap.

32. The method according to any one of claims 29 to 31, wherein the block acknowledgment parameter set comprises at least one of:
indication information indicating whether an aggregated media access control (MAC) service data unit (A-MSDU) is supported;
a block acknowledgment policy;
a traffic identifier (TID); or
a buffer size.

33. The method according to any one of claims 25 to 32, wherein the second context information is carried in a security association context element.

34. The method according to claim 33, wherein the security association context element comprises a security association context parameter control field, the security association context parameter control field being used for indicating at least one of:
a device in which the security association context element is located;
whether the device in which the security association context element is located and the non-AP MLD for which the security association context is used are the same device;
the non-AP MLD for which the security association context is used, when the device in which the security association context element is located and the non-AP MLD for which the security association context is used are the same device; or
a number of security association context parameter sets comprised in the security association context element.

35. The method according to claim 33 or 34, wherein the security association context element comprises a security association context parameter set list field, the security association context parameter set list field comprising at least one security association context parameter set subfield, one security association context parameter set subfield being used for indicating one security association context parameter set.

36. The method according to claim 35, wherein the security association context parameter set subfield is used for indicating at least one of:
a role of a device where the security association context is located within the security association context;
the non-AP MLD for which the security association context is used; or
a security association type of the security association context.

37. The method according to claim 36, wherein if the security association context parameter set subfield is used for indicating that the role of the device where the security association context is located within the security association context is an originator, the security association context parameter set subfield is further used for indicating at least one of:
a number of replay counters;
a traffic identifier (TID); or
a count of the replay counter for the TID.

38. The method according to claim 36, wherein if the security association context parameter set subfield is used for indicating that the role of the device where the security association context is located within the security association context is a recipient, the security association context parameter set subfield is further used for indicating at least one of:
a number of packet number counters;
a traffic identifier (TID); or
a count of the packet number counter for the TID.

39. The method according to any one of claims 23 to 38, wherein the second frame further comprises:
third indication information, the third indication information being used for indicating that the context information comprises information of a block acknowledgment agreement context and/or a security association context.

40. The method according to claim 24, wherein the two AP MLDs comprise a current AP MLD and a target AP MLD, wherein
the request frame is transmitted to the current AP MLD, and then transmitted by the current AP MLD to the target AP MLD; and
the response frame is transmitted by the target AP MLD to the current AP MLD, and then fed back by the current AP MLD.

41. The method according to claim 24, wherein the transition is based on fast basic service set (BSS) transition (FT);
the request frame is an FT confirm frame, and the response frame is an FT acknowledgement (Ack) frame.

42. The method according to any one of claims 1 to 41, wherein the two AP MLDs belong to the same mobility domain MLD, and the method further comprises:
transmitting a fast basic service set (BSS) transition (FT) request frame; and
receiving an FT response frame.

43. The method according to any one of claims 1 to 42, further comprising:
transmitting an association request frame; and
receiving an association response frame.

44. The method according to any one of claims 1 to 43, wherein the transition is based on fast basic service set (BSS) transition (FT), and
performing the link reconfiguration when a first duration is less than or equal to a deadline time of the link reconfiguration;
wherein the first duration represents a duration between a transmission time of an FT request frame and a transmission time of a link reconfiguration request frame, and the first frame comprises the link reconfiguration request frame.

45. The method according to any one of claims 1 to 44, further comprising:
transmitting fourth indication information, the fourth indication information being used for indicating a deadline time or a timeout time of the link reconfiguration.

46. The method according to claim 45, wherein,
the fourth indication information performs indication using a start time and a timeout interval, or,
the fourth indication information performs indication using the deadline time.

47. The method according to claim 46, wherein,
the start time is implicitly represented by a transmission time or a reception time of the fourth indication information; and
the timeout interval is explicitly indicated by the fourth indication information.

48. A transition method, performed by a current access point multi-link device (AP MLD), the method comprising:
transmitting and/or receiving at least one first frame, the at least one first frame being used for enabling a transition of a non-access point multi-link device (non-AP MLD) between the current AP MLD and a target AP MLD at different locations based on link reconfiguration.

49. The method according to claim 48, wherein the current AP MLD and the target AP MLD belong to the same mobility domain MLD, or the current AP MLD and the target AP MLD belong to the same mobility domain.

50. The method according to claim 48 or 49, wherein the current AP MLD and the target AP MLD belong to the same mobility domain MLD, and the mobility domain MLD is used for at least one of:
providing connection services between any one of the following and a distribution system (DS): the non-AP MLD, or, the current AP MLD and the target AP MLD;
maintaining data continuity for the non-AP MLD during the transition between the current AP MLD and the target AP MLD in a roaming process;
authentication and/or association or reassociation of the non-AP MLD;
security association of the non-AP MLD;
distribution of all or part of security association information of the non-AP MLD;
synchronization of all or part of state and/or buffer information of upper layers of upper medium access control (MAC) sublayers (Upper-UMAC) of the current AP MLD and the target AP MLD;
managing distribution of authentication information of a link of the non-AP MLD;
managing AP MLD-level association or reassociation between the non-AP MLD and both the current AP MLD and the target AP MLD;
for the target AP MLD, selecting a MAC corresponding to the target AP MLD for data transmission;
synchronization of first data between the current AP MLD and the target AP MLD, the first data being used for maintaining data communication between the non-AP MLD and any one of the following: the current AP MLD and the target AP MLD, or, the DS; or
exchanging or indicating MLD-level information through MAC sublayers of the current AP MLD and the target AP MLD.

51. The method according to any one of claims 48 to 50, wherein transmitting and/or receiving the at least one first frame comprises:
receiving a link reconfiguration request frame transmitted by the non-AP MLD, and transmitting the link reconfiguration request frame to the target AP MLD, the link reconfiguration request frame being used for indicating that the non-AP MLD requests link reconfiguration with the current AP MLD and the target AP MLD to perform the transition; and
receiving a link reconfiguration response frame transmitted by the target AP MLD, and transmitting the link reconfiguration response frame to the non-AP MLD, the link reconfiguration response frame being used for providing feedback to the non-AP MLD regarding the link reconfiguration with the current AP MLD and the target AP MLD.

52. The method according to claim 51, wherein the link reconfiguration request frame comprises:
a first element corresponding to the current AP MLD, for deleting at least one link between the non-AP MLD and the current AP MLD; and
a second element corresponding to the target AP MLD, for establishing at least one link between the non-AP MLD and the target AP MLD.

53. The method according to claim 52, wherein,
the first element comprises a first reconfiguration multi-link element, for describing reconfiguration multi-link information between the non-AP MLD and the current AP MLD; and
the second element comprises a second reconfiguration multi-link element, for describing reconfiguration multi-link information between the non-AP MLD and the target AP MLD.

54. The method according to claim 52, wherein the link reconfiguration request frame further comprises:
a first traffic identifier to link mapping (TID-to-Link mapping) element, for TID-to-Link mapping on the link established between the non-AP MLD and the target AP MLD.

55. The method according to claim 51, wherein the link reconfiguration response frame comprises:
a third element corresponding to the current AP MLD, for indicating a link reconfiguration status corresponding to the current AP MLD; and
a fourth element corresponding to the target AP MLD, for indicating a link reconfiguration status corresponding to the target AP MLD.

56. The method according to claim 55, wherein,
the third element comprises at least one of: a reconfiguration status list for the current AP MLD, comprising at least one reconfiguration status tuple; or a number of reconfiguration status tuples for the current AP MLD; and
the fourth element comprises at least one of: a reconfiguration status list for the target AP MLD, comprising at least one reconfiguration status element; or a number of reconfiguration status tuples for the target AP MLD;
wherein the reconfiguration status element is used for indicating a reconfiguration status of one link.

57. The method according to any one of claims 52 to 56, wherein the current AP MLD and the target AP MLD belong to the same mobility domain MLD, or the current AP MLD and the target AP MLD belong to the same mobility domain, and the method further comprises:
transmitting and/or receiving first indication information, the first indication information being used for indicating the mobility domain MLD.

58. The method according to claim 57, wherein the first indication information is carried in at least one of:
a link reconfiguration request frame;
a link reconfiguration response frame;
a request frame;
a response frame;
a fast basic service set (BSS) transition (FT) request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

59. The method according to claim 57 or 58, wherein the first indication information comprises at least one of:
a mobility domain MLD identifier; or
a mobility domain MLD media access control (MAC) address.

60. The method according to any one of claims 52 to 56, wherein the transition is based on fast basic service set (BSS) transition (FT), and the method further comprises:
transmitting and/or receiving second indication information, the second indication information being used for indicating whether FT between the current AP MLD and the target AP MLD affiliated with the same mobility domain MLD is supported or allowed.

61. The method according to claim 60, wherein the FT between the current AP MLD and the target AP MLD affiliated with the same mobility domain MLD is used for maintaining data connectivity during the transition.

62. The method according to claim 60, wherein the second indication information is carried in at least one of:
a link reconfiguration request frame;
a link reconfiguration response frame;
a request frame;
a response frame;
an FT request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

63. The method according to claim 60, wherein the link reconfiguration response frame comprises:
a status code, for indicating a status code of the link reconfiguration in a mobility domain MLD scenario.

64. The method according to claim 63, wherein when the status code has a first value, the status code is used for indicating that mobility domain link reconfiguration is denied.

65. The method according to claim 55, wherein the link reconfiguration response frame comprises:
group key data, for indicating a group key for a corresponding link successfully added to the target AP MLD.

66. The method according to claim 55, wherein the link reconfiguration response frame comprises:
a basic multi-link element, for providing per station (Per-STA) profiles for one or more affiliated APs of the target AP MLD.

67. The method according to claim 55, wherein the link reconfiguration response frame comprises:
a second traffic identifier to link mapping (TID-to-Link mapping) element, for responding to TID-to-Link mapping on a link established between the non-AP MLD and the target AP MLD.

68. The method according to any one of claims 51 to 67, wherein the link reconfiguration request frame is transmitted by the non-AP MLD to the current AP MLD, and then transmitted by the current AP MLD to the target AP MLD.

69. The method according to any one of claims 51 to 67, wherein the link reconfiguration response frame is transmitted by the target AP MLD to the current AP MLD, and then transmitted by the current AP MLD to the non-AP MLD.

70. The method according to any one of claims 48 to 69, further comprising:
transmitting and/or receiving at least one second frame, the second frame being used for synchronizing context information related to the non-AP MLD between the current AP MLD and the target AP MLD, the context information comprising at least one of state information or buffer information.

71. The method according to claim 70, wherein transmitting and/or receiving the at least one second frame comprises:
receiving a request frame transmitted by the non-AP MLD, and transmitting the request frame to the target AP MLD, the request frame being used for indicating that the non-AP MLD requests synchronization of the context information related to the non-AP MLD between the current AP MLD and the target AP MLD; and
receiving a response frame transmitted by the target AP MLD, and transmitting the response frame to the non-AP MLD, the response frame being used for providing feedback to the non-AP MLD regarding the synchronization of the context information related to the non-AP MLD between the current AP MLD and the target AP MLD.

72. The method according to claim 71, wherein the context information comprises at least one of:
first context information, related to a block acknowledgment agreement context; or
second context information, related to a security association context.

73. The method according to claim 72, wherein the first context information is carried in a block acknowledgment agreement context element.

74. The method according to claim 73, wherein the block acknowledgment agreement context element comprises a block acknowledgment agreement context parameter control field, the block acknowledgment agreement context parameter control field being used for indicating at least one of:
a device in which the block acknowledgment agreement context element is located;
whether the device in which the block acknowledgment agreement context element is located and the non-AP MLD for which the block acknowledgment agreement context is used are the same device;
the non-AP MLD for which the block acknowledgment agreement context is used, when the device in which the block acknowledgment agreement context element is located and the non-AP MLD for which the block acknowledgment agreement context is used are the same device; or
a number of block acknowledgment agreement context parameter sets comprised in the block acknowledgment agreement context element.

75. The method according to any one of claims 72 to 74, wherein the block acknowledgment agreement context element comprises a block acknowledgment agreement context parameter set list field, the block acknowledgment agreement context parameter set list field comprising at least one block acknowledgment agreement context parameter set subfield, one block acknowledgment agreement context parameter set subfield being used for indicating one block acknowledgment agreement context parameter set.

76. The method according to claim 75, wherein the block acknowledgment agreement context parameter set subfield is used for indicating at least one of:
a role of a device where the block acknowledgment agreement context is located within the block acknowledgment agreement context;
the non-AP MLD for which the block acknowledgment agreement context is used;
a block acknowledgment parameter set; or
a block acknowledgment timeout.

77. The method according to claim 76, wherein if the block acknowledgment agreement context parameter set subfield is used for indicating that the role of the device where the block acknowledgment agreement context is located within the block acknowledgment agreement context is an originator, the block acknowledgment agreement context parameter set subfield is further used for indicating at least one of:
a starting sequence number of a transmit window; or
a size of the transmit window.

78. The method according to claim 76, wherein if the block acknowledgment agreement context parameter set subfield is used for indicating that the role of the device where the block acknowledgment agreement context is located within the block acknowledgment agreement context is a recipient, the block acknowledgment agreement context parameter set subfield is further used for indicating at least one of:
a starting sequence number of a receive buffer;
a size of a receive window;
a starting sequence number of a record bitmap;
an ending sequence number of the record bitmap; or
a size of the record bitmap.

79. The method according to any one of claims 76 to 78, wherein the block acknowledgment parameter set comprises at least one of:
indication information indicating whether an aggregated media access control (MAC) service data unit (A-MSDU) is supported;
a block acknowledgment policy;
a traffic identifier (TID); or
a buffer size.

80. The method according to any one of claims 72 to 79, wherein the second context information is carried in a security association context element.

81. The method according to claim 80, wherein the security association context element comprises a security association context parameter control field, the security association context parameter control field being used for indicating at least one of:
a device in which the security association context element is located;
whether the device in which the security association context element is located and the non-AP MLD for which the security association context is used are the same device;
the non-AP MLD for which the security association context is used, when the device in which the security association context element is located and the non-AP MLD for which the security association context is used are the same device; or
a number of security association context parameter sets comprised in the security association context element.

82. The method according to claim 80 or 81, wherein the security association context element comprises a security association context parameter set list field, the security association context parameter set list field comprising at least one security association context parameter set subfield, one security association context parameter set subfield being used for indicating one security association context parameter set.

83. The method according to claim 82, wherein the security association context parameter set subfield is used for indicating at least one of:
a role of a device where the security association context is located within the security association context;
the non-AP MLD for which the security association context is used; or
a security association type of the security association context.

84. The method according to claim 83, wherein if the security association context parameter set subfield is used for indicating that the role of the device where the security association context is located within the security association context is an originator, the security association context parameter set subfield is further used for indicating at least one of:
a number of replay counters;
a traffic identifier (TID); or
a count of the replay counter for the TID.

85. The method according to claim 83, wherein if the security association context parameter set subfield is used for indicating that the role of the device where the security association context is located within the security association context is a recipient, the security association context parameter set subfield is further used for indicating at least one of:
a number of packet number counters;
a traffic identifier (TID); or
a count of the packet number counter for the TID.

86. The method according to any one of claims 70 to 85, wherein the second frame further comprises:
third indication information, the third indication information being used for indicating that the context information comprises information of a block acknowledgment agreement context and/or a security association context.

87. The method according to claim 71, wherein,
the request frame is transmitted by the non-AP MLD to the current AP MLD, and then transmitted by the current AP MLD to the target AP MLD; and
the response frame is transmitted by the target AP MLD to the current AP MLD, and then transmitted by the current AP MLD to the non-AP MLD.

88. The method according to claim 71, wherein the transition is based on fast basic service set (BSS) transition (FT);
the request frame is an FT confirm frame, and the response frame is an FT acknowledgement (Ack) frame.

89. The method according to any one of claims 48 to 88, wherein the current AP MLD and the target AP MLD belong to the same mobility domain MLD, the method further comprises:
receiving a fast basic service set (BSS) transition (FT) request frame transmitted by the non-AP MLD, and transmitting the FT request frame to the target AP MLD; and
receiving an FT response frame transmitted by the target AP MLD, and transmitting the FT response frame to the non-AP MLD.

90. The method according to any one of claims 48 to 89, further comprising:
receiving an association request frame transmitted by the non-AP MLD, and transmitting the association request frame to the target AP MLD; and
receiving an association response frame transmitted by the target AP MLD, and transmitting the association response frame to the non-AP MLD.

91. The method according to any one of claims 48 to 90, wherein the transition is based on fast basic service set (BSS) transition (FT), and
the link reconfiguration is performed by the non-AP MLD when a first duration is less than or equal to a deadline time of the link reconfiguration;
wherein the first duration represents a duration between a transmission time of an FT request frame and a transmission time of a link reconfiguration request frame, and the first frame comprises the link reconfiguration request frame.

92. The method according to any one of claims 48 to 91, further comprising:
receiving fourth indication information, the fourth indication information being used for indicating a deadline time or a timeout time of the link reconfiguration.

93. The method according to claim 92, wherein,
the fourth indication information performs indication using a start time and a timeout interval, or,
the fourth indication information performs indication using the deadline time.

94. The method according to claim 93, wherein,
the start time is implicitly represented by a transmission time or a reception time of the fourth indication information; and
the timeout interval is explicitly indicated by the fourth indication information.

95. The method according to any one of claims 48 to 94, further comprising:
accepting, by the current AP MLD, deletion of all links when the target AP MLD accepts establishment of at least one link;
rejecting, by the current AP MLD, deletion of at least one link when the target AP MLD rejects establishment of all links.

96. The method according to claim 95, wherein accepting, by the current AP MLD, the deletion of the all links when the target AP MLD accepts the establishment of the at least one link comprises:
accepting, by the current AP MLD, deletion of all links other than links required to be retained, when the target AP MLD accepts the establishment of the at least one link.

97. A transition method, performed by a target access point multi-link device (AP MLD), the method comprising:
transmitting and/or receiving at least one first frame, the at least one first frame being used for enable a transition of a non-access point multi-link device (non-AP MLD) between a current AP MLD and the target AP MLD at different locations based on link reconfiguration.

98. The method according to claim 97, wherein the current AP MLD and the target AP MLD belong to the same mobility domain MLD, or the current AP MLD and the target AP MLD belong to the same mobility domain.

99. The method according to claim 97 or 98, wherein the current AP MLD and the target AP MLD belong to the same mobility domain MLD, and the mobility domain MLD is used for at least one of:
providing connection services between any one of the following and a distribution system (DS): the non-AP MLD, or, the current AP MLD and the target AP MLD;
maintaining data continuity for the non-AP MLD during the transition between the current AP MLD and the target AP MLD in a roaming process;
authentication and/or association or reassociation of the non-AP MLD;
security association of the non-AP MLD;
distribution of all or part of security association information of the non-AP MLD;
synchronization of all or part of state and/or buffer information of upper layers of upper medium access control (MAC) sublayers (Upper-UMAC) of the current AP MLD and the target AP MLD;
managing distribution of authentication information of a link of the non-AP MLD;
managing AP MLD-level association or reassociation between the non-AP MLD and both the current AP MLD and the target AP MLD;
for the target AP MLD, selecting a MAC corresponding to the target AP MLD for data transmission;
synchronization of first data between the current AP MLD and the target AP MLD, the first data being used for maintaining data communication between the non-AP MLD and any one of the following: the current AP MLD and the target AP MLD, or, the DS; or
exchanging or indicating MLD-level information through MAC sublayers of the current AP MLD and the target AP MLD.

100. The method according to any one of claims 97 to 99, wherein transmitting and/or receiving the at least one first frame comprises:
receiving a link reconfiguration request frame transmitted by the current AP MLD, the link reconfiguration request frame being used for indicating that the non-AP MLD requests link reconfiguration with the current AP MLD and the target AP MLD to perform the transition; and
transmitting a link reconfiguration response frame to the current AP MLD, the link reconfiguration response frame being used for providing feedback to the non-AP MLD regarding the link reconfiguration with the current AP MLD and the target AP MLD.

101. The method according to claim 100, wherein the link reconfiguration request frame comprises:
a first element corresponding to the current AP MLD, for deleting at least one link between the non-AP MLD and the current AP MLD; and
a second element corresponding to the target AP MLD, for establishing at least one link between the non-AP MLD and the target AP MLD.

102. The method according to claim 101, wherein,
the first element comprises a first reconfiguration multi-link element, for describing reconfiguration multi-link information between the non-AP MLD and the current AP MLD; and
the second element comprises a second reconfiguration multi-link element, for describing reconfiguration multi-link information between the non-AP MLD and the target AP MLD.

103. The method according to claim 101, wherein the link reconfiguration request frame further comprises:
a first traffic identifier to link mapping (TID-to-Link mapping) element, for TID-to-link mapping on the link established between the non-AP MLD and the target AP MLD.

104. The method according to claim 100, wherein the link reconfiguration response frame comprises:
a third element corresponding to the current AP MLD, for indicating a link reconfiguration status corresponding to the current AP MLD; and
a fourth element corresponding to the target AP MLD, for indicating a link reconfiguration status corresponding to the target AP MLD.

105. The method according to claim 104, wherein,
the third element comprises at least one of: a reconfiguration status list for the current AP MLD, comprising at least one reconfiguration status tuple; or a number of reconfiguration status tuples for the current AP MLD; and
the fourth element comprises at least one of: a reconfiguration status list for the target AP MLD, comprising at least one reconfiguration status element; or a number of reconfiguration status tuples for the target AP MLD;
wherein the reconfiguration status element is used for indicating a reconfiguration status of one link.

106. The method according to any one of claims 101 to 105, wherein the current AP MLD and the target AP MLD belong to the same mobility domain MLD, or the current AP MLD and the target AP MLD belong to the same mobility domain, and the method further comprising:
transmitting and/or receiving first indication information, the first indication information being used for indicating the mobility domain MLD.

107. The method according to claim 106, wherein the first indication information is carried in at least one of:
a link reconfiguration request frame;
a link reconfiguration response frame;
a request frame;
a response frame;
a fast basic service set (BSS) transition (FT) request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

108. The method according to claim 106 or 107, wherein the first indication information comprises at least one of:
a mobility domain MLD identifier; or
a mobility domain MLD media access control (MAC) address.

109. The method according to any one of claims 101 to 105, wherein the handover is based on fast basic service set (BSS) transition (FT), and the method further comprises:
transmitting and/or receiving second indication information, the second indication information being used for indicating whether FT between the current AP MLD and the target AP MLD affiliated with the same mobility domain MLD is supported or allowed.

110. The method according to claim 109, wherein the FT between the current AP MLD and the target AP MLD affiliated with the same mobility domain MLD is used for maintaining data connectivity during the transition.

111. The method according to claim 109, wherein the second indication information is carried in at least one of:
a link reconfiguration request frame;
a link reconfiguration response frame;
a request frame;
a response frame;
an FT request frame;
an FT response frame;
an FT confirm frame;
an FT acknowledgement (Ack) frame;
an association request frame;
an association response frame;
a reassociation request frame; or
a reassociation response frame;
wherein the request frame is used for indicating that the non-AP MLD requests a replication or migration of context information between the current AP MLD and the target AP MLD to maintain data connectivity during the transition, and the response frame is used for indicating a result of the replication or migration of the context information between the current AP MLD and the target AP MLD to the non-AP MLD.

112. The method according to claim 109, wherein the link reconfiguration response frame comprises:
a status code, for indicating a status code of the link reconfiguration in a mobility domain MLD scenario.

113. The method according to claim 112, wherein when the status code has a first value, the status code is used for indicating that mobility domain link reconfiguration is denied.

114. The method according to claim 104, wherein the link reconfiguration response frame comprises:
group key data, for indicating a group key for a corresponding link successfully added to the target AP MLD.

115. The method according to claim 104, wherein the link reconfiguration response frame comprises:
a basic multi-link element, used for providing per station (Per-STA) profiles for one or more affiliated APs of the target AP MLD.

116. The method according to claim 104, wherein the link reconfiguration response frame comprises:
a second traffic identifier to link mapping (TID-to-Link mapping) element, for responding to TID-to link-mapping on a link established between the non-AP MLD and the target AP MLD.

117. The method according to any one of claims 100 to 116, wherein the link reconfiguration request frame is transmitted by the non-AP MLD to the current AP MLD, and then transmitted by the current AP MLD to the target AP MLD.

118. The method according to any one of claims 100 to 116, wherein the link reconfiguration response frame is transmitted by the target AP MLD to the current AP MLD, and then transmitted by the current AP MLD to the non-AP MLD.

119. The method according to any one of claims 97 to 118, further comprising:
transmitting and/or receiving at least one second frame, the second frame being used for synchronizing context information related to the non-AP MLD between the current AP MLD and the target AP MLD, the context information comprising at least one of state information or buffer information.

120. The method according to claim 119, wherein transmitting and/or receiving the at least one second frame comprises:
receiving a request frame transmitted by the current AP MLD, the request frame being used for indicating that the non-AP MLD requests synchronization of the context information related to the non-AP MLD between the current AP MLD and the target AP MLD; and
transmitting a response frame to the current AP MLD, the response frame being used for providing feedback to the non-AP MLD regarding the synchronization of the context information related to the non-AP MLD between the current AP MLD and the target AP MLD.

121. The method according to claim 120, wherein the context information comprises at least one of:
first context information, related to a block acknowledgment agreement context; or
second context information, related to a security association context.

122. The method according to claim 121, wherein the first context information is carried in a block acknowledgment agreement context element.

123. The method according to claim 122, wherein the block acknowledgment agreement context element comprises a block acknowledgment agreement context parameter control field, the block acknowledgment agreement context parameter control field being used for indicating at least one of:
a device in which the block acknowledgment agreement context element is located;
whether the device in which the block acknowledgment agreement context element is located and the non-AP MLD for which the block acknowledgment agreement context is used are the same device;
the non-AP MLD for which the block acknowledgment agreement context is used, when the device in which the block acknowledgment agreement context element is located and the non-AP MLD for which the block acknowledgment agreement context is used are the same device; or
a number of block acknowledgment agreement context parameter sets comprised in the block acknowledgment agreement context element.

124. The method according to any one of claims 121 to 123, wherein the block acknowledgment agreement context element comprises a block acknowledgment agreement context parameter set list field, the block acknowledgment agreement context parameter set list field comprising at least one block acknowledgment agreement context parameter set subfield, one block acknowledgment agreement context parameter set subfield being used for indicating one block acknowledgment agreement context parameter set.

125. The method according to claim 124, wherein the block acknowledgment agreement context parameter set subfield is used for indicating at least one of:
a role of a device where the block acknowledgment agreement context is located within the block acknowledgment agreement context;
the non-AP MLD for which the block acknowledgment agreement context is used;
a block acknowledgment parameter set; or
a block acknowledgment timeout.

126. The method according to claim 125, wherein if the block acknowledgment agreement context parameter set subfield is used for indicating that the role of the device where the block acknowledgment agreement context is located within the block acknowledgment agreement context is an originator, the block acknowledgment agreement context parameter set subfield is further used for indicating at least one of:
a starting sequence number of a transmit window; or
a size of the transmit window.

127. The method according to claim 125, wherein if the block acknowledgment agreement context parameter set subfield is used for indicating that the role of the device where the block acknowledgment agreement context is located within the block acknowledgment agreement context is a recipient, the block acknowledgment agreement context parameter set subfield is further used for indicating at least one of:
a starting sequence number of a receive buffer;
a size of a receive window;
a starting sequence number of a record bitmap;
an ending sequence number of the record bitmap; or
a size of the record bitmap.

128. The method according to any one of claims 125 to 127, wherein the block acknowledgment parameter set comprises at least one of:
indication information indicating whether an aggregated media access control (MAC) service data unit (A-MSDU) is supported;
a block acknowledgment policy;
a traffic identifier (TID); or
a buffer size.

129. The method according to any one of claims 121 to 128, wherein the second context information is carried in a security association context element.

130. The method according to claim 129, wherein the security association context element comprises a security association context parameter control field, the security association context parameter control field being used for indicating at least one of:
a device in which the security association context element is located;
whether the device in which the security association context element is located and the non-AP MLD for which the security association context is used are the same device;
the non-AP MLD for which the security association context is used, when the device in which the security association context element is located and the non-AP MLD for which the security association context is used are the same device; or
a number of security association context parameter sets comprised in the security association context element.

131. The method according to claim 129 or 130, wherein the security association context element comprises a security association context parameter set list field, the security association context parameter set list field comprising at least one security association context parameter set subfield, one security association context parameter set subfield being used for indicating one security association context parameter set.

132. The method according to claim 131, wherein the security association context parameter set subfield is used for indicating at least one of:
a role of a device where the security association context is located within the security association context;
the non-AP MLD for which the security association context is used; or
a security association type of the security association context.

133. The method according to claim 132, wherein if the security association context parameter set subfield is used for indicating that the role of the device where the security association context is located within the security association context is an originator, the security association context parameter set subfield is further used for indicating at least one of:
a number of replay counters;
a traffic identifier (TID); or
a count of the replay counter for the TID.

134. The method according to claim 133, wherein if the security association context parameter set subfield is used for indicating that the role of the device where the security association context is located within the security association context is a recipient, the security association context parameter set subfield is further used for indicating at least one of:
a number of packet number counters;
a traffic identifier (TID); or
a count of the packet number counter for the TID.

135. The method according to any one of claims 119 to 134, wherein the second frame further comprises:
third indication information, the third indication information being used for indicating that the context information comprises information of a block acknowledgment agreement context and/or a security association context.

136. The method according to claim 120, wherein,
the request frame is transmitted by the non-AP MLD to the current AP MLD, and then transmitted by the current AP MLD to the target AP MLD; and
the response frame is transmitted by the target AP MLD to the current AP MLD, and then transmitted by the current AP MLD to the non-AP MLD.

137. The method according to claim 120, wherein the transition is based on fast basic service set (BSS) transition (FT);
the request frame is an FT confirm frame, and the response frame is an FT acknowledgement (Ack) frame.

138. The method according to any one of claims 97 to 137, wherein the current AP MLD and the target AP MLD belong to the same mobility domain MLD, and the method further comprises:
receiving a fast basic service set (BSS) transition (FT) request frame transmitted by the current AP MLD; and
transmitting an FT response frame to the current AP MLD.

139. The method according to any one of claims 97 to 138, further comprising:
receiving an association request frame transmitted by the current AP MLD; and
transmitting an association response frame to the current AP MLD.

140. The method according to any one of claims 97 to 139, wherein the transition is based on fast basic service set (BSS) transition (FT), and
the link reconfiguration is performed by the non-AP MLD when a first duration is less than or equal to a deadline time of the link reconfiguration;
wherein the first duration represents a duration between a transmission time of an FT request frame and a transmission time of a link reconfiguration request frame, and the first frame comprises the link reconfiguration request frame.

141. The method according to any one of claims 97 to 140, further comprising:
receiving fourth indication information, the fourth indication information being used for indicating a deadline time or a timeout time of the link reconfiguration.

142. The method according to claim 141, wherein,
the fourth indication information performs indication using a start time and a timeout interval, or,
the fourth indication information performs indication using the deadline time.

143. The method according to claim 142, wherein,
the start time is implicitly represented by a transmission time or a reception time of the fourth indication information; and
the timeout interval is explicitly indicated by the fourth indication information.

144. A non-access point multi-link device, comprising:
a transmission module, configured to transmit and/or receive at least one first frame, the at least one first frame being used for enabling a transition between two access point multi-link devices at different locations based on link reconfiguration.

145. A current access point multi-link device, comprising:
a transmission module, configured to transmit and/or receive at least one first frame, the at least one first frame being used for enabling a transition of a non-access point multi-link device between the current access point multi-link device and a target access point multi-link device at different locations based on link reconfiguration.

146. A target access point multi-link device, comprising:
a transmission module, configured to transmit and/or receive at least one first frame, the at least one first frame being used for enabling a transition of a non-access point multi-link device between a current access point multi-link device and the target access point multi-link device at different locations based on link reconfiguration.

147. A non-access point multi-link device, comprising:
a processor;
a transceiver coupled to the processor; and
a memory for storing instructions executable by the processor;
wherein the processor is configured to load and execute the executable instructions to perform the transition method according to any one of claims 1 to 47.

148. A current access point multi-link device, comprising:
a processor;
a transceiver coupled to the processor; and
a memory for storing instructions executable by the processor;
wherein the processor is configured to load and execute the executable instructions to perform the transition method according to any one of claims 48 to 96.

149. A target access point multi-link device, comprising:
a processor;
a transceiver coupled to the processor; and
a memory for storing instructions executable by the processor;
wherein the processor is configured to load and execute the executable instructions to perform the transition method according to any one of claims 97 to 143.

150. A computer-readable storage medium, for storing at least one program that, when loaded and executed by a processor, performs the transition method according to any one of claims 1 to 143.

151. A computer program product, comprising computer instructions stored in a computer-readable storage medium that, when obtained from the computer-readable storage medium and executed by a processor, perform the transition method according to any one of claims 1 to 143.
